(19) Europäisches Patentamt
European Patent Office
Office européen des brevets

(11) EP 0 921 386 B1

(12) EUROPÄISCHE PATENTSCHRIFT

(45) Veröffentlichungstag und Bekanntmachung des Hinweises auf die Patenterteilung:
**07.08.2002 Patentblatt 2002/32**

(51) Int Cl.[7]: **G01M 17/04**

(21) Anmeldenummer: **98122793.7**

(22) Anmeldetag: **01.12.1998**

(54) **Verfahren und Vorrichtung zum Prüfen von eingebauten Stossdämpfern**

Method and device for testing of mounted shock absorbers

Méthode et dispositif pour tester des amortisseurs montés

(84) Benannte Vertragsstaaten:
**DE FR GB IT**

(30) Priorität: **08.12.1997 DE 19754853**

(43) Veröffentlichungstag der Anmeldung:
**09.06.1999 Patentblatt 1999/23**

(73) Patentinhaber: **Beissbarth GmbH**
**80993 München (DE)**

(72) Erfinder:
- **Egle, Karl**
  **84513 Töging (DE)**
- **Beaujean, Frank**
  **84453 Mühldorf am Inn (DE)**

(74) Vertreter: **Kirschner, Klaus Dieter, Dipl.-Phys.**
**Schneiders & Behrendt**
**Rechtsanwälte - Patentanwälte**
**Sollner Strasse 38**
**81479 München (DE)**

(56) Entgegenhaltungen:

| | |
|---|---|
| **WO-A-96/05975** | **DE-A- 4 112 004** |
| **DE-A- 4 303 039** | **DE-C- 4 345 233** |
| **US-A- 4 634 142** | **US-A- 5 322 320** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 921 386 B1

## Beschreibung

Die Erfindung betrifft ein Verfahren und eine Vorrichtung zum Prüfen von am Fahrzeug eingebauten Stoßdämpfern nach dem Oberbegriff des Verfahrens bzw. des Vorrichtungsanspruchs.

Vorrichtungen, um den Wirkungsgrad eines Fahrwerkes eines Kraftfahrzeuges zu messen, ohne den Stoßdämpfer von den Kraftfahrzeug abbauen zu müssen, sind an sich bekannt. Es gibt verschiedene Methoden zu diesem Zweck, wobei beispielsweise eine Schwingplatte, auf der das Kraftfahrzeug mit einem Rad steht und die mit einer geeigneten Amplitude und variabler Frequenz in vertikaler Richtung hin- und herbewegt wird, verwendet wird, um Schwingungen auf das Rad auszuüben, und wobei die Messung der Kraft ausgewertet wird, die von dem Fahrwerk auf die Schwingplatte ausgeübt wird.

Nach der sogenannten EUSAMA-Methode (Vereinbarung der größten europäischen Stoßdämpferhersteller: European Shock Absorber Manufacturer Association) wird ein einheitliches Prüfverfahren für Stoßdämpfer in eingebautem Zustand definiert. Die Prüfung erfolgt dabei mit einer Schwingplatte, die mit Hilfe eines Exzenterantriebes eine Hubbewegung von genau 6 mm generiert. Bei der Prüfung wird der Messaufbau auf ca. 23 Hz erregt und läuft freischwingend auf 0 Hz aus. Die entsprechende, sinusförmige, dynamische Radlast wird von Sensoren gemessen und abgespeichert. Vor der Erregung der Schwingungen wird die statische Radlast $F_S$ gemessen. Die gespeicherten, dynamischen Radlastwerte werden nach ihrem Minimum $F_{min}$ untersucht. Aus diesen Werten wird dann die sog. relative Bodenhaftung A in Prozent berechnet: $A = F_S - F_{min}/F_S$.

In der realen Anwendung wird der Bodenhaftungswert noch korrigiert, da besonders leichte Fahrzeuge nur schlechte Bodenhaftungswerte liefern. Für die Bewertung wird dann folgende Tabelle zugrundegelegt:

| | |
|---|---|
| 100% - 60% | gut |
| 59% - 40% | ausreichend |
| 39% - 20% | ungenügend |
| 19% - 0% | schlecht |

Die EUSAMA-Methode wird weitgehend verwendet, ihre Meßergebnisse hängen jedoch nicht nur von dem Zustand des Stoßdämpfers ab, sondern auch von konstruktiven Merkmalen, die die Radaufhängung charakterisieren, beispielsweise das Verhältnis zwischen der gefederten Masse und der ungefederten Masse, dem Reifentyp, dem Reifendruck und der Art der Aufhängung sowie von den Merkmalen der Meßbedingungen, beispielsweise der Beladung des Fahrzeuges oder der Umgebungstemperatur oder der Betriebstemperatur des Stoßdämpfers. Die Abhängigkeit von einer großen Zahl von Parametern verhindert in der Praxis, daß der durch die EUSAMA-Methode definierte Wert in angemessener Weise repräsentativ für den Zustand des Stoßdämpfers selbst ist. Daher gibt die EUSAMA-Methode keine reproduzierbaren und zuverlässigen Ergebnisse.

Ähnliche Probleme haben sich bei anderen bekannten Meßsystemen für Stoßdämpfer ergeben, wo die Abhängigkeit der Messung von vielen physikalischen Parametern des Fahrwerkes dazu führt, daß die gemessenen Daten unter Verwendung von Tabellen oder dergleichen interpretieren muß. Dies führt zu groben Annäherungen und großen Fehlerbereichen, und für die verschiedenen Fahrzeugtpyen sind unterschiedliche Tabellen erforderlich, je nachdem, welche Stoßdämpfer montiert sind.

Aus der EP 0476746 A1 ist eine Vorrichtung zum Testen von Fahrwerken eines Kraftfahrzeuges bekannt, die ähnlich wie die EUSAMA-Methode mit einer Schwingplatteneinrichtung arbeitet. Ein Rechner verarbeitet die Meßwerte und bestimmt aus diesen Meßwerten eine Transferfunktion für die Radaufhängung, die als System mit einer Vielzahl von Systemelementen angesehen wird. Der Rechner errechnet aufgrund eines Modells des Systems die Werte der Systemelemente aus der Transferfunktion, und berechnet mit den berechneten Werten der Systemelemente die Werte von wenigstens einer Bemessungsvariablen und vergleicht diesen Wert mit einem gespeicherten Wert der Bemessungsvariablen. Der Rechner beurteilt die Radaufhängung aus diesem Vergleich und zeigt das Resultat dieses Vergleiches an. Auch hier sind daher entsprechende Tabellen in einer Datenbank erforderlich, die die Werte für alle gängigen Fahrzeugtypen und Bereifungen bereitstellen muß. Außerdem ist die Bewertung des Fahrwerkes über einzelne Systemvariablen ungenau.

Aus der WO 96/07882 ist eine Vorrichtung zum Prüfen von Stoßdämpfern von Kraftfahrzeugen bekannt, bei der das Rad auf einer Schwingplatte in Schwingung versetzt wird und aus den Schwingungsausschlägen bei unterschiedlichen Frequenzen entsprechende Meßergebnisse abgeleitet werden. Bei dieser Vorrichtung wird die Aufhängungsresonanz abgetastet und dann die Frequenz des Hubes und somit die zugeführte Engerie variiert. Die Dämpfungskraft des Stoßdämpfers wird über die Geschwindigkeit aufgezeichnet. Bei diesem Modell werden einige wichtige Einflüsse, beispielsweise die innere Reibung, wie sie unten noch beschrieben wird, nicht berücksichtigt.

Aus der EP 0647843 A2 ist ein System zur Messung des Dämpfungskoeffizienten eines an einem Kraftfahrzeug montierten Stoßdämpfers bekannt, wie es in dem Oberbegriff des unabhängigen Patentanspruches angegeben ist. Der Dämpfungskoeffizient wird als eine Funktion der Ableitung bezüglich der Frequenz der relativen Phasenfunktion zwischen der auf die Schwingplatte übertragenen Kraft und der Bewegung der Schwingplatte berechnet. Bei dieser Vorrichtung wird von einem unzureichenden Schwingungsmodell ausgegangen, wobei der als "Achsdämpfungsgrad" bezeichnete Wert nur für das angewendete Modell gilt, so daß sich in der Praxis erhebliche Abweichungen zwischen den Ergebnissen dieser Methode und den tatsächlichen Dämpfungsgraden der gemessenen Dämpfer ergibt. Insbesondere wird der Einfluß der äußeren Reibung nicht berücksichtigt.

Die bisher existierenden Verfahren, bei denen auf eine Bewertung unter Einbindung eines Schwingungsmodells erfolgt, zeigen Mängel im theoretischen Ansatz. Dies ist beispielsweise die unkorrekte Zerlegung des einfachen Schwingungsmodells in verschiedene Teilmodelle für verschiedene charakteristische Frequenzbereiche; die unkorrekte mathematische Beschreibung der Resonanzfrequenzen. Teilweise werden Ansätze auf der Basis von freien, ungedämpften elastischen Schwingungssystemen verwendet. Grundlage sind jedoch erzwungene, stark gedämpfte elastische Schwingungssysteme; die ungültige Vereinfachung oder Vernachlässigung von Teiltermen des mathematisch beschriebenen Modells; die Vernachlässigung der äußeren Reibung innerhalb des einfachen ¼-Fahrzeugmodells; die Verletzung des linearen Kraftgesetzes durch progressive Aufhängfedern; die Verzerrung der geforderten sinusförmigen Signalform durch das unterschiedliche Druck- und Zugstufenverhalten.

Grundsätzlich stellt das unterschiedliche Verhalten des Dämpfers in Zugstufen- und Druckstufenrichtung für alle Prüfverfahren ein Problem dar. Die Modellierung der Kolbenkinematik ist selbst bei bekannten Dämpferkennwerten nur rechnergestützt möglich. Hierbei beginnen bei jedem Umkehrpunkt eine Vielzahl von Ausgleichsvorgängen die bis zum Erreichen des nächsten Umkehrpunktes noch nicht abgeschlossen sind. Die Zuordnung eines einzigen Parameters, der die Güte des Dämpfers beschreibt, ist somit in sich problematisch.

Der Erfindung liegt die Aufgabe zugrunde, ein Verfahren und eine Vorrichtung zum Prüfen von am Fahrzeug eingebauten Stoßdämpfern bereitzustellen, welches die gemessenen Kennlinien der Kraftantwort auf die Schwingungserregung durch die Schwingplatte derart aufbereitet, daß eine befriedigende Grundlage für die Auswertung der Meßergebnisse nach einem Schwingungsmodell für das Fahrwerk möglich wird.

Zur Lösung dieser Aufgabe ist das erfindungsgemäße Verfahren dadurch gekennzeichnet, daß das Meßsignal, das den zeitlichen Verlauf der Kraftantwort bei einer Zielfrequenz darstellt, durch eine Zug-Druckstufen-Trennung in ein Druckstufensignal, welches für die Druckstufe des Stoßdämpfers charakteristisch ist, und ein Zugstufensignal aufgetrennt wird, welches für die Zugstufe des Stoßdämpfers charakteristisch ist, und daß das Druckstufensignal und das Zugstufensignal getrennt der weiteren Verarbeitung zugeführt werden. Bei dem erfindungsgemäßen Verfahren sind die Schwingungen, die von der Schwingplatte erzeugt werden,echt sinusförmige Schwingungen, wie es erwünscht ist, um auch einen sinusförmigen Respons von dem System zu erhalten.

Nach einer vorteilhaften Ausgestaltung des erfindungsgemäßen Verfahrens werden die durch die Frequenztrennung erhaltenen Signale einer digitalen Filterung, vorzugsweise einer Fourier-Transformation und besonders vorzugsweise einer Fast-Fourier-Transformation unterworfen. Dadurch wird auch die Informationsverfälschung bei der bisher üblichen Filterung des gesamten Signals vermieden, und die charakteristischen Merkmale der jeweiligen Stufe (Zug- beziehungsweise Druckstufe) bleiben erhalten.

Eine vorteilhafte Ausgestaltung des erfindungsgemäßen Verfahrens ist dadurch gekennzeichnet, daß nach der digitalen Filterung eine Gütebeurteilung des verarbeiteten Signales aus Sinustreue durchgeführt wird, wobei für jeden gemessenen Wert die relative Abweichung zum Sinussignal, das den ideal gefilterten Wert darstellt, berechnet, die Quersumme aller Abweichungen gebildet und Meßpunkte verworfen werden, deren mittlere Abweichung von dem ideal gefilterten Wert einen vorgegebenen Wert, vorzugsweise 5 %, übersteigt. Dadurch kann erreicht werden, daß zwei sinusförmige Signale abgeleitet werden, die dann der weiteren Bearbeitung zugeführt werden. Nur mit Hilfe des sinusförmigen Verlaufs der Signale kann die Korrektheit des Berechnungsverfahrens bezüglich der Parameterberechnung und der Parameterschätzung garantiert werden. Ferner wird die Meßkurve geglättet, sodaß die weitere Verarbeitung erleichtert wird.

Gemäß einer der vorteilhaften Ausgestaltungen des erfindungsgemäßen Verfahrens wird der Einfluß der Schwingplatte auf das Meßergebnis kompensiert, in dem bei einem dynamischen Kalibrierdurchlauf der Frequenzgang der Schwingplatte aufgenommen und das Amplitudenspektrum durch einen Parabelast interpoliert wird. Damit wird ein wichtiger Störfaktor ausgeschaltet.

Nach einer vorteilhaften Ausgestaltung des erfindungsgemäßen Verfahrens wird vor dem eigentlichen Meßlauf eine Erwärmungsphase für den Schwingungsdämpfer vorgesehen, um den Stoßdämpfer bei der Messung auf eine vorbestimmte Temperatur zu bringen und damit den Einfluß von Temperaturschwankungen auf das Meßergebnis auszuschalten.

Nach einer vorteilhaften Ausgestaltung des erfindungsgemäßen Verfahrens wird bei der Aufnahme der Stützpunkte für die Parameterschätzung ein Gütetest durchgeführt, wobei die Abweichung des tatsächlichen Signals zum geforderten, sinusförmigen Signal festgestellt wird und, wenn die Abweichung zu groß ist, wird der Meßwert verworfen und die nächste Zielfrequenz liegt dann um einen vorgegebenen Wert, beispielsweise 1 Hz, unter der aktuellen Frequenz, während, wenn die Güte des Signales ausreichend ist in kleineren Schritten, beispielsweise 0,5 Hz, weiter abgetastet wird. Damit wird die Schrittweite der Messungen automatisch an die Gegebenheiten angepaßt, was zu erheblich verbesserten Meßergebnissen führt.

Nach einer weiteren vorteilhaften Ausgestaltung des erfindungsgemäßen Verfahrens wird als Bewertungsgrundlage fiir die Qualität des eingebauten Stoßdämpfers der Achsen-Dämpfungsgrad im Bezug auf den Quotienten der gefederten Masse zu der ungefederten Masse berechnet, wobei die Meßwerte des Achsdämpfüngsgrades zu einer Kennlinie eines Grenzwertdämpfungsgrades in Beziehung gesetzt werden, die den Bereich nicht-aktzeptabler Achsdämpfungsgrade begrenzt. Die Beurteilung des Stoßdämpfers erfolgt durch die Klassifizierung in die Gütebereich "sehr gut", "mittelmäßig" und "ungenügend", an die eine Austauschempfehlung für den eingebauten Dämpfer gekoppelt ist. Die Beurteilung erfolgt in Abhängigkeit von der Lage des ermittelten Achs-Dämpfungsgrades zu der Kennlinie des Grenzwert-Dämpfungsgrades und nicht in Abhängigkeit von einzelnen Parametern des ¼-Fahrwerks, d. h. der Radaufhängung eines Rades. Da die Meßsignale in der oben beschriebenen Weise aufbereitet worden sind, ergeben sich aus der Auswertung dieser Signale auch reproduzierbare, d. h. befriedigende Meßergebnisse.

Nach einer weiteren vorteilhaften Ausgestaltung des erfindungsgemäßen Verfahrens wird eine Parameterberechnung durchgeführt, wie sie in Anspruch 26 angegeben ist, und aus den Parametern wird der Achs-Dämpfungsgrad bestimmt, wobei die hierbei verwendeten Parameter ein Resultat der Modelliteration sind. In Versuchen hat sich gezeigt, daß mit diesem ¼-Fahrzeugmodell befriedigende Ergebnisse bei der Prüfung und Klassifizierung der eingebauten Stoßdämpfer erhalten werden können. Insbesondere wird der problematische Einfluß der sogenannten äußeren Reibung durch dies Modelliteration berücksichtigt.

Die vorteilhafte Ausgestaltung des erfindungsgemäßen Verfahrens nach Anspruch 27 wird der Rechenaufwand bei der Auswertung der Meßergebnisse erheblich reduziert, da die Zahl der zu berechnenden Variablen auf sechs reduziert werden kann.

Durch die vorteilhafte Ausgestaltung des erfindungsgemäßen Verfahrens nach Anspruch 29 wird der Rechenaufwand noch weiter reduziert, ohne daß die Meßergebnisse an Genauigkeit einbüßen würden.

Eine weitere vorteilhafte Ausgestaltung des erfindungsgemäßen Verfahrens ist dadurch gekennzeichnet, daß nach der Berechnung des Achs-Dämpfungsgrades und dessen Einordnung in das Diagramm von Achs-Dämpfungsgrad zu gefederter/ungefederten Masse eine Empfehlung bezüglich der Notwendigkeit eines Austausches des Stoßdämpfers gegeben wird.

Eine weitere vorteilhafte Ausgestaltung des erfindungsgemäßen Verfahrens ist dadurch gekennzeichnet, daß bei der Aufnahme des Frequenzganges folgende Schritte in der genannten Reihenfolge durchgeführt werden:

- Messung des statischen Gewichts;
- Anfahren der Startfrequenz von beispielsweise 10 Hz;
- Durchführung einer Erwärmungsphase des Stoßdämpfers;
- Hochfahren der Erregerschwingung der Schwingplatte auf die Maximalfrequenz von beispielsweise 35 Hz;
- Aufnehmen der Stützpunkte für die Parameterschätzung;
- Aufnehmen der Resonanzfrequenz $f_3$;
- Aufnehmen der $\pi/2$ Frequenz $f_2$ und
- Übersenden der Daten an die Auswertung.

Eine weitere vorteilhafte Ausgestaltung des erfindungsgemäßen Verfahrens ist dadurch gekennzeichnet, daß zum Aufnehmen der Frequenzpunkte folgende Schritte in der angegebenen Reihenfolge durchgeführt werden:

- Anfahren der Zielfrequenz;
- Überprüfung, ob die Frequenz sich stabilisiert;
- Aufnehmen der Meßwerte;
- Trennung von Zug- und Druckstufensignal;
- Digitale Filterung, vorzugsweise Fourier-Transformation, der getrennten Signale;
- Gütebewertung der Signale;
- Überprüfung der Bodenhaftung;
- Überprüfung, ob die Messungen über eine gegebene Anzahl von Umdrehungen aufgenommen worden sind;
- Überprüfung, ob die Messungen bei wenigstens einem Teil der Umdrehungen die Gütenorm erfüllen;
- Mittelwertbildung der als gut klassifizierten Messungen;
- Kompensation des Einflusses der Schwingplatte.

Eine weitere vorteilhafte Ausgestaltung des erfindungsgemäßen Verfahrens ist dadurch gekennzeichnet, daß zur Auswertung der Meßergebnisse folgende Schritte in der angegebenen Reihenfolge durchgeführt werden:

- Überprüfung, ob die Bodenhaftung innerhalb vorgegebener Toleranzgrenzen liegt;

- Extrahieren der charakteristischen Frequenzen;
- Parameterschätzung in Bezug auf die Berechnung von $k_R$, der Federkonstanten des Reifens;
- Überprüfung des Luftdrucks des Reifens;
- Überprüfung der Signalform des Amplitudenspektrums;
- Überprüfung, ob der Phasengang $\pi/2$ erreicht;
- Überprüfung, ob die Gleichung $f_2 = f_3$ gilt;
- Parameterberechnung;
- Überprüfung, ob die Parameter berechenbar sind;
- Berechnung des Achs-Dämpfungsgrades;
- Berechnung der Kennlinie der Grenzwertdämpfung; und
- Beurteilung des Achsdämpfungsgrades und Ausgabe einer Empfehlung über die Notwendigkeit des Stoßdämpferaustausches.

Die verschiedenen Ausführungsbeispiele des erfindungsgemäßen Verfahrens haben die folgenden Vorteile. Die Meßwertaufbereitung bewertet die Güte eines Meßpunktes, führt ihn der Mittelwertbildung zu und trennt die obere und untere Halbwelle in zwei sinusförmige Signale. Nach der digitalen Filterung wird dann auch noch der verfälschende Effekt der Schwingplatte auf die Scherkraftsensoren kompensiert.

Die Parameterbestimmung basiert auf einer mathematischen Modellierung des Fahrwerkes, die in ihrer Komplexität nur von einer sogenannten Computer-Algebra gelöst werden kann. Die Gleichungssysteme verfügen hierbei über mehrere hundert Einzelsummanden mit komplexen Polynomen 18. Grades. Dieses Verfahren, das auch als Parameterberechnung bekannt ist, wird noch zusätzlich mit der Parameterschätzung kombiniert.

Die Bewertung des Fahrwerkes erfolgt nicht über die isolierte Bewertung der Modell-Parameter, da für jeden Fahrzeugtyp, einschließlich seiner verschiedenen Radaufhängungsvarianten, die Übersetzungsverhältnisse und die Kennwerte der eingebauten Dämpfer und Aufhängfedern in der Datenbank gehalten werden müßten. Bei der Vielfalt von Varianten wäre eine solche Datenbank für den realen Einsatz beim Kunden nicht praktikabel. Hier lehnt man sich an die EUSAMA-Methode an, die einen zwar unbefriedigenden aber dennoch Fahrzeugtyp übergreifenden Bodenhaftungswert liefert. Der sogenannte Achs-Dämpfungsgrad, der über dem Massenverhältnis gefederte zu ungefederte Masse ausgewertet wird, soll die bekannten Nachteile des Bodenhaftungswertes aufheben. Auf der Basis dieses Bewertungspunktes wird dann eine Austauschempfehlung für den eingebauten Dämpfer generiert.

Die Vorteile dieses Verfahrens zeichnen sich insbesondere bei den modernen Achssystemen, wie beispielsweise mit Luftfederung, Raumlenkerachsen usw. ab, bei denen die klassischen Bewertungsverfahren nahezu vollständig versagen und diese Aufhängungen in der Regel negativ klassifiziert werden.

Eine Vorrichtung zur Durchführung des Verfahrens zum Prüfen von am Fahrzeug eingebauten Stoßdämpfern mit einer Schwingplatte, auf der das Kraftfahrzeug mit einem Rad steht und die mit einer geeigneten Amplitude und einer variablen Frequenz in vertikaler Richtung hin- und herbewegbar ist und eine Schwingung auf das Rad ausübt, wobei die Dämpfung des Stoßdämpfers aus der Kraftantwort des Fahrwerkes auf die Schwingungen der Schwenkplatte und der relativen Phasenfunktion zwischen der von der Schwingplatte ausgeübten Kraft in der Bewegung der Schwingplatte erhalten wird, ist gekennzeichnet durch Scherkraftsensoren an der Schwingplatte und einen Impulsgeber für die winkeläquitistante Abtastung, und durch eine Einrichtung, durch die das Meßsignal in ein Druckstufensignal und ein Zugstufensignal aufgetrennt wird, und durch eine Einrichtung, um das Druckstufensignal und das Zugstufensignal getrennt der Einrichtung für die Weiterverarbeitung der Signale zuzuführen.

Eine vorteilhafte Ausgestaltung der erfindungsgemäßen Vorrichtung ist dadurch gekennzeichnet, daß die Auswertungs-Einrichtung die Qualität des eingebauten Stoßdämpfers über den Achs-Dämpfungsgrad im Bezug auf den Quotienten der gefederten Masse zu der ungefederten Masse beurteilt, wobei die Meßwerte des Achs-Dämpfungsgrades zu einer Kennlinie eines Grenzwert-Dämpfungsgrades in Beziehung gesetzt werden, die den Bereich nicht-akzeptabler Achs-Dämpfungsgrade begrenzt.

Die erfindungsgemäße Vorrichtung hat den Vorteil, daß die Schwingungen (Vibrationen), die von der Schwingplatte erzeugt werden, echte sinusförmige Schwingungen sind, wie es erwünscht ist, um auch einen sinusförmigen Respons von dem System zu erhalten.

Weitere vorteilhafte Ausgestaltungen der Erfindung ergeben sich aus den restlichen abhängigen Ansprüchen.

Ausführungsbeispiele der Erfindung werden nun anhand der beiliegenden Zeichnungen beschrieben. Es zeigen:

Figur 1 ein Flußdiagramm der Meßwertaufnahme;
Figur 2 ein Flußdiagramm der Meßwertaufbereitung;
Figuren 3A und 3B graphische Darstellungen des Prinzipes der Frequenztrennung;
Figuren 4A und 4B graphische Darstellungen des Prinzips der Amplitudentrennung;
Figuren 5A und 5B ein Flußdiagramm der Auswertung gemäß des erfindungsgemäßen Verfahrens;

Figur 6 eine graphische Darstellung, die die Wirkung des Haftreibungsabrisses auf den Frequenzgang darstellt;
Figur 7 eine graphische Darstellung, die die Wirkung einer guten Dämpferleistung auf den Frequenzgang darstellt
Figur 8 eine graphische Darstellung, die die Wirkung schlechter Dämpferleistung auf den Frequenzgang darstellt;
Figur 9 eine graphische Darstellung, die die Soll-kR-Linie für die Vorkontrolle des Reifendruckes darstellt;
Figur 10 eine graphische Darstellung, die die kR-Linie eines Reifens (Uniroyal 155/70 R13) darstellt;
Figur 11 eine graphische Darstellung, die die Signalform eines einwandfreien Frequenzganges darstellt;
Figur 12 eine graphische Darstellung, die die Signalform eines defekten Stoßdämpfers darstellt;
Figur 13 eine graphische Darstellung, die die Signalform einer Aufhängung mit Spurflattern darstellt;
Figur 14 den theoretischen Kurvenverlauf im mU-k-Gebiet;
Figur 15 eine graphische Darstellung des praktischen Kurvenverlaufs im mU-k-Gebiet;
Figur 16 eine graphische Darstellung des Scan-Bereiches der Modelliteration im mU-k-Gebiet;
Figur 17 eine graphische Darstellung der Polstelle und der Asymptote der Kennlinie des Grenzwertdämpfungsgrades;
Figur 18 eine graphische Darstellung der Achs-Dämpfungsgrade verschiedener Druckstufen;
Figur 19 eine graphische Darstellung der Achs-Dämpfungsgrade verschiedener Zugstufen;
Figur 20 eine graphische Darstellung der Druckabhängigkeit des Achs-Dämpfungsgrades vom Reifendruck;
Figur 21 eine graphische Darstellung der Abhängigkeit des Achs-Dämpfungsgrades von der Beladung des Kraftfahrzeuges;
Figur 22 eine graphische Darstellung der Temperaturabhängigkeit des Achs-Dämpfungsgrades von der Temperatur des Stoßdämpfers;
Figur 23 eine graphische Darstellung der Abhängigkeit des Achsdämpfungsgrades von der Bereifung des Kraftfahrzeuges;
Figur 24 eine graphische Darstellung der Abhängigkeit des Achsdämpfungsgrades bei veränderter ungefederten Masse mU; und
Figur 25 eine graphische Darstellung der Verschiebungsrichtung der Einflußparameter auf den Bewertungspunkt.

Das Prüfverfahren gliedert sich in zwei Hauptschritte, nämlich die Meßwertaufnahme, in der die Meßdaten aufgenommen und aufbereitet werden, und die Auswertung, bei der die aufbereiteten Daten fiir eine Qualitätaussage des Fahrwerkes weiter verarbeitet werden. Die Prüfeinrichtung weist eine Schwingplatte auf, an der neben Scherkraftsensoren der Schwingplatte ein Impulsgeber für die winkeläquidistante Abtastung vorgesehen ist.

Bei der Meßwertaufnahme werden das statische Gewicht und der Frequenzgang des 1/4-Fahrzeuges über eine Erregerfrequenz von 35Hz - 10Hz aufgenommen. Der Amplitudengang entspricht hierbei dem Scherkraftsensorsignal auf der Schwingplatte in Newton. Der Phasengang entspricht der Phasenverschiebung zwischen erregender Schwingung der Schwingplatte und Antwortschwingung des 1/4-Fahrzeuges in radiant. Aus dem Frequenzgang werden dann die charakteristischen Frequenzen beziehungsweise Frequenzbereiche herausgefiltert und weiterverarbeitet.

Für die nachfolgende Auswertung sind drei charakteristische Frequenzbereiche von besonderem Interesse, nämlich die Resonanzfrequenz der ungefederten Masse $f_3$ (hier erreicht der Amplitudengang des absolute Maximum), die Frequenz $f_2$ (hier beträgt der Phasengang genau 90° beziehungsweise $\pi/2$ und der Wirkanteil des Amplitudenganges wird bei dieser Frequenz gleich Null) und die oberen Frequenzen bis zur Maximalfrequenz von 35Hz. Diese Meßpunkte sind die Stützpunkte für die Parameterschätzung, mit der die Federkonstante des Reifens $k_R$ bestimmt wird.

Das frequenz-äquidistante Abtasten des Frequenzbereiches von 35Hz - 10Hz ist nur eine grobe Näherung . Für hochqualitative und reproduzierbare Meßungen wird daher für jede charakteristische Frequenz beziehungsweise jeden charakteristischen Frequenzbereich ein spezieller Meßwertalgorithmus vorgesehen, dessen Ablauffolge in Figur 1 dargestellt ist.

Der Amplitudengang entspricht dem Wechselanteil des Gesamtsignals. Der Gleichanteil wird durch die digitale Filterung berücksichtigt. Das statische Gewicht des 1/4-Fahrzeuges fließt als $m_S$ in die Parameterberechnung mit ein.

Bei niedrigen Umgebungstemperaturen nimmt die Viskosität der Dämpferflüssigkeit zu und somit auch die Dämpferleistung. Die Leistungszunahmen betragen hierbei bis zu einigen 100%. Daher wird eine Erwärmungsphase vorgesehen, in der in der Umgebung der oberen Resonanzfrequenz $f_3$ die Dämpferflüssigkeit erwärmt wird. Die zunächst geringe Kraftantwort auf der Schwingplatte nimmt bei der Erwärmung zu und konvergiert gegen einen Maximalwert dessen Absolutbetrag irrelevant ist. Nach dem Erreichen eines Maximalwertes wird mit der eigentlichen Frequenzgangsmessung fortgefahren.

Bei bisherigen Versuchen von 0° Celsius betrug die Erwärmungsdauer zum Teil deutlich weniger als 15 Sekunden. Bei noch niedrigeren Temperaturen kann von Erwärmungszeiten kleiner als 30 Sekunden ausgegangen werden.

Ausgehend von der Maximalfrequenz von 35 Hz werden die Stützpunkte der Parameterschätzung gemessen.

Bei den hohen Frequenzen sind auf dem Meßsignal sogenannte Prelleffekte zu erkennen, die das Meßsignal in Zug- und Druckstufenrichtung stark verfälschen. Diese Stützpunkte erhalten in der Regel für die Parameterschätzung die höchste Gewichtung und müssen korrekt sein. Bei jedem Meßpunkt wird deshalb ein Gütetest durchgeführt. Der Gütetest überprüft die Abweichung des tatsächlichen Signals zum geforderten sinusförmigen Signal. Ist die Abweichung zu groß, wird der Meßwert verworfen. Die nächste Zielfrequenz liegt dann 1 Hz unter der aktuellen Frequenz. Ist die Güte eines Signals ausreichend, so wird in 0.5 Hz-Schritten weiter abgetastet.

Zur Bestimmung der Resonanzfrequenz wird wie folgt vorgegangen. Überschreitet der Amplitutendengang in Druck- und Zugstufenrichtung sein Maximum, so ist der Resonanzpunkt $f_3$ der ungefederten Masse durchlaufen worden. Dieser Resonanzbereich wird dann noch einmal in 0.25 Hz-Schritten abgetastet. Die Resonanzfrequenz wird somit mit einer Auflösung von 0.25 Hz bestimmt. Der Algorithmus sieht auch vor, daß bei Aufhängungen mit starker Spuränderung oder Dämpfern mit defekten Ventilen mehrere Maxima sukzessive Durchlaufen werden können. In allen Problemfällen wird letztendlich die tatsächliche Resonanzfrequenz mit der geforderten Auflösung erkannt.

Alternativ zur der vorstehend beschriebenen Vorgehensweise kann zur Bestimmung der Resonanzfrequenz so vorgegangen werden, daß schon mit einem Frequenzdurchlauf die Resonanzfrequenz mit einer Auflösung von 0,25 Hz aufgenommen wird. Dazu kann, wenn der Amplitudengang seinen Wendepunkt überschreitet, der dann angenommene Resonanzbereich in kleineren Frequenzschritten, beipielsweise in 0,25 Hz-Schritten, abgetastet werdern, um in einem Druchgang die tatsächliche Resonanzfrequenz mit der geforderten Auflösung zu bestimmen.

Der Phasengang kann bei sehr starken Dämpfungen das $\pi/2$-Niveau nicht erreichen oder, im anderen Extremfall bei sehr schwachen Dämpfungen das $\pi/2$-Niveau sehr steil durchlaufen. Für beide Fälle muß der Aufahmealgorithmus funktionieren. Die $\pi/2$-Frequenz muß immer unterhalb der Resonanzfrequenz $f_3$ liegen. Wären beide Frequenzen gleich groß, so wäre das schwingende System ungedämpft. Der Phasengang nimmt mit fallender Erregerfrequenz zu. Wird der Phasenwert von 1.2 radiant erreicht so wird die Schrittweite der Abtastung auf 0.25 Hz reduziert. Erreicht der Phasenwert 1.4 radiant, so wird die Schrittweite auf 0.1 Hz reduziert. Aus diesen Stützpunkten wird dann die Resonanzfrequenz $f_3$ bestimmt.

Bei der der Meßwertaufnahme und Meßwertaufbereitung einer einzelnen Erregerfrequenz wird neben der Bewertung der Spektralverläufe auch der gemessene Kraftwert weiter verarbeitet. Die Auswertung basiert auf den komplexen Frequenzgängen erzwungener, gedämpfter, elastischer Schwingungssysteme. Dies impliziert streng sinusförmige Schwingungen. Der zeitliche Verlauf des Meßsignals ist jedoch in der Praxis nicht sinusförmig. Zum einen sind die Elongationen in Druck- und Zugstufenrichtung wesentlich unterschiedlich und zum anderen ist die Zeitdauer des Druckstufenhubes geringfügig kürzer als die des Zugstufenhubes.

In der Figur 2 ist nun der Ablauf der Meßwertaufnahme und -aufbereitung dargestellt um eine optimale Genauigkeit zu erreichen und der Berechnung die physikalisch korrekte Information zu übergeben.

Um die nächste Zielfrequenz anzufahren und zu stabilisieren, wird dem Frequenzumrichter der Frequenzwert des nächsten Abtastpunktes des Frequenzspektrums übergeben. Die Meßwertaufnahme wird erst freigegeben, wenn der Zielpunkt erreicht ist und das System sich dort stabilisiert hat. Ein Frequenzpunkt gilt als stabilisiert, wenn seine Freqeunzschwankungen eine vorgegebene Toleranz nicht mehr überschreiten. Hierbei werden die unterschiedlichen Frequenzbereiche unterschiedlich bewertet. Beim Hochfahren an die Maximalfrequenz wirken die Einschwingeffekte am deutlichsten und haben die negativsten Folgen für die Qualität der Stützpunkte und somit für die Parameterschätzung. Dort sind längere Stabilisierungszeiten vorzusehen. Bei niedrigeren Frequenzen kann das Fahrzeug in den Bereich des Haftreibungsabrisses fallen. Dort hält die Haftreibung der Aufhängungsteile der Beschleunigung durch die Schwingplatte stand und reißt dann, ab einer bestimmten Beschleunigung abrupt ab. Das Fahrzeug sackt in seine Aufhängung. Die Drehzahlregelung ist bei starken Abrißeffekten nicht in der Lage diese Störgröße ausreichend auszuregeln. Frequenzpunkte, die sich nicht stabilisieren lassen werden bei der Messung übersprungen. Die Analog-Digital-Wandlungen werden hierbei winkeläquidistant über einen Interrupt ausgelöst.

Um die physikalisch korrekten Informationen an die anschließende Berechnung liefern zu können wird das Gesamtsignal in zwei unabhängige Teilsignale für die Druck- und Zugstufe zerlegt, und es werden zwei unterschiedliche Trennungsalgorithmen angewendet.

Die Grundidee dieser Trennung ist die Zuordnung von jeweils der Hälfte der Meßwerten zum Druck- beziehungsweise Zugstufensignal. Bei dieser Trennung erfolgt eine exakte Erhaltung der erregenden Grundfrequenz, und die Trennung ist relativ einfach und schnell zu implementieren. Bei dieser Art der Trennung wird das Druckstufensignal überhöht und das Zugstufensignal wird noch mehr minimiert (siehe Figuren 3A und 3B). Die unterschiedlichen Dämpferleistungen beider Stufen werden noch mehr gespreizt. Zum anderen sind die entstehenden Phasenverschiebungen nicht plausibel. Simulationen am einfachen 1/4-Fahrzeugmodell ergeben bei hohen Dämpfungsleistungen eine kleine Phasenverschiebung und bei niedrigen Dämpfungsleistungen eine große Phasenverschiebung. Bei dieser Art der Stufentrennung sind jedoch die Phasenverschiebungen nahezu identisch.

Die Grundidee der Amplitudentrennung ist die Zuordnung der positiven Halbwelle als Druckstufensignal und die Zuordnung der negativen Halbwelle als Zugstufensignal. Dies entspricht in etwa der Zuordnung bei Stoßdämpfertests im ausgebauten Zustand. Eine Spreizung der Druck- und Zugstufenamplitude findet hier nicht statt (siehe Figuren 4A und 4B).

Bei der sich einstellenden Schwingfrequenz der beiden Stufen liegt die Druckstufe deutlich über der Erregerfrequenz, während die Zugstufe deutlich unterhalb der Erregerfrequenz liegt. Dies kann jedoch durch eine Phasenverschiebung ausgeglichen werden, die mit den theoretischen Simulationen im Einklang ist. Die schmale positive Druckstufenhalbwelle muß um $\Delta\varphi$ nach rechts geschoben werden ('sie muß voreilen') , um die Grundfrequenz des Erregersignals zu erreichen. Dies entspricht einer Phasenverschiebung von $-\Delta\varphi$. Die breite negative Zugstufenhalbwelle muß um $\Delta\varphi$ nach links geschoben werden ('sie muß nacheilen'), um die Grundfrequenz des Erregersignals zu erreichen. Dies entspricht einer Phasenverschiebung von $+\Delta\varphi$.

Mit der digitalen Filterung wird das Signal der erregenden Frequenz herausgefiltert. Die digitale Filterung muß hierbei an das entsprechenden Druck-Zugstufen-Trennungsverfahren angepaßt werden, wobei bei der Frequenztrennung die klassische Form der Fourier-Transformation verwendet werden kann, da die Druck- und Zugstufenanteile genau der zu Grunde liegenden Erregerfrequenz entsprechen. Bei der Amplitudentrennung muß die höhere Grundfrequenz der Druckstufe und die niedrigere Frequenz der Zugstufe für die Berechnung der Amplitude berücksichtigt werden. Hierzu kann die Fouriertransformation des Gesamtsignals durchgeführt werden, und die oben erwähnten Phasenverschiebungen werden addiert.

Die Signalverläufe können aus den verschiedensten Gründen stark gestört sein. Selbst die digitale Filterung beispielsweise durch die Fourier-Transformation liefert dann keine brauchbaren Werte, da das Originalsignal sehr stark vom sinusförmigen Verlauf differiert. Diese Meßpunkte dürfen dann nicht weiter verarbeitet werden.

Zur Gütebeurteilung wird für jeden gemessenen Wert die relative Abweichung zum ideal gefilterten Wert (Sinuskurve) berechnet. Die Quersumme aller Abweichungen wird dann fiir eine Bewertung herangezogen. Untersuchungen haben ergeben, daß ab einem Grenzwert von 6% mittlerer Abweichung die Störungen im Gegensatz zu 4% oder 5% deutlich und sichtbar in einem nicht mehr vertretbaren Maße zunehmen.

Alternativ kann zur Gütebeurteilung die Differenzfläche von der gefilterten Kurve (Sinuskurve) und der Ist-Kurve aufaddiert und mit der Soll-Fläche in Relation gesetzt werde, wobei nur eine Division erforderlich ist.

Bei sehr schlechten Fahrwerken beziehungsweise Dämpferleistungen kann in der Frequenzumgebung des Resonanzpunktes $f_3$ das Fahrzeug den Kontakt zur Schwingplatte verlieren und sogar vom Prüfstand abheben.

Bei einer Bodenhaftung kleiner als 10% wird die Meßwertaufnahme aus Sicherheitsgründen abgebrochen. Eine Auswertung der bis dahin aufgenommenen Meßwerte ist nicht mehr notwendig weil das Fahrwerk ad hoc als ungenügend klassifiziert werden kann.

Für jeden Meßpunkt werden drei komplette Umläufe gemessen. Erfüllen mindestens zwei Umläufe das Gütekriterium, so wird über die qualitativ hochwertigen Meßkurven der Mittelwert für die Amplitude und die Phase gebildet. Erfüllt nur ein oder sogar kein Umlauf das Gütekriterium, so wird dieser Frequenzpunkt nicht in das Spektrum aufgenommen.

Auf den Scherkraftsensoren ist die sogenannte Schwingplatte montiert. Wird das System erregt, so wirkt auch die schwingende Masse der Schwingplatte auf die Scherkraftsensoren. Dieser Einfluß nimmt quadratisch mit steigender Erregerfrequenz zu:

$$F = m_{Platte} \cdot S_{Hub} \cdot \omega^2$$

Bei der Messung des Frequenzganges der Schwingplatte waren jedoch noch lineare und konstante Anteile im Amplitudengang enthalten. Um dieses Fehlerpotential zu minimieren wird in einem sogenannte 'dynamischen' Kalibrierdurchlauf der Frequenzgang der Schwingplatte aufgenommen und das Amplitudenspektrum durch einen Parabelast interpoliert. Die drei Koeffizienten des Interpolations-Polynoms müssen hierbei permanent gespeichert bleiben. Die Phasenverschiebung ist, bis auf die geringfügigen Verschiebungseffekte des Tiefpaß-Filters konstant, und wird als Nulldurchgangsreferenz der Schwingplatte bei der späteren Bestimmung der Phasenverschiebung verwendet.

Bei der Schwingplatten-Kompensation muß nun das gefilterte Signal um die Nulldurchgangsreferenz korrigiert werden. Konkret wird sie 'nach links geschoben', das heißt die gemessene Phasenverschiebung wird mit der Nulldurchgangsreferenz addiert. Nun ist die Phasenverschiebung korrekt zum Nulldurchgangspunkt der Schwingplatte bestimmt.

Das Amplitudenspektrum der Schwingplatte besteht nur aus Wirkanteilen und nicht aus sogenannte Blind- oder Imaginäranteilen! Um den verfälschenden Effekt der Schwingplatte zu eliminieren muß dieser Realanteil vom Realanteil des gemessenen Amplitudenspektrums subtrahiert werden.

Aus dem resultierenden Wirk- und Blindanteil des kompensierten Signals wird der tatsächliche, sogenannte kompensierte Betrags- und Phasenwert des schwingenden 1/4-Fahrzeuges berechnet.

Ziel der Auswertung ist eine qualitative Aussage über das vermessene Fahrwerk. Insbesondere soll die Qualität des eingebauten Dämpfers beurteilt werden. In Verbindung mit dieser Qualitätsaussage wird eine, für den Betreiber der Prüfanlage relevante, Austauschempfehlung für den Dämpfer gegeben. Folgende drei Empfehlungen sind vorgesehen:

Dämpfer ist sicher in Ordnung (Kein Austausch notwendig).
Der Dämpfer befindet sich im Grenzbereich (Austausch empfohlen)
Der Dämpfer ist sicher defekt (Austausch unbedingt durchführen).

Bewertungsgrundlage ist der sogenannte Achs-Dämpfungsgrad. Dieser Achs-Dämpfungsgrad wird dann in Relation zu einem Grenzwertdämpfungsgrad gesetzt, der die besonderen Fahrwerkseigenschaften und Testbedingungen berücksichtigt. Insbesondere eventuelle Manipulationsversuche werden über diesen Grenzwertdämpfungsgrad ausgeglichen. Die Manipilationsmöglichkeiten sind im Folgenden beschrieben. Der Grenzwertdämpfungsgrad läßt sich unterschiedlich restriktiv definieren und wird letztendlich in einem Feldversuch in Abstimmung mit den Fahrzeugherstellern empirisch bestimmt. Die Kennlinie des Grenzwertdämpfungsgrades wird durch nur zwei konkrete Parameter definiert. Diese sind dann für alle Fahrzeugtypen und alle Testbedingungen gültig.

Die Auswertung basiert auf einer Vielzahl von komplexen Einzelschritten, die in dem Flußdiagramm der Figur 5 dargestellt sind. Ein Merkmal des Auswerteverfahrens ist ein Plausibilitätstest, der der Berechnung und Bewertung des Dämpfungsgrades vorausgeht. Dieser Plausibilitätstest hat die Aufgabe eventuell nicht berechenbare, extreme Fahrwerkssituationen zu eliminieren. Den nicht berechenbaren, extremem Fahrwerken liegen nicht notwendigerweise schlechte oder defekte Dämpfer zugrunde. Auch extrem gute Dämpferleistungen, die eventuell noch mit einem großen Anteil an äußerer Reibung verstärkt werden, verletzen die Annahme des zu Grunde liegenden einfachen 1/4-Fahrzeug-Modells der Parameterberechnung.

Die charakteristischen Frequenzen werden für die Zug- und Druckstufe getrennt aus dem gemessenen Amplituden- und Phasenspektrum extrahiert. Ist eine Stufe defekt, dann muß der Dämpfer gewechselt werden.

Die Resonanzfrequenz $f_3$ entspricht der Frequenz, bei der das Amplitudenmaximum durchlaufen wird. Dieses Extremum muß lokal und global sein. Ist beispielsweise der erste Wert bei 35 Hz ein globaler Maximumswert, wird aber nicht als lokaler akzeptiert, so wird die Meßreihe als ungültig verworfen.

Folgende Probleme erschweren die genaue Bestimmung der $\pi/2$-Frequenz. Bei der Aufnahme der Spektren wird in frequenz-äquidistanten Schritten abgetastet. In der Regel wird dabei nicht genau der Frequenzpunkt erreicht, bei dem sich eine kompensierte Phasenverschiebung von genau $\pi/2$ einstellt. Der schon oben mehrmals erwähnte Haftreibungsabriß, der sich nach dem Durchlaufen der oberen Resonanzfrequenz einstellt verfälscht insbesondere das Phasenspektrum. Der stetig verlaufende Phasenverlauf erhält durch den Haftreibungsabriß Ausreißerwerte, die über dem $\pi/2$-Niveau liegen können, obwohl durch die vorhandene gute Dämpfung die $\pi/2$-Resonanz viel später oder gar nicht erreicht würde, wie in Figur 6 gezeigt ist.

Ebenso kann ein sicheres Erreichen des $\pi/2$-Niveaus durch einen Ausreißer verhindert werden. Durch die Interpolation des Kurvenabschnittes des Phasenverlaufes durch ein Polynom 3.Grades, werden sowohl die Ausreißer eliminiert, als auch die exakte $\pi/2$-Frequenz $f_2$ berechnet. Die Stützpunkte für die Interpolation beginnen hierbei ab der Resonanzfrequenz und enden beim lokalen Maximum des Phasenganges. Die Wirkung einer guten Dämpferleistung auf den Frequenzgang ist in Figur 7 dargestellt.

Die Frequenzen $f_2$ und $f_3$ können nun für einen Plausibilitätstest herangezogen werden. Hierbei sollen zwei Extremfälle vor der eigentlichen Parameterberechnung abgefangen werden.

Wenn die $\pi/2$-Frequenz nicht vorhanden ist, wurde das $\pi/2$-Niveau nicht erreicht. Die Dämpfung des Fahrwerkes ist außergewöhnlich gut. Eine Parameterberechnung wäre nicht möglich und erübrigt sich.

Wenn die $\pi/2$-Frequenz $f_2$ größer oder gleich der Resonanzfrequenz $f_3$ ist, sind in schwingenden Systemen ohne Dämpfung die Frequenzen $f_2$ und $f_3$ theoretisch gleich. Stellt sich dieses Verhalten bei der Aufnahme des Frequenzganges ein, so ist die Dämpfung des Fahrwerkes außergewöhnlich schlecht. Eine Parameterberechnung wäre nicht möglich und erübrigt sich. Die Wirkung einer schlechten Dämpferleistung auf den Frequenzgang ist in Figur 8 dargestellt.

Beide Extremfälle können über eine geeignete Manipulation des Luftdruckes provoziert werden. Die Luftdruckkontrolle muß vor dem Plausibilitätstest der charakteristischen Frequenzen durchlaufen werden.

Die Parameterschätzung ist ein Verfahren, das auf der Basis von gemessenen Stützpunkten die Parameter eines vorgegebenen komplexen Frequenzganges schätzt. Der komplexe Frequenzgang basiert auf dem einfachen ¼-Fahrzeug-Modell:

$$G = \frac{b_0 + ib_1\omega - b_2\omega^2 - ib_3\omega^3 + b_4\omega^4}{1 + ia_1\omega - a_2\omega^2 - ia_3\omega^3 + a_4\omega^4}$$

beziehungsweise mit den realen Parametern:

$$F_P = \frac{-\, m_S\omega^2 - im_S\,\frac{d}{k}\,\omega^3 + \frac{m_U \cdot m_F}{k}\,\omega^4}{1 + i\,\frac{d}{k}\omega - \left(\frac{m_F}{k} + \frac{m_F}{k_R} + \frac{m_U}{k_R}\right)\omega^2 - im_S\,\frac{d}{k\,k_R}\,\omega^3 + \frac{m_U \cdot m_F}{k \cdot k_R}\,\omega^4}$$

wobei

- $m_F$ gefederte Masse [kg]
- $m_U$ ungefederte Masse [kg]
- $m_S$ statische Gesamtmasse [kg]
- $k$ Federkonstante der Aufhängfeder [N/m]
- $k_R$ Federkonstante des Reifens [N/m]
- $d$ Dämpfungskonstante des Dämpfers [kg/s]
- $\omega$ Kreisfrequenz der Erregerschwingung [1/s]

Grundlage des zu lösenden linearen Gleichungssystems ist eine Verlustfunktion V, die die Abweichung aller Stützpunkte für den zu schätzenden komplexen Frequenzgang berechnet:

$$V = \sum_{\nu=0}^{N} \psi_\nu [R_\nu(1 - a_2\omega^2 + a_4\omega^4) - I_\nu(a_1\omega - a_3\omega^3) - (b_0 - b_2\omega^2 + b_4\omega^4)]^2$$
$$+ \psi_\nu [R_\nu(a_1\omega - a_3\omega^3) + I_\nu(1 - a_2\omega^2 + a_4\omega^4) - (b_1\omega - b_3\omega^3)]^2$$

wobei

- $R_\nu$ gemessener Realanteil des Stützpunktes $\nu$
- $I_\nu$ gemessener Imaginäranteil des Stützpunktes $\nu$
- $\Psi_\nu$ Gewichtsfunktion des Stützpunktes $\nu$
- $N$ Anzahl der Stützpunkte - 1

Diese Verlustfunktion wird nach jedem zu schätzenden Koeffizienten differenziert und Null gesetzt. Das heißt, jeder Koeffizient soll so geschätzt werden, daß der entstehende Verlust ein Minimum durchläuft.

Für neun zu bestimmende Koeffizienten entstehen somit neun lineare Gleichungen, die in einem linearen Gleichungssystem verknüpft werden. Die Koeffizienten $a_1$- $b_5$ werden durch die Lösung dieses Gleichungssystem bestimmt. Die Anwendung dieses Verfahrens ist sehr komlex und ist deshalb zur Parameterbestimmung nicht besonders geeignet. Die absoluten Werte der einzelnen Parameter des Frequenzganges des einfachen ¼-Fahrzeug-Modells differieren sehr stark. Darunter leidet die Genauigkeit der einzelnen Parameter. Die Parameter $b_0$ und $b_1$ sind beim Frequenzgang des einfachen ¼-Fahrzeug-Modells immer Null. Das Parameterschätzverfahren füllt diese Parameter aber zuerst auf und gleicht die Abweichungen mit den höheren Koeffizienten wieder aus. Jeder Stützpunkt wird mit der Funktion $\Psi_\nu$ gewichtet. Das heißt, sein Einfluß auf die Verlustfunktion wird festgelegt. Hierbei ist nicht der Absolutbetrag sondern das Verhältnis der Gewichtsfunktionen der Stützpunkte untereinander relevant. Durch geeignete Definition der Gewichtsfunktion kann die Bandbreite der Lösungen nahezu beliebig variiert werden. Eine eindeutige, optimale und für alle Meßkurven gültige Gewichtsfunktion existiert nicht.

Die Besonderheit des Frequenzganges des einfachen ¼-Fahrzeug-Modells ist der konvergente Verlauf des Amplitudenspektrums gegen die Federkonstante des Reifens $k_R$ bei großen Frequenzen. Diese Asymptote läßt sich nun durch eine modifizierte Form des Parameterschätzverfahrens berechnen. Von den ursprünglich neun zu schätzenden Parametern sind die Parameter $b_0$ und $b_1$ grundsätzlich Null und der Parameter $b_2$ ist die, ebenfalls bekannte statische Masse $m_S$. Das lineare Gleichungssystem reduziert sich somit auf sechs lineare Gleichungen. Bei der Schätzung werden 20 unterschiedliche Gewichtsfunktionen durchlaufen. Für jede Gewichtsfunktion werden dann die theoretischen Stützpunkte berechnet. Die Gewichtsfunktion mit der geringsten mittleren Abweichung in den verwendeten Stützpunkten wird dann verwendet.

Zur Verifikation der geschätzten Federkonstanten-Werte der Reifen $k_R$ wurden die Frequenzgänge des Reifens unter verschiedenen Vorspannungen aufgenommen. Drei Resultate ließen sich aus diesen Messungen ableiten:

Die Federkonstante ist über den gesamten Frequenzbereich von 35Hz bis 1Hz konstant.

Der Wert der Federkonstante stimmt mit dem geschätzten Wert mit einer Genauigkeit von 2% überein.

Die typischen $k_R$-Kennlinien eines Reifens hängen primär ab von dem Reifenluftdruck, der Reifendimension und der Vorspannung, das heißt dem Gewicht, mit dem der Reifen an den Boden gepreßt wird. Nur sekundär sind die herstellerspezifischen Eigenschaften wie Gummimischung, Karkasse oder Profil. Auch die verwendete Felge hat keinen signifikanten Einfluß auf die Federkonstante $k_R$.

Die Federkonstante $k_R$ entspricht dem Kopplungsgrad zwischen der Schwingplatte und dem schwingenden Feder-Dämpfer-System der ungefederten Masse $m_U$. Ist der Kopplungsgrad zu hoch, so wird dem Feder-Dämpfer-System viel Schwingungsenergie zugeführt. Die Energieüberschuß wird dann als mangelnde Dämpferleistung interpretiert. Ist der Kopplungsgrad zu niedrig, so wird dem Feder-Dämpfer-System zuwenig Schwingungsenergie zugeführt. Dieses Energiedefizit wird dann der Dämpferleistung zugeschrieben.

Wie unten aufgeführt, wird diese Fehlbeurteilung bei kleinen Luftdruckabweichungen bezüglich der Dämpferbewertung im Gegensatz zu anderen Methoden mit dem Achs-Dämpfungsgrad gut ausgeglichen.

Die Federkonstante des Reifens $k_R$ eignet sich zur Überprüfung des Reifenluftdruckes. Grundlage des Plausibilitätstest ist die Dimensionsangabe des verwendeten Reifentypen (beispielsweise 225/50 R16). Die Soll-Luftdrücke für einen bestimmten Dimensionstypen variieren beim Einsatz dieses Reifens in verschiedenen Fahrzeugtypen nur unwesentlich und ist dann zumeist mit dem Fahrzeuggewicht gekoppelt. Schwere Automobile implizieren hierbei einen höheren Soll-Luftdruck als leichte Fahrzeuge (Bridgestone - Ratgeber Reifen 1992).

| 225/50 R16 | Soll-Luftdruck VA (bar) | Soll-Luftdruck HA (bar) |
|---|---|---|
| Mercedes 500 | 3,0 | 3,3 |
| Volvo 940 | 2,3 | 2,6 |
| Porsche Carrera | 2,0 | 2,5 |

Für den oben angegebenen Reifentypen 225/50R16 wäre nun eine Minimum-Kurve für den minimalen Wert von 2.0 bar (für Vorderachse Porsche Carrera) und eine Maximum-Kurve für den maximalen Wert von 3.3 bar (für Hinterachse Mercedes 500) in einer Datenbank abgespeichert. Beide Kurven stellen den Verlauf des Federkonstantenwertes über das Vorspanngewicht dar (Figur 9). Die beiden extremen Arbeitspunkte werden nun durch die Soll-$k_R$-Kurve miteinander verbunden. Alle anderen Fahrzeugtypen, die mit dieser Bereifung ausgestattet sind, liegen dann mehr oder weniger auf dieser Soll-$k_R$-Kurve. Für eine feste Vorspannung verhält sich die Luftdruckänderung linear zur Änderung der Federkonstante $k_R$. Somit kann dann ein Toleranzband von beispielsweise 0.5 bar definiert werden. Liegt der geschätzte $k_R$-Wert außerhalb der vorgegebenen Toleranzbandes, so wird die Messung nicht ausgewertet. Eine Aufforderung zur Überprüfung des Luftdruckes wird mit ausgegeben.

Figur 10 zeigt die Meßergebnisse des Reifentyps 155/70 R13 von Uniroyal am Reifenprüfstand. Bei Meßreihen mit dem Ford Escort wurde die Beladung und der Luftdruck variiert. Die Plausiblitätstests ergaben keine Fehlbestimmungen.

Versuche, über die Beladung das Endergebnis zu manipulieren werden durch diesen Plausibilitätstest erschwert. Es kann eindeutig zugeordnet werden, ob ein erhöhter Kopplungsgrad durch zu hohen Luftdruck oder zu hohe Beladung erzwungen wurde. Ein höheres Gewicht impliziert eine höhere Vorspannung und somit einen höheren Kopplungsgrad bei unverändertem Luftdruck des Reifens.

Der Ist-Verlauf des Amplituden- und des Phasenspektrums entspricht weitgehend dem theoretischen Soll-Verlauf des einfachen ¼-Fahrzeug-Modells. Nur im Frequenzbereich des Haftreibungsabrisses kann das einfache ¼-Fahrzeug-Modell nicht angewendet werden. Da aber beim Erreichen des Haftreibungsabrisses die Messung in jedem Fall beendet wird, kann diese vernachlässigt werden. Jede andere Abweichung des Spektrums basiert entweder auf einem defekten Fahrwerk oder einer außergewöhnlichen Fahrwerkseigenschaft. Der sogenannte Signalformtest soll Unregelmäßigkeiten des Amplitudenspektrums klassifizieren.

In der Figur 11 ist ein einwandfreies Amplituden- und Phasenspektrum dargestellt. Im Resonanzpunkt durchläuft der Amplitudengang stetig und eindeutig sein Maximum. Der Phasengang konvergiert stetig mit steigender Erregerfrequenz gegen Null.

In der Figur 12 sind die Spektren eines manipulierten Dämpfers dargestellt. Das Resonanzmaximum des Amplitdenspektrums ist nicht eindeutig. Das Phasenspektrum ist in diesem Bereich nahezu ungestört. Dies führt zu einer Spreizung der fehlbestimmten charakteristischen Frequenzen $f_2$ und $f_3$. Der resultierende Achs-Dämpfungsgrad liegt dann deutlich über dem Grenzwert oder außerhalb des berechenbaren Wertebereiches. Dieser Fall darf nicht mehr der Berechnung zugeführt werden.

Aufgrund eines Sturzwinkels durchlaufen einige Fahrwerke mehrere Resonanzpunkte in denen das Fahrzeug starke horizontale Schwingungen ausführt. Ein solches Spektrum ist in der Figur 13 dargestellt. In diesen Fällen könnte dieses sogenannte Spurflattern auch als defekter Dämpfer interpretiert werden. Der Unterschied zum Amplitudenverlauf eines mechanisch defekten Dämpfers liegt jedoch in der Tatsache, daß zwischen den charakteristischen Frequenzen $f_2$ und $f_3$ kein lokales Minimum durchlaufen wird. Solche Meßreihen werden zur weiteren Parameterberechnung freigegeben.

Die Parameterberechnung basiert auf dem komplexen Frequenzgang des einfachen ¼-Fahrzeug-Modells:

$$F_p = \frac{-m_S\omega^2 - im_S\frac{d}{k}\omega^3 + \frac{m_U \cdot m_F}{k}\omega^4}{1 + i\frac{d}{k}\omega - \left(\frac{m_F}{k} + \frac{m_F}{k_R} + \frac{m_U}{k_R}\right)\omega^2 - im_S\frac{d}{k\,k_R}\omega^3 + \frac{m_U \cdot m_F}{k\,k_R}\omega^4}$$

wobei

$m_F$ gefederte Masse [kg]
$m_U$ ungefederte Masse [kg]
$m_S$ statische Gesamtmasse [kg]
$k$ Federkonstante der Aufhängfeder [N/m]
$k_R$ Federkonstante des Reifens [N/m]
$d$ Dämpfungskonstante des Dämpfers [kg/s]
$\omega$ Kreisfrequenz der Erregerschwingung [1/s]

Alle folgenden Berechnungsschritte wurden mit einer Computer-Algebra durchgeführt:

- Berechne aus dem komplexen Frequenzgang $F_P$ den Amplitudengang A.
- Zur Berechnung der charakteristischen Gleichung für den oberen Resonanzpunkt $f_3$ differenziere den Amplitudengang A und setze A' gleich Null.
- Löse diese Gleichung nach der Dämpfüngskonstanten d auf und es gilt:

$$d_3 = g(\omega_{3,}, m_S, m_U, k_R, k).,$$

- Zur Berechnung der charakteristischen Gleichung für die $\pi/2$-Frequenz $f_2$ berechne den Realteil aus A und setze $A_{re}$ gleich Null.
- Löse diese Gleichung nach der Dämpfungskonstanten d auf und es gilt

$$d_2 = h(\omega_{2,}, m_S, m_U, k_R, k),$$

In beiden Gleichungen g und h werden die Erregerfrequenzen $\omega$ und das statische Gewicht $m_S$ gemessen. Die Federkonstante der Reifens $k_R$ wird durch das Parameterschätzverfahren bestimmt und ist somit auch bekannt.

Nun besitzt man zwei Gleichungen für $d_2$ und $d_3$ mit zwei Unbekannten $m_U$ und $k_R$. Diese dürfen aber nicht direkt verknüpft werden, da die Dämpfungskonstante frequenzabhängig ist. Die Verknüpfung erfolgt im Amplitudengang A. Generiere die Amplitudengänge $A_2$ (ersetze d durch $d_2$) und $A_3$ (ersetze d durch $d_3$). Da die Amplituden in beiden Frequenzpunkten ebenfalls gemessen werden, existieren weiterhin zwei Gleichungen mit zwei Unbekannten $m_U$ und k, die nun verknüpft werden können. Nun lassen sich alle Parameter berechnen.

Die Berechnung der Parameter lassen sich also auf mehrere Nullstellenprobleme bis zur vierten Ordnung zurückführen. Lassen sich die Parameter nicht berechnen (beispielsweise keine reelle Nullstelle oder Division durch Null), ist eine Meßreihe anzunehmen, die einer Extremsituation entspricht. In solchen Fällen wird auf eine Auswertung auf Basis des Achs-Dämpfungsgrades verzichtet. Eine Extremsituation mit einem gültigen Signalverlauf und vorhandenen charakteristischen Frequenzen kann entweder auf ein sehr gutes oder ein sehr schlechtes Fahrwerk schließen. Für die Klassifizierung wird in diesem Spezialfall auf den Bodenaufstandswert zurückgegriffen. Ist dieser Wert relativ groß dann ist das Fahrwerk in Ordnung. Ist der Wert dagegen sehr klein, dann wird das Fahrwerk als schlecht klassifiziert und eine Umtauschempfehlung des Dämpfers wird ausgegeben. Ist der Bodenaufstandswert nicht klassifizierbar, so wird eine Fehlermeldung ausgegeben.

In den bisherigen Messungen ließen sich grundsätzlich alle Meßreihen berechnen, deren Signalverläufe und charakteristischen Frequenzen einwandfrei waren. Sollte der oben erwähnte Fehler auf einer außergewöhnlichen Meßsituation beruhen, so müssen die Originalmeßwerte an den Softwarepartner zu eingehenden Untersuchungen eingesendet werden. Die entsprechende Datensicherung erfolgt im Fehlerfall automatisch.

Die Ergebnisse der Parameterberechnung können nicht direkt für eine Bewertung des vermessenen Fahrwerkes verwendet werden. Gründe hierfür sind die Wahl des korrekten Berechnungsmodells, da das einfache ¼-Fahrzeug-Modell nicht zwischen der äußeren Reibung der Aufhängungsteile und der inneren Reibung der Dämpferflüssigkeit differenziert, und die mangelnde Vergleichbarkeit der Parameter im eingebauten Zustand mit gemessenen Parametern im ausgebauten Zustand. Die Dynamik beider Prüfvarianten ist sehr unterschiedlich. Beispielsweise bei der Aufnahme der Glockenkurven wird üblicherweise mit großen Hüben bei relativ niedrigen Erregerfrequenzen gemessen, während die Schwingplatte nur sehr kleine Hübe bei hohen Frequenzen am Dämpfer impliziert. Soll ein Fahrwerk über die berechneten Parameter beurteilt werden, dann müßten die Vergleichswerte für dieses Fahrwerk in einer Datenbank gehalten werden. Bei der großen Anzahl von Fahrwerkstypen und eingebauten Dämpfern ist die Realisierung einer anwenderfreundlichen Datenbank für den Werkstatteinsatz nicht möglich.

Ziel ist deshalb die Bewertung der kompletten Fahrwerkssituation, die nicht an den Fahrzeugtyp gebunden ist und die Manipulationsversuche aufdeckt oder in der Bewertung berücksichtigt. Ergebnis der Bewertung soll eine Austauschempfehlung für den eingebauten Dämpfer sein.

Dieses Ziel erfolgt über den sogenannte Achs-Dämpfungsgrad:

$$Achs_{DG} = \frac{d}{2 * \sqrt{(k + k_R)^* m_U}}$$

Die hierbei verwendeten Parameter sind Resultat der sogenannten Modelliteration.

Die Ergebnisse der Parameterberechnung können aus den bekannten Gründen nicht direkt für die Ermittlung des Achs-Dämpfungsgrades verwendet werden. Dies wird ersichtlich, wenn die Lösungsmenge in einem $m_U$-k-Gebiet dargestellt wird. Theoretisch müssen sich alle Lösungskurven der verschiedenen charakteristischen Frequenzen in einem einzigen ($m_U$,k)-Punkt schneiden, wie in Figur 14 dargestellt ist.

Tatsächlich existiert kein eindeutiger Lösungspunkt ($m_U$,k). In der Praxis wird durch die drei Lösungskurven ein Lösungsgebiet definiert, wie in Figur 15 dargestellt ist. Wie zu erkennen ist, werden die Lösungsgeraden für $f_2$ und $f_3$ auseinandergespreizt und die Lösungsgerade $f_1$ liegt deutlich über dem Soll-Lösungspunkt ($m_U$,k). Unter Zuhilfenahme der Computeralgebra kann gezeigt werden, daß hauptsächlich der Einfluß der äußeren Reibung für diese Verschiebungen verantwortlich ist. Der Lösungsbereich für die ungefederte Masse kann jedoch auf einen Bereich <10 kg eingeschränkt werden.

Bei Fahrzeugen, die mit unterschiedlich guten Dämpfern vermessen wurden, stellte sich außerdem eine Verschiebung des gesamten Lösungsbereich in der $m_U$-Dimension ein. Bei Fahrwerken mit großer anzunehmender äußerer Reibung ist dieser Effekt besonders deutlich.

| Ungefederte Masse $M_U$ (kg) bei unterschiedlichen Dämpferleistungen | gut | mittel | schlecht |
|---|---|---|---|
| BMW 740i | 32,0 | 39,5 | 46,0 |
| Ford Escord | 29,0 | 30,5 | 29,5 |

Für die Berechnung des korrekten Lösungspunktes wird eine sogenannte Modelliteration durchlaufen. Ausgehend von den originalen Meßwerten werden iterativ die Meßwerte verändert um die Effekte der äußeren Reibung zu eliminieren. Der Algortihmus terminiert, wenn sich alle drei Lösungsgeraden genau in einem Punkt schneiden und speziell die $f_1$-Iterationsgerade gegen die f1-Soll-Lösungsgerade konvergiert.

Die Modelliteration ist in dieser Form schwer zu handhaben. Die resultierenden Parameter deckten sich zum großen Teil genau mit den Herstellerangaben. Problemparameter ist die Federkonstante k, die bei einigen Fahrzeugtypen bis zu relativ 50% schwanken kann. Die Modelliteration kann Berechnungszeiten von bis zu einer Minute haben. Um die sicher terminierende Modelliteration anwenden zu können ist die Vermessung der Resonanzfrequenz $f_1$ der gefederten Masse notwendig. Der Zeitaufwand für die Messung würde dann verdoppelt werden.

Das Resonanzmaximum der Resonanzfrequenz der gefederten Masse ist bei einigen Fahrzeugtypen nicht ausgeprägt, und somit müssen Suchalgorithmen aktiviert werden, die aufgrund von empirisch bestimmten Zusammenhängen die Resonanzfrequenz $f_1$ ermitteln.

Der Aufwand zur Bestimmung der Federkonstanten k steht in keinem Verhältnis zu seinem Einfluß auf das Endresultat. Weder die Dämpfungskonstante d noch der Achs-Dämpfungsgrad werden durch die schwankende beziehungsweise fehlende Federkonstante k signifikant beeinflußt. Als Beispiel sind in der einige Werte des BMW 3.28 i aufgeführt:

| BMW 318i Vorderachse rechts Parameter | Sollwerte | Meßreihe 1 | Meßreihe 2 |
|---|---|---|---|
| Ungefederte Masse $m_U$ (kg) | ca. 40 | 40,7 | 41,5 |
| Aufhängfeder k (N/mm) | 19,2 | 18,8 | 24,6 |
| Dämpfungskonstante d (kg/s) | ? | 1202 | 1216 |
| Achs-Dämpfungsgrad ohne k (%) | ? | 13,2 | 13,3 |
| Achs-Dämpfungsgrad inkl. k (%) | ? | 13,0 | 12,9 |

Aufgrund des geringen Einflusses auf den Achs-Dämpfungsgrad und der massiven Nachteile bei der Bestimmung der Federkonstante k wird diese vernachlässigt, sodaß sich als Achs-Dämpfungsgrad ergibt:

$$Achs_{DG} = \frac{d}{2^* \sqrt{k_R * m_U}}$$

Die Modelliteration läßt sich um ein vielfaches vereinfachen und somit zeitlich beschleunigen. Die Vereinfachung ergibt sich daraus, daß die Lösungskurve für die charakteristische Resonanzfrequenz $f_1$ durch eine konstante Gerade bei k=10000N/m ersetzt wird (Figur 16).

Die dazugehörige ungefederte Masse wird durch den üblichen Iterationsalgorithmus berechnet. Dieser Algorithmus liefert den Lösungspunkt($m_u$,10000) mit der geringsten Meßwertabweichung und der besten Überdeckung der Dämpfungskonstanten der verbleibenden Lösungskurven $f_3$.

Folgende Aussagen lassen sich aus dem Achs-Dämpfungsgrad für eine Bewertung des Fahrwerkes ableiten. Es ergibt sich eine hohe Reproduzierbarkeit bei der Bestimmung der Parameter d, $k_R$ und $m_u$. Es gibt keine Bindung an spezielle Fahrzeugtypen. Je größer $k_R$ ist, desto höher ist der Anteil der eingekoppelten Schwingungsenergie in das Feder-Dämpfer-System und desto höher muß die zu erbringende Dämpferleistung sein. Je größer $m_U$ ist, desto höher muß die zu erbringende Dämpferleistung sein.

Zu Vergleichszwecken wurden Fahrzeuge mit manipulierten Dämpfern vermessen. Die Achs-Dämpfungsgrade der defekten Dämpfer wurden dann als Eckdaten zur Bestimmung einer Grenzwertlinie herangezogen. Diese Grenzwertlinie muß die charakteristischen Fahrwerkseigenschaften berücksichtigen, die noch nicht im Achs-Dämpfungsgrad eingebettet sind.

Die Probemessungen haben gezeigt, daß das Masseverhältnis von gefederter zu ungefedeter Masse $m_F/m_U$ diese entscheidende Eigenschaft darstellt. Fahrzeuge mit einem großen Verhältnis $m_F/m_U$ kamen mit wesentlich geringeren Dämpfungsgraden aus, als Fahrzeuge mit relativ kleinen Masseverhältnis, unabhängig vom Gesamtgewicht des Fahrzeuges.

Diese Erkenntnis wurde in einer Grenzwertlinie über das Masseverhältnis in die Auswertung eingebettet. Die Grenzwertlinie sollte hierbei einen hyperbolischen Verlauf besitzen mit einerseits dem minimal vertretbaren Masseverhältnisses als Polstelle und andererseits des minimalen Achs-Dämpfungsgrades als Asymptote, wie in Figur 17 dargestellt ist.

Über die verwendeten Eckdaten wurde durch eine nicht-lineare Regression die Grenzwertlinie explizit dargestellt. Das zu Grunde liegende Regressionsmodell mußte Mitglied der sogenannte Wachstumsmodelle sein. Diese zeichnen sich durch ihren streng monotonen, asymptotischen Verlauf aus, der sich mit den zuvor durchgeführten Beobachtungen deckt. Das Modell mit der besten Überdeckung ist das sogenannte Saturationsmodell. Dieses ermöglicht die Beschreibung der Grenzwertlinie durch die beiden Parameter a und b:

$$Achs_{DGgrenz} = \frac{a * {}^{m_F}/_{m_U}}{b + {}^{m_F}/_{m_U}}$$

wobei

a die Asymptote, das heißt der minimale Achs-Dämpfungsgrad, ist.
b die Polstelle, das heißt das physikalisch minimal vertretbare Massenverhältnis, ist.

In den Figuren 18 und 19 sind die Achs-Dämpfungsgrade verschiedener vermessenen Fahrzeugtypen für die Druck- und die Zugstufe dargestellt. Alle Fahrzeugtypen wurden hierbei bei ihrem Soll-Reifendruck und Leergewicht beziehungsweise einem Fahrer vermessen.

Die Eckdaten der Grenzwertlinie sind der 50%-Dämpfer des BMW 3.28, der 60%-Dämpfer des Ford Escort, das minimale Massenverhältnis von 5 und der minimale Achs-Dämpfungsgrad von 7%. Die neuwertigen Fahrwerks- und Achskonstruktionen werden mit den EUSAMA-Test durchgehend schlecht bewertet, wie aus der folgenden Tabelle zu ersehen ist:

| Fahrwerk | EUSAMA-Wert (%) |
|---|---|
| BMW 3.28i HA | 22 |
| BMW 5.28T HA | 25 |
| Audi A& VA | 37 |
| Audi A6 HA | 32 |
| Passat HA | 39 |
| Golf 3 HA | 35 |

Die Achs-Dämpfungsgrade liegen dagegen deutlich im Bereich der einwandfreien Fahrwerke. Problemfälle sind nur die Hinterachse des BMW 5.28T und die Vorderachse des Audi A6. Beide Fahrwerke haben kleinere Achs-Dämpfungsgrade als beispielsweise der 50%-Dämpfer des BMW 3.28i. Aber beide Massenverhältnisse liegen deutlich über dem des BMW 3.28i und damit deutlich über der Grenzwertlinie.

Um weitere Meßpunkte unterhalb der Grenzwertlinie zu erhalten wurde die Hinterachse des BMW 5.28 ohne Dämpfer vermessen. Das Fahrzeug konnte aber nur mit Reifenunterdruck von -0,5 bar und -1.0 bar vermessen werden, weil bei Normaldruck der Reifen von der Schwingplatte abhob.

Das Problem der Parameterberechnung, bei der die ungefederte Masse $m_U$ je nach Qualität der eingebauten Dämpfer schwankt, wird auch durch die Modelliteration nicht behoben. Aber dies ist beim Einsatz des Massewertes $m_U$ innerhalb des Achs-Dämpfungsgrad eher ein Vorteil, wie sich aus den drei Meßpunkte für den BMW 740i ergibt. Über eine Schnittstelle konnte zwischen den Dämpfereinstellungen hart, mittel oder komfort ausgewählt werden:

Die schlechte Dämpferleistung der Komfortstellung impliziert ein kleines Massenverhältnis und schiebt den Achs-Dämpfungsgrad näher an die Grenzlinie.

Die gute Dämpferleistung der Hartstellung impliziert ein großes Massenverhältnis und schiebt den Achs-Dämpfungsgrad weiter von der Grenzlinie weg. Dieser Effekt tritt verstärkt bei Fahrzeugen mit einer hohen äußeren Reibung auf.

Die stufengetrennte, Fahrzeugtyp übergreifende Bewertung des Fahrwerkes auf der Basis des Achs-Dämpfungsgrades über dem Massenverhältnis ist ein wesentlicher Fortschritt gegenüber der EUSAMA-Methode.

Zur möglichst objektiven Bewertung des Prüfverfahrens müssen zusätzlich die Reaktionen auf Manipulationsversuche des neuen Prüfverfahrens mit den entsprechenden EUSAMA-Werten verglichen werden. Folgende Parameter wurden hierzu manipuliert:

Luftdruck - in festen 0.5 bar-Schritten von 1.0 bar Unterdruck bis 1.0 bar Überdruck, bezogen auf den Solldruckwert;

Beladung - alle Fahrzeuge leer, einige zusätzlich mit Fahrer und ein Fahrzeug in seiner vorgegebenen Konstruktionslage;

Temperatur - zu Beginn der Erwärmungsphase ( im Winter 1996/97) ein Fahrzeug bei 0° Celsius und bei 15° Celsius;

Bereifung - ein Fahrzeug mit drei unterschiedlichen Reifen-Varianten. Einige Fahrzeuge mit einer speziellen Radklammer zur Variation der ungefederten Masse $m_U$.

Die aufgeführten Abbildungen stellen nur die Zugstufenergebnisse dar. Die entsprechenden Werte für die Druckstufe unterscheiden sich kaum von denen der Zugstufe. Die Grenzwertlinien für die Zugstufe sind den Meßpunkten entnommen, die bei Soll-Luftdruck und ohne Beladung (maximal ein Fahrer) aufgenommen wurden (siehe Figur 19).

Die eingeklammerten Werte entsprechen den Bodenaufstandswerten in diesen Meßpunkten. Diese sind notwendig um die Reaktionen des EUSAMA-Verfahrens mit denen des neuen Verfahrens zu vergleichen.

Der Reifenluftdruck ist eines der Hauptprobleme bei der Fahrwerksvermessung. Je nach Intention können die Ergebnisse der Auswertung manipuliert werden. Die Vorkontrolle des Reifenluftdruckes soll Schwankungen gegenüber dem Solldruckwert erkennen und ist der primäre Vorteil des neuen Prüfverfahrens. Bei dem derzeitigen Erfahrungsstand kann davon ausgegangen werden, daß Luftdruckabweichungen von 0.5 bar sicher erkannt werden. Mit weiterem Erfahrungszuwachs könnte eventuell eine Abweichung von 0.25 bar erreicht werden. Engere Abweichungsintervalle sind theoretisch nicht möglich, da die Summe der Abweichungen der Parameterschätzung, der Sollwertvorgabe, und des Temperaturdrifts eine natürliche Untergrenze bilden.

In der Figur 20 sind die Meßpunkte für den Solluftdruck sowie die Meßpunkte für eine Druckabweichung von 0.5 bar aufgenommen. Größere Luftdruckschwankungen sind nicht dargestellt, da diese sicher von der Vorkontrolle herausgefiltert werden. Die Pfeilrichtung stellt die Erhöhung des Luftdruck um 0.5 bar dar.

Folgende Details lassen sich aus der obigen Grafik ableiten. Mit steigendem Reifenluftdruck fällt der Dämpfungsgrad und das Massenverhältnis. Gute Fahrwerke werden durch den Reifenluftdruck stärker beeinflußt als schlechte Fahrwerke. Eine Änderung des Bewertungsstatus tritt nicht auf. Der Einfluß des Reifenluftdruckes auf EUSAMA-Werte ist dagegen bei schlechten Fahrwerken besonders groß so, daß sogar eine Austauschempfehlung manipuliert werden kann. Die EUSAMA-Werte werden durch die Luftdruckschwankung teilweise verdreifacht. Die Variation der Bewertungspunkte ($Achs_{DG}$,$m_F/m_U$) liegt sicher unter 50%.

Der Einfluß des Luftdruckes ist im Ergebnis nicht eliminiert, aber gegenüber der EUSAMA-Methode im Mittel um den Faktor 4 eingeschränkt worden. Grobe Abweichungen zum Solldruck können erkannt werden. Eine Manipulation der Austauschempfehlung über den Luftdruck ist nicht möglich! Die schlechten Fahrwerke variieren bei Luftdruckänderungen sogar nur um ihren, auf den Meßwertfehlern basierenden, Fortpflanzungsfehler.

Der BMW 3.28i wurde in seiner Konstruktionslage, bei einer Zuladung von ca. 230kg, mit einem Fahrer und leer vermessen. Die Differenz zwischen leerem Fahrzeug und Fahrzeug mit Fahrer war so gering, daß sie nicht in die Darstellung aufgenommen wurde:

Folgende Details lassen sich aus der Figur 21 ableiten. Die Achs-Dämpfungsgrade werden durch die Beladung um 2% verringert. Dies steht im Gegensatz zu den EUSAMA-Werten, die durch die Zuladung leicht ansteigen. Die berechnete Werte für die ungefederte Masse $m_U$, ist mit und ohne Beladung nahezu gleich. Durch das zugeladene Gewicht wird dadurch das Massenverhältnis vergrößert und der Bewertungspunkt in den positiven Bereich geschoben.

Die Auswertung reagiert auf die Zuladung eines Fahrzeuges mit der besseren Klassifizierung der Fahrwerkseigenschaften. Die Bewertung dieser Fahrwerkssituation ist grundsätzlich korrekt, aber es besteht keine Möglichkeit die zugeladene Masse von der unbeladenen Fahrzeugmasse zu unterscheiden. Die Reaktion ist gegenüber der EUSAMA-Methode signifikanter.

Eine Manipulation der Austauschempfehlung über die Zuladung ist deshalb bei Fahrwerken in der Umgebung der Grenzwertlinie möglich.

Der Einfluß der Umgebungstemperatur wurde untersucht, indem Messungen bei etwa 0° Celsius und. anschließend Umgebungstemperatur von ca. 15° Celsius durchgeführt wurden. Aus der Figur 22 ergibt sich, daß die Achs-Dämpfungsgrade durch die Abkühlung zunehmen, und daß das Massenverhältnis durch die Abkühlung nicht verändert wird. Die EUSAMA-Werte bleiben nahezu unverändert. Die Manipulation der Austauschempfehlung über die Umgebungstemperatur kann somit nicht ausgeschlossen werden.

Mit der Variation der Bereifung wird die Federkonstante des Reifens und die ungefederte Masse geändert. Zu diesem Punkt wurden zwei Versuchsreihen gefahren:

- Der BMW 3.28i wurde mit drei kompletten Reifensätzen in der Konstruktionslage vermessen.
- Mehrere Fahrzeuge wurde mit einer speziellen Radklammer (5.6 kg) beziehungsweise einer angeschraubten Stahlplatte (14.3 kg) an der Reifenfelge vermessen.

Folgendes läßt sich aus der Figur 23 ableiten. Die Bewertungspunkte ($Achs_{DG}$,$m_F/m_U$) ändern sich in ihrer Klassifizierung nicht. Der leicht verbesserte Achs-Dämpfungsgrad der schwereren Bereifung wird durch das kleiner werdende Massenverhältnis ausgeglichen. Dieser Effekt ist besonders bei kleinen Massenverhältnissen deutlicher ausgeprägt. Die EUSAMA-Werte fallen mit steigender Reifenfederkonstante $k_R$.

Ein Wechsel der Bereifung bewirkt hauptsächlich Änderungen in der Federkonstante $k_R$ und somit im Kopplungsgrad. Der Einfluß auf die ungefederte Masse ist aufgrund der geringen Massenunterschiede im Bereich der Berechnungsgenauigkeit. Der Einfluß der Federkonstante $k_R$ wird im Achs-Dämpfungsgrad berücksichtigt, während die EUSAMA-Methode bei einem solchen Kopplungsanstieg die schlechtere Bodenhaftungswerte liefert. Eine Manipulation der Austauschempfehlung ist nicht gegeben.

Folgendes läßt sich aus der Figur 24 ableiten. Die Achs-Dämpfungsgrade werden wie die Bodenhaftungswerte durch das zusätzlich Gewicht leicht verringert. Das Zusatzgewicht geht voll in die ungefederte Masse ein und verkleinert das Massenverhältnis zum Teil drastisch.

Durch die Manipulation der ungefederten Masse kann ein schlechtes Fahrwerk vorgetäuscht werden. Die EUSAMA-Werte reagieren auf die Manipulation tendentiell gleich, aber nicht so signifikant. Das hat zur Folge, daß eindeutig mangelhafte Fahrwerke noch als gut klassifiziert werden.

Zusammenfassend ergibt sich zu den Manipulationsmöglichkeiten folgendes. Die Manipulation des Luftdrukkes wird durch die Vorkontrolle über $k_R$ und $m_S$ ausgeschlossen. Gegenüber der EUSAMA-Methode ergibt sich der Vorteil, daß eine Aussage über den Luftdruck möglich ist und die Empfindlichkeit des Prüfverfahrens gegenüber dem Luftdruck geringer ist. Die Manipulation über die Temperatur des Stoßdämpfers wird durch die Aufwärmphasen ausgeschlossen. Eine Manipulation über die Beladung setzt eine grobe Manipulation von außen voraus und kann daher ebenfalls ausgeschlossen werden. Im übrigen fließt die Beladung in das Massenverhältnis ein, siehe die oben erwähnten graphischen Darstellung. Eine Manipulation über die Bereifung ist nicht möglich, weil eine entsprechende Kontrolle erfolgt. Gegenüber der EUSAMA-Methode ergibt sich der Vorteil, daß der Einfluß der veränderten Federkonstante herausgerechnet wird.

Eine Manipulation der Masse $m_U$ kann ein schlechteres Fahrwerk vortäuschen, was jedoch eine Grobmanipulation von außen voraussetzt und daher ausgeschlossen werden kann. Gegenüber der EUSAMA-Methode ergibt sich der Vorteil, daß die Zuladung in das Massenverhältnis einfließt und damit in das Prüfverfahren eingebettet wird. Die Figur 25 zeigt zusammenfassend die Verschiebungsrichtungen der Einflußparameter in dem Gebiet Achs-Dämpfungsgrad zu $mF/m_U$. Manipulationen werden somit entweder ausgeschlossen oder sie gehen nicht in signifikanter Weise in die Meßergebnisse ein.

**Patentansprüche**

1. Verfahren zum Prüfen von am Fahrzeug eingebauten Stoßdämpfern, indem von einer Schwingplatte, auf der das Kraftfahrzeug mit einem Rad steht und die mit einer geeigneten Amplitude und variabler Frequenz in vertikaler Richtung hin- und herbewegbar ist, eine Schwingung auf das Rad ausgeübt wird, wobei die Dämpfung des Stoßdämpfers aus der Kraftantwort des Fahrwerkes auf die Schwingungen der Schwingplatte und der relativen Phasenfunktion zwischen der von der Schwingplatte ausgeübten Kraft und der Bewegung der Schwingplatte erhalten wird, **dadurch gekennzeichnet, daß** das Meßsignal, das den zeitlichen Verlauf der Kraftantwort bei einer Zielfrequenz darstellt, durch eine Zug-Druckstufen-Trennung in ein Druckstufensignal, welches für die Druckstufe des Stoßdämpfers charakteristisch ist, und ein Zugstufensignal aufgetrennt wird, welches für die Zugstufe des Stoßdämpfers charakteristisch ist, und daß das Druckstufensignal und das Zugstufensignal getrennt der weiteren Verarbeitung zugeführt werden.

2. Verfahren nach Anspruch 1, **dadurch gekennzeichnet, daß** die Zug-Druckstufen-Trennung aufgrund einer Frequenztrennung durchgeführt wird, wobei die Grundfrequenz erhalten bleibt und die Meßwerte während der Zeitdauer $\pi/2$ der positiven Halbwelle der Druckstufe und die Meßwerte der negativen Halbwelle während der Dauer $\pi/2$ der Zugstufe zugeordnet werden.

3. Verfahren nach Anspruch 1, **dadurch gekennzeichnet, daß** die Zug-Druckstufen-Trennung aufgrund der Amplitudentrennung durchgeführt wird, wobei die höhere Grundfrequenz der Druckstufe und die niedrigere Frequenz der Zugstufe für die Berechnung der Amplitude dadurch berücksichtigt wird, daß die schmalere, positive Druckstufenhalbwelle um $\delta\varphi$ nach rechts verschoben wird, während die breitere, negative Zugstufenhalbwelle um $\delta\varphi$ nach links verschoben wird.

4. Verfahren nach Anspruch 2, **dadurch gekennzeichnet, daß** die durch die Frequenztrennung erhaltenen Signale einer digitalen Filterung, vorzugsweise einer Fourier-Transformation und besonders bevorzug einer Fast-Fourier-Transformation, unterworfen werden.

5. Verfahren nach Anspruch 3, **dadurch gekennzeichnet, daß** die durch die Amplitudentrennung erhaltenen Signale einer digitalen Filterung, vorzugsweise einer Fourier-Transformation und besonders bevorzug einer Fast-Fourier-Transformation, unterworfen und die Phasenverschiebungen $\delta\varphi$ addiert werden.

6. Verfahren nach Anspruch 4 oder 5, **dadurch gekennzeichnet, daß** bei der Fast-Fourier-Transformation nur die Grundschwingung herausgefiltert wird.

7. Verfahren nach einem der vorangegangenen Ansprüche, **dadurch gekennzeichnet, daß** nach der digitalen Filterung eine Gütebeurteilung des verarbeiteten Signales aus Sinustreue durchgeführt wird, wobei für jeden gemessenen Wert die relative Abweichung zum Sinussignal, das den ideal gefilterten Wert darstellt, berechnet, die Quersumme aller Abweichungen gebildet und Meßpunkte verworfen werden, deren mittlere Abweichung von dem ideal gefilterten Wert einen vorgegebenen Wert, vorzugsweise 5 %, übersteigt.

8. Verfahren nach einem der vorhergehenden Ansprüche, **dadurch gekennzeichnet, daß** die Bodenhaftung, d. h. der Kontakt des Rades mit der Schwingplatte überprüft wird, und daß bei einer Bodenhaftung kleiner als einem vorgegebenen Wert, vorzugsweise 10 %, die Messung abgebrochen wird.

9. Verfahren nach einem der vorhergehenden Ansprüche, **dadurch gekennzeichnet, daß** drei komplette Umläufe gemessen werden, wobei n Meßwerte, vorzugsweise 256 Meßwerte, pro Umdrehung aufgenommen werden, und daß mehrere Umdrehungen, vorzugsweise drei Umdrehungen, aufgenommen und einer Mittelwertbildung unterworfen werden.

10. Verfahren nach einem der vorhergehenden Ansprüche, **dadurch gekennzeichnet, daß** der Einfluß der Schwingplatte auf das Meßergebnis kompensiert wird, indem bei einem dynamischen Kalibrierdurchlauf der Frequenzgang der Schwingplatte aufgenommen und das Amplitudenspektrum durch einen Parabelast interpoliert wird.

11. Verfahren nach einem der vorhergehenden Ansprüche, **dadurch gekennzeichnet, daß** mit der Meßwertaufnahme erst dann begonnen wird, wenn nach einem Anfahren eines Frequenzpunktes die Frequenzschwankungen eine vorgegebene Toleranz nicht mehr überschreiten.

12. Verfahren nach einem der vorhergehenden Ansprüche, **dadurch gekennzeichnet, daß** Frequenzpunkte, bei denen sich die Frequenzschwankungen nicht stabilisieren lassen, verworfen werden.

13. Verfahren nach einem der vorhergehenden Ansprüche, **dadurch gekennzeichnet, daß** vor den eigentlichen Meßlauf eine Erwärmungsphase für den Stoßdämpfer vorgesehen wird, um den Stoßdämpfer bei der Messung auf eine vorbestimmte Temperatur zu bringen.

14. Verfahren nach Anspruch 13, **dadurch gekennzeichnet, daß in der** Erwärmungsphase der Stoßdämpfer in der Umgebung der oberen Resonanzfrequenz bewegt wird, um die Dämpfungsflüssigkeit zu erwärmen.

15. Verfahren nach einem der vorhergehenden Ansprüche, **dadurch gekennzeichnet, daß** bei der Aufnahme der Stützpunkte für die Parameterschätzung ein Gütetest durchgeführt wird, wobei die Abweichung des tatsächlichen Signals zum geforderten sinusförmigen Signal festgestellt wird und, wenn die Abweichung zu groß ist, der Meßwert verworfen wird und die nächste Zielfrequenz dann um einen vorgegebenen Wert, beispielsweise 1Hz, unter der aktuellen Frequenz liegt, während, wenn die Güte des Signals ausreichend ist, in kleineren Schritten, beispielsweise 0,5 Hz, weiter abgetastet wird.

16. Verfahren nach einem der vorhergehenden Ansprüche, **dadurch gekennzeichnet, daß,** wenn der Amplitudengang in Druck- und Zugstufenrichtung sein Maximum überschreitet, der dann angenommene Resonanzbereich erneut in kleinen Frequenzschritten, beispielsweise 0,25-Hz Schritten, abgetastet wird, um die tatsächliche Resonanzfrequenz mit der geforderten Auflösung zu erkennen.

17. Verfahren nach einem der vorhergehenden Ansprüche, **dadurch gekennzeichnet, daß,** wenn der Amplitudengang seinen Wendepunkt überschreitet, der dann angenommene Resonanzbereich in kleinen Frequenzschritten, beispielsweise 0,25-Hz Schritten, abgetastet wird, um die tatsächliche Resonanzfrequenz mit der geforderten Auflösung zu erkennen

18. Verfahren nach einem der vorhergehenden Ansprüche, **dadurch gekennzeichnet, daß** zur Aufnahme der $\pi/2$-Frequenz $f_2$ die Schrittweite der Abtastung auf einen kleinen Wert, beispielsweise 0,25 Hz, herabgesetzt wird, wenn ein vorgegebener Phasenwert, beispielsweise 1,2 rad, erreicht wird, und daß die Schrittweite auf einen kleineren Wert, beispielsweise 0,1 Hz, reduziert wird, wenn der Phasenwert einen größeren Wert, beispielsweise 1,4 rad, erreicht.

19. Verfahren nach einem der vorhergehenden Ansprüche, **dadurch gekennzeichnet, daß** die derart aufbereiteten Signale einer Auswertung unterworfen werden, um eine Qualitätsbeurteilung des eingebauten Stoßdämpfers durchzuführen und vorzugsweise eine Austauschempfehlung zu geben.

20. Verfahren nach Anspruch 19, **dadurch gekennzeichnet, daß** als Bewertungsgrundlage für die Qualität des eingebauten Stoßdämpfers der Achs-Dämpfungsgrad in Bezug auf den Quotienten der gefederten Masse zu der ungefederten Masse berechnet wird, wobei die Meßwerte des Achs-Dämpfungsgrades zu einer Kennlinie eines Grenzwertdämpfungsgrades in Beziehung gesetzt werden, die den Bereich nicht-akteptabler Achs-Dämpfungsgrade begrenzt.

**21.** Verfahren nach einem der vorhergehenden Ansprüche, **dadurch gekennzeichnet, daß** vor der eigentlichen Auswertung die Bodenhaftung des Fahrzeuges während der Messung überprüft wird, und daß, wenn die Bodenhaftung einen vorgegebenen Wert unterschreitet, die Auswertung beendet und die Stoßdämpfer als ungenügend klassifiziert wird.

**22.** Verfahren nach Anspruch 1 und 20, **dadurch gekennzeichnet, daß** die Druck- und Zugstufe getrennt bezüglich des Achs-Dämpfungsgrades bewertet werden.

**23.** Verfahren nach einem der vorhergehenden Ansprüche, **dadurch gekennzeichnet, daß** zur Extraktion der charakteristischen Frequenz die gemessenen Amplituden- und Phasenspektren bereinigt werden, indem der Kurvenabschnitt des Phasenverlaufs durch ein Polynom interpoliert wird.

**24.** Verfahren nach Anspruch 23, **dadurch gekennzeichnet, daß** die Stützpunkte für die Interpolation ab der Resonanzfrequenz beginnen und beim lokalen Maximum des Phasengangs enden.

**25.** Verfahren nach Anspruch 23, **dadurch gekennzeichnet, daß** die Frequenzen $f_2$ und $f_3$ einem Plausibilitätstest unterzogen werden, wobei der Stoßdämpfer als gut klassifiziert wird, wenn die $\pi/2$-Frequenz $f_2$ nicht existiert, und als schlecht klassifiziert wird, wenn die $\pi/2$-Frequenz $f_2$ größer oder gleich der Resonanzfrequenz $f_3$ ist.

**26.** Verfahren nach Anspruch 20 bis 25, **dadurch gekennzeichnet, daß** eine Parameterberechnung basierend auf dem komplexen Frequenzgang des einfachen ¼-Fahrzeug-Modells:

$$F_P = \frac{-m_S\omega^2 - im_S\frac{d}{k}\omega^3 + \frac{m_U \cdot m_F}{k}\omega^4}{1 + i\frac{d}{k}\omega - \left(\frac{m_F}{k} + \frac{m_F}{k_R} + \frac{m_U}{k_R}\right)\omega^2 - im_S\frac{d}{k \cdot k_R}\omega^3 + \frac{m_U \cdot m_F}{k \cdot k_R}\omega^4}$$

durchgeführt wird, wobei

| | |
|---|---|
| $m_F$ | gefederte Masse [kg] |
| $m_U$ | ungefederte Masse [kg] |
| $m_S$ | statische Gesamtmasse [kg] |
| k | Federkonstante der Aufhängfeder [N/m] |
| $k_R$ | Federkonstante des Reifens [N/m] |
| d | Dämpfungskonstante des Dämpfers [kg/s] |
| $\omega$ | Kreisfrequenz der Erregerschwingung [1/s] |

und daß aus den Parametern der Achs-Dämpfungsgrad:

$$Achs_{DG} = \frac{d}{2^* \sqrt{k^* k_R{}^* m_U}}$$

bestimmt wird, wobei die hierbei verwendeten Parameter ein Resultat der Modelliteration sind.

**27.** Verfahren nach Anspruch 26, **dadurch gekennzeichnet, daß zur** Parameterschätzung des Wertes $k_R$ eine Verlustfunktion:

$$V = \sum_{\nu=0}^{N} \psi_\nu [R_\nu(1 - a_2\omega^2 + a_4\omega^4) - I_\nu(a_1\omega - a_3\omega^3) - (b_0 - b_2\omega^2 + b_4\omega^4)]^2$$
$$+ \psi_\nu [R_\nu(a_1\omega - a_3\omega^3) + I_\nu(1 - a_2\omega^2 + a_4\omega^4) - (b_1\omega - b_3\omega^3)]^2$$

verwendet wird, die die Abweichung aller Stützpunkte für den zu schätzenden komplexen Frequenzgang berechnet, wobei

$R_\nu$ gemessener Realanteil des Stützpunktes $\nu$
$I_\nu$ gemessener Imaginäranteil des Stützpunktes $\nu$
$\Psi_\nu$ Gewichtsfunktion des Stützpunktes $\nu$
N Anzahl der Stützpunkte - 1

gilt und die Verlustfunktion nach jedem zu schätzenden Koeffizienten differenziert und Null gesetzt wird, wobei die Asymptote des konvergenten Verlaufs des Amplitudenspektrums gegen die Federkonstante des Reifens $k_R$ bei großen Frequenzen sich durch eine modifizierte Form des Parameterschätzverfahrens berechnen läßt, bei der von den ursprünglich neun zu schätzenden Parametern die Parameter $b_0$ und $b_1$ grundsätzlich Null sind und der Parameter $b_2$ die ebenfalls bekannte statische Masse $m_S$ ist, sodaß das lineare Gleichungssystem sich somit auf sechs lineare Gleichungen reduziert.

**28.** Verfahren nach Anspruch 27, **dadurch gekennzeichnet, daß** bei der Schätzung eine Vielzahl, beispielsweise 20, unterschiedliche Gewichtsfunktionen durchlaufen werden, daß für jede Gewichtsfunktion dann die theoretischen Stützpunkte berechnet werden und daß dann die Gewichtsfunktion mit der geringsten mittleren Abweichung in den verwendeten Stützpunkten verwendet wird.

**29.** Verfahren nach Anspruch 27, **dadurch gekennzeichnet, daß** nach der Parameterschätzung des Parameters $k_R$ dieser Wert in dem $k_R$- mS-Gebiet mit einer Soll-$k_R$-Kurve verglichen und die Messung nicht ausgewertet wird, wenn der geschätzte $k_R$-Wert außerhalb eines vorgegebenen Toleranzbandes liegt.

**30.** Verfahren nach Anspruch 27, **dadurch gekennzeichnet, daß** die Signalform des Frequenzganges überprüft wird, und daß Messungen, die für einen Haftreibungsabriß charakteristisch sind, und Messungen, die einen Frequenzgang mit kein eindeutiges Resonanzmaximum des Amplitudenspektrums aufweisen, verworfen werden.

**31.** Verfahren nach Anspruch 27, **dadurch gekennzeichnet, daß** ein Frequenzgang, der zwischen den charakteristischen Frequenzen $f_2$ und $f_3$ kein lokales Minimum aufweist, zur weiteren Parameterberechnung freigegeben wird.

**32.** Verfahren nach Anspruch 26, **dadurch gekennzeichnet, daß** zur Parameterberechnung folgende Berechnungsschritte durchgeführt werden:

- berechne aus dem komplexen Frequenzgang $F_P$ den Amplitudengang A;
- zur Berechnung der charakteristischen Gleichung für den oberen Resonanzpunkt $f_3$ differenziere den Amplitudengang A und setze A' gleich Null;
- löse diese Gleichung nach der Dämpfungskonstanten d auf und es gilt:

$$d_3 = g(\omega_{3,}, m_S, m_U, k_R, k).,$$

- zur Berechnung der charakteristischen Gleichung fiir die $\pi/2$-Frequenz $f_2$ berechne den Realteil aus A und setze $A_{re}$ gleich Null;
- löse diese Gleichung nach der Dämpfungskonstanten d auf und es gilt:

$$d_2 = h(\omega_{2,}, m_S, m_U, k_R, k);$$

  wobei
  in beiden Gleichungen g und h die Erregerfrequenzen $\omega$ und das statische Gewicht $m_S$ gemessen werden, die Federkonstante der Reifens $k_R$ aus dem Parameterschätzverfahren bekannt ist, sodaß zwei Gleichungen für $d_2$ und $d_3$ mit zwei Unbekannten $m_U$ und $k_R$. verbleiben;
- generiere die Amplitudengänge $A_2$, wobei d durch $d_2$ ersetzt wird, und $A_3$, wobei d durch $d_3$ ersetzt wird, wobei weiterhin zwei Gleichungen mit zwei Unbekannten $m_U$ und k erhalten werden, die zur Berechnung der Parameter verknüpft werden.

**33.** Verfahren nach Anspruch 26, **dadurch gekennzeichnet, daß** aufgrund des geringen Einflusses der Federkonstante k auf den Achs-Dämpfungsgrad die Federkonstante k vernachlässigt wird, sodaß sich als Achs-Dämpfungsgrad ergibt:

$$Achs_{DG} = \frac{d}{2 * \sqrt{k_R * m_U}}$$

wobei die Modelliteration sich stark vereinfachen und somit zeitlich beschleunigen läßt, da die Lösungskurve für die charakteristische Resonanzfrequenz $f_1$ durch eine konstante Gerade bei k=10000N/m ersetzt wird, wobei die dazugehörige ungefederte Masse durch den üblichen Iterationsalgorithmus berechnet wird, der den Lösungspunkt ($m_u$,10000) mit der geringsten Meßwertabweichung und der besten Überdeckung der Dämpfungskonstanten der verbleibenden Lösungskurven $f_3$ liefert.

**34.** Verfahren nach Anspruch 26, **dadurch gekennzeichnet, daß,** wenn die Parameter nicht berechenbar sind, die Bodenhaftung überprüft wird, und daß, wenn eine große Bodenhaftung festgestellt wird, der Dämpfer als gut klassifiziert wird, während in dem anderen Fall die Auswertung beendet und der Dämpfer als ungenügend klassifiziert wird.

**35.** Verfahren nach Anspruch 26, **dadurch gekennzeichnet, daß** zur Bestimmung einer Grenzwertlinie Fahrzeuge mit manipulierten Dämpfern vermessen wurden, wobei die Achs-Dämpfungsgrade der defekten Dämpfer als Eckdaten herangezogen wurden.

**36.** Verfahren nach Anspruch 32, **dadurch gekennzeichnet, daß** die Grenzwertlinie einen hyperbolischen Verlauf besitzt mit einerseits dem minimal vertretbaren Masseverhältniß als Polstelle und andererseits dem minimalen Achs-Dämpfungsgrad als Asymptote.

**37.** Verfahren nach Anspruch 32 oder 33, **dadurch gekennzeichnet, daß** die Grenzwertlinie durch eine nicht-lineare Regression über die verwendeten Eckdaten dargestellt wird, wobei als Regressionsmodell ein Wachstumsmodell verwendet wird, das einen streng monotonen, asymptotischen Verlauf hat und sich mit den zuvor durchgeführten Messungen deckt.

**38.** Verfahren nach Anspruch 37, **dadurch gekennzeichnet, daß** als Modell das sogenannte Saturationsmodell verwendet wird, wobei die Grenzwertlinie durch die beiden Parameter a und b zu beschreiben ist:

$$Achs_{DGgrenz} = \frac{a * {}^{m_F}/_{m_U}}{b + {}^{m_F}/_{m_U}}$$

wobei

a die Asymptote, das heißt der minimale Achs-Dämpfungsgrad, ist.
b die Polstelle, das heißt das physikalisch minimal vertretbare Massenverhältnis, ist.

**39.** Verfahren nach Anspruch 35, **dadurch gekennzeichnet, daß** nach der Berechnung des Achs-Dämpfungsgrades und dessen Einordnung in das Diagramm von Achs-Dämpfungsgrad zu dem Quotienten der gefederter Masse zu der ungefederten Masse eine Empfehlung bezüglich der Notwendigkeit eines Austausches des Stoßdämpfers gegeben wird.

**40.** Verfahren nach einem der vorhergehenden Ansprüche, **dadurch gekennzeichnet, daß** bei der Aufnahme des Frequenzganges folgende Schritte in der genannten Reihenfolge durchgeführt werden:

- Messung des statischen Gewichts;
- Anfahren der Startfrequenz von beispielsweise 10 Hz;
- Durchführung einer Erwärmungsphase des Stoßdämpfers;
- Hochfahren der Erregerschwingung der Schwingplatte auf die Maximalfrequenz von beispielsweise 35 Hz;
- Aufnehmen der Stützpunkte für die Parameterschätzung;
- Aufnehmen der Resonanzfrequenz $f_3$;

- Aufnehmen der $\pi/2$ Frequenz $f_2$ und
- Übersenden der Daten an die Auswertung.

**41.** Verfahren nach einem der vorhergehenden Ansprüche, **dadurch gekennzeichnet, daß** zum Aufnehmen der Frequenzpunkte folgende Schritte in der angegebenen Reihenfolge durchgeführt werden:

- Anfahren der Zielfrequenz;
- Überprüfung, ob die Frequenz sich stabilisiert;
- Aufnehmen der Meßwerte;
- Trennung von Zug- und Druckstufensignal;
- Fourier-Transformation der getrennten Signale;
- Gütebewertung der Signale;
- Überprüfung der Bodenhaftung;
- Überprüfung, ob die Messungen über eine gegebene Anzahl von Umdrehungen aufgenommen worden sind;
- Überprüfung, ob die Messungen bei wenigstens einem Teil der Umdrehungen die Gütenorm erfüllen;
- Mittelwertbildung der als gut klassifizierten Messungen;
- Kompensation des Einflusses der Schwingplatte.

**42.** Verfahren nach einem der vorhergehenden Ansprüche, **dadurch gekennzeichnet, daß** zur Auswertung der Meßergebnisse folgende Schritte in der angegebenen Reihenfolge durchgeführt werden:

- Überprüfung, ob die Bodenhaftung innerhalb vorgegebener Toleranzgrenzen liegt;
- Extrahieren der charakteristischen Frequenzen;
- Parameterschätzung in Bezug auf die Berechnung von $k_R$, der Federkonstanten des Reifens;
- Überprüfung des Luftdrucks des Reifens;
- Überprüfung der Signalform des Amplitudenspektrums;
- Überprüfung, ob der Phasengang $\pi/2$ erreicht;
- Überprüfung, ob die Gleichung $f_2 = f_3$ gilt;
- Parameterberechnung;
- Überprüfung, ob die Parameter berechenbar sind;
- Berechnung des Achs-Dämpfungsgrades;
- Berechnung der Kennlinie der Grenzwertdämpfung; und
- Beurteilung des Achsdämpfungsgrades und Ausgabe einer Empfehlung über die Notwendigkeit des Stoßdämpferaustausches.

**43.** Vorrichtung zur Durchführung des Verfahrens zum Prüfen von am Fahrzeug eingebauten Stoßdämpfern nach einem der vorhergehenden Ansprüche, mit einer Schwingplatte, auf der das Kraftfahrzeug mit einem Rad steht und die mit einer geeigneten Amplitude und einer variablen Frequenz in vertikaler Richtung hin- und herbewegbar ist und eine Schwingung auf das Rad ausübt, wobei die Dämpfung des Stoßdämpfers aus der Kraftantwort des Fahrwerkes auf die Schwingungen der Schwenkplatte und der relativen Phasenfunktion zwischen der von der Schwingplatte ausgeübten Kraft in der Bewegung der Schwingplatte erhalten wird, **gekennzeichnet durch** Scherkraftsensoren an der Schwingplatte und einen Impulsgeber für die winkeläquidistante Abtastung, und **durch** eine Einrichtung, **durch** die das Meßsignal in ein Druckstufensignal und ein Zugstufensignal aufgetrennt wird, und **durch** eine Einrichtung, um das Druckstufensignal und das Zugstufensignal getrennt der Einrichtung für die Weiterverarbeitung der Signale zuzuführen.

**44.** Vorrichtung nach Anspruch 43, **dadurch gekennzeichnet, daß** die Auswertungs-Einrichtung die Qualität des eingebauten Stoßdämpfers über den Achs-Dämpfungsgrad im Bezug auf den Quotienten der gefederten Masse zu der ungefederten Masse beurteilt, wobei die Meßwerte des Achs-Dämpfungsgrades zu einer Kennlinie eines Grenzwert-Dämpfungsgrades in Beziehung gesetzt werden, die den Bereich nicht-akzeptabler Achs-Dämpfungsgrade begrenzt.

## Claims

**1.** A method for the examination of shock absorbers installed on a vehicle using a vibratory platform, on which one wheel of the vehicle is stood and which is able to be reciprocated in a vertical direction at a suitable amplitude and with a variable frequency, an oscillating action is exerted of the wheel, the damping of the shock absorber being derived from the force response of the running gear to the oscillations of the vibratory platform and the relative phase function between the force exerted by the vibratory platform and the movement of the vibratory platform; **characterized in that** the data signal, which represents the changes in the force response with time at a target frequency, is split up in a compression-tension stage splitting means into a compression stage signal, which is characteristic for the compression stage of the shock absorber, and a tension stage signal, which is characteristic for the tension stage of the shock absorber, and **in that** the compression stage signal and the tension stage signal are separately supplied to further processing means.

**2.** The method as set forth in claim 1, **characterized in that** the tension-compression stage split is performed on the basis of a frequency split, the basic frequency being retained and the measured data during the time $\pi/2$ being associated with the positive half wave of the compression stage and the measured data of the negative half wave during the time $\pi/2$ being associated with the tension stage.

**3.** The method as set forth in claim 1, **characterized in that** the tension-compression stage split is performed on the basis of the amplitude split, the higher basic frequency of the compression stage and the lower frequency of the tension stage being taken into account for the calculation of the amplitude by displacement of the narrower, positive compression stage half wave by $\delta\varphi$ to the right, and displacement of the wider, negative tension stage half wave by $\delta\varphi$ to the left.

**4.** The method as set forth in claim 2, **characterized in that** the signals obtained by the frequency split are subjected to a Fourier transformation and preferably a fast Fourier transformation.

**5.** The method as set forth in claim 3, **characterized in that** the signals obtained by the frequency split are subjected to digital filtering, preferably a Fourier transformation and more particularly a fast Fourier transformation and the phase displacements $\delta\varphi$ are added.

**6.** The method as set forth in claim 4 or claim 5, **characterized in that** in the fast Fourier transformation only the basic oscillation is filtered out.

**7.** The method as set forth in any one of the preceding claims, **characterized in that** after such digital filtering a quality assessment of the processed signal is carried out as to the sine-conformaty, wherein for each measured value the relative departure from the sine-signal, which represents the ideal filtered value, is calculated, the transverse sum of all departures is found and those measurement points are rejected, whose mean departure from the ideally filtered value exceeds a predetermined value, such predetermined value preferably being 5%.

**8.** The method as set forth in any one of the preceding claims, **characterized in that** the road adherence, i. e. the constant of the wheel with the vibratory platform is examined and **in that** in the case of a road adherence below a predetermined value, preferably 10%, measurement is terminated.

**9.** The method as set forth in any one of the preceding claims, **characterized in that** three complete cycles are measured, n measured values, preferably 256 measured values, being produced per revolution and **in that** several revolutions, preferably three revolutions are measured and the results employed in forming an average.

**10.** The method as set forth in any one of the preceding claims, **characterized in that** the influence of the vibratory platform on the result of measurement is compensated for by recording a frequency curve for the vibratory platform in a dynamic calibration run and the amplitude spectrum is interpolated by a parabolic curve.

**11.** The method as set forth in any one of the preceding claims, **characterized in that** the taking of measurements is only started when, after approaching a frequency point, the frequency fluctuations no longer exceed a predetermined tolerance level.

**12.** The method as set forth in any one of the preceding claims, **characterized in that** frequency points, at which the frequency fluctuations are not able to be stabilized, are rejected.

**13.** The method as set forth in any one of the preceding claims, **characterized in that** prior to a measuring run per se a warm-up phase for the shock absorber takes place in order to warm the shock absorber up to a predetermined temperature for measurement.

**14.** The method as set forth in claim 13, **characterized in that** during such warm-up phase the shock absorber is moved in the environment of the upper resonant frequency in order to warm up the damping liquid thereof.

**15.** The method as set forth in any one of the preceding claims, **characterized in that** on recording the support points for estimation of parameters a quality test is performed, the departure of the actual signal from the required sinusoidal signal being ascertained and , should the departure be excessively large, the measured value is rejected and the next target frequency will then be taken to be a predetermined amount, for example 1 Hz, below the actual frequency, whereas if the quality of the signal is satisfactory, further scanning is performed in smaller steps, for example of 0.5 Hz.

**16.** The method as set forth in any one of the preceding claims, **characterized in that** when the amplitude curve in the compression stage and the tension stage direction exceeds its maximum, the resonant range then recorded is scanned again in small frequency steps, for example of 0.25 Hz, in order to detect the actual resonant frequency with the required resolution.

**17.** The method as set forth in any one of the preceding claims, **characterized in that** when the amplitude curve exceeds its point of inflection, the resonant range then assumed is scanned in small steps, for example of 0.25 Hz, in order to detect the actual resonant frequency with the required resolution.

**18.** The method as set forth in any one of the preceding claims, **characterized in that** for recording the $\pi$/w frequency $f_2$ the pitch of scanning is reduced to a small value, for example of 0.25 Hz, when a predetermined phase value, for example of 1.2 rad, is reached and **in that** the step pitch is reduced to a smaller value, for example 0.1 Hz, when the phase value reaches a larger value, for example of 1.4 rad.

**19.** The method as set forth in any one of the preceding claims, **characterized in that** the signals processed in this manner are subjected to evaluation in order to perform an assessment of quality on the installed shock absorber and preferably to make a recommendation for replacement.

**20.** The method as set forth in claim 19, **characterized in that** as a basis for evaluation of the quality of the installed shock absorber the degree of axle damping as related to the quotient of the spring-suspended mass and the non-spring-suspended mass is calculated, that measured values for the degree of axle damping being related to a characteristic curve of a critical or border value degree of axle damping, which characteristic curve delimits the range of non-acceptable degrees of axle damping.

**21.** The method as set forth in any one of the preceding claims, **characterized in that** prior to actual evaluation of the road adherence of the vehicle to be tested is examined and **in that** , if the road adherence is under a predetermined value, the evaluation is terminated and the shock absorber is classified as being sub-standard.

**22.** The method as set forth in claim 1 and in claim 10, **characterized in that** the compression and tension stages are separately evaluated as regards the degree of axle damping.

**23.** The method as set forth in any one of the preceding claims, **characterized in that** for extraction of the characteristic frequency the measured amplitude and phase spectrums are processed by interpolating the curve section of the phase function by a polynomial.

**24.** The method as set forth in claim 23, **characterized in that** the support points for the interpolation start at the resonant frequency and terminate at the local maximum of the phase function.

**25.** The method as set forth in claim 23, **characterized in that** the frequencies $f_2$ and $f_3$ are subjected to a plausibility test, the shock absorber being deemed to be good, if the $\pi/2$ frequency $f_2$ does not exist, and is deemed to be poor, if the $\pi/2$ frequency $f_2$ is larger than or equal to the resonant frequency $f_3$.

**26.** The method as set forth in claims 20 through 25, **characterized in that** a parameter calculation is performed on the basis of the complex frequency curve of the simple one quarter vehicle model:

$$F_P = \frac{-m_S\omega^2 - im_S\frac{d}{k}\omega^3 + \frac{m_U \cdot m_F}{k}\omega^4}{1 + i\frac{d}{k}\omega - \left(\frac{m_F}{k} + \frac{m_F}{k_R} + \frac{m_U}{k_R}\right)\omega^2 - im_S\frac{d}{k \cdot k_R}\omega^3 + \frac{m_U \cdot m_F}{k \cdot k_R}\omega^4}$$

wherein:

- $m_F$ spring-suspended mass [kg]
- $m_U$ non-spring-suspended mass [kg]
- $m_S$ static overall mass [kg]
- k spring constant of the suspension spring [N/m]
- $k_R$ spring constant of the tire [N/m]
- d damping constant of the shock absorber [kg/s]
- $\omega$ circular frequency of the exciting oscillation [1/s]

and **in that** from such parameters the degree of axle damping ($Achs_{DG}$):

$$Achs_{DG} = \frac{d}{2^* \sqrt{k^* k_R{}^* m_U}}$$

is found, the parameters utilized here being a result of model iteration.

**27.** The method as set forth in claim 26, **characterized in that** for parameter estimation of the value $k_R$ a loss function:

$$V = \sum_{\nu=0}^{N} \psi_\nu [R_\nu (1 - a_2\omega^2 + a_4\omega^4) - I_\nu (a_1\omega - a_3\omega^3) - (b_0 - b_2\omega^2 + b_4\omega^4)]^2$$
$$+ \psi_\nu [R_\nu (a_1\omega - a_3\omega^3) + I_\nu (1 - a_2\omega^2 + a_4\omega^4) - (b_1\omega - b_3\omega^3)]^2$$

is employed, which calculates the departure of all support points for the complex frequency curve to be estimated, wherein:

- $R_\nu$ is the measured real fraction of the support point $\nu$
- $I_\nu$ is the measured imaginary fraction of the support point $\nu$
- $\Psi_\nu$ is the weight fraction of the support point $\nu$
- N is the number of support points - 1.

and the loss function is differentiated after every coefficient to be estimated and set at zero, the asymptote of the converging form of the amplitude spectrum as plotted against the spring constant $k_R$ of the tire at high frequencies being able to be calculated using a modified form of the parameter estimation method, in which of the original nine parameters to be estimated the parameters $b_0$ and $b_1$ are basically zero and the parameter $b_2$, is the also known static mass $m_s$ so that the linear equation system is thus reduced to six linear equations.

**28.** The method as set forth in claim 27, **characterized in that** for such estimation a plurality, as for example 20, different weight functions are swept, **in that** for each weight function the theoretical support points are calculated and **in that** then the weight function is employed with the smallest mean departure in the support points used.

**29.** The method as set forth in claim 27, **characterized in that** after such estimation of the parameter $k_R$ this value is compared in the $k_R$/mS field with a target $k_R$ curve and the measurement is not evaluated, if the estimated $k_R$ value is outside a predetermined tolerance band.

**30.** The method as set forth in claim 27, **characterized in that** the signal form of the frequency curve is examined and **in that** measurements, which are characteristic for a disruption of road adherence, and measurements, which have a frequency curve without any unambiguous resonance maximum of the amplitude spectrum and rejected.

**31.** The method as set forth in claim 27, **characterized in that** the frequency sector, which does not have any local maximum between the characteristic frequencies $f_2$ and $f_3$, is made available for further calculation of parameters.

**32.** The method as set forth in claim 26, **characterized in that** for parameter estimation the following calculation steps are performed:

- Calculate the amplitude curve A from the complex frequency curve $F_p$.
- For calculation of the characteristic equation for the upper resonant point $f_3$ differentiate the amplitude curve A and make A' equal to zero.
- Solve this equation in terms of the damping constant d and the following applies:

$$d_3 = g(\omega_{3,}, m_S, m_U, k_R, k).,$$

- For calculation of the characteristic equation for the $\pi/2$ frequency $f_2$ calculate the real fraction of A and make $A_{re}$ equal to zero.
- Solve this equation in terms of the damping constant d and the following applies:

$$d_2 = h(\omega_{2,}, m_S, m_U, k_R, k);$$

  in both equations g and h the exciting frequencies $\omega$ and the static weight $m_S$ are measured, the spring constant of the tire $k_R$ is known from the parameter estimation method so that two equations remain for $d_2$ and $d_3$ with two in unknowns $m_U$ and $k_R$;
- generate the amplitude functions S2, d being replaced by $d_2$, and $A_3$, d being replaced by $d_3$, two equations with two unknowns $m_U$ and k being obtained, which are linked for calculation of the parameters.

**33.** The method as set forth in claim 26, **characterized in that** owing to small influence of the spring constant k on the degree of axle damping the spring constant k is omitted so that the degree of axle damping is equal to:

$$Achs_{DG} = \frac{d}{2 * \sqrt{k_R * m_U}}$$

the model iteration being simplified to a great extent and consequently performed more rapidly since the solution curve for the characteristic resonant frequency $f_1$ is replaced by a constant straight line at k = 100000 N/m, the non-spring-suspended mass applying here being calculated using the customary iteration algorithm, this iteration algorithm leading to the solution points ($m_U$, 10000) with the least measured value departure and the best cover of the damping constants of the remaining solution curves $f_3$.

**34.** The method as set forth in claim 26, **characterized in that** if the parameters are not able to be calculated, road adherence is checked and if a high degree of road adherence is found, the shock absorber is deemed to be good, whereas in the other case evaluation is terminated and the shock absorber is deemed to be sub-standard.

**35.** The method as set forth in claim 26, **characterized in that** for the determination of a critical or border value line measurements are made on vehicles with manipulated shock absorbers and the degrees of axle damping of the defective shock absorbers are employed as basic data.

**36.** The method as set forth in claim 32, **characterized in that** the critical or border value line possesses a hyperbolic form with on the one hand the minimum practical value as a pole point and on the other hand the minimum degree of axle damping as an asymptote.

**37.** The method as set forth in claim 32 or claim 33, **characterized in that** the critical or border value line is represented by a non-linear regression across the basic data employed, a growth model being employed as the regression model, the growth model having a strictly monotonous, asymptotic form, which is in agreement with the previously made tests

**38.** The method as set forth in claim 37, **characterized in that** as a model the so-called saturation model is utilized, the critical or border value line being able to be described by the two parameters a and b:

$$Achs_{DGgrenz} = \frac{a * {}^{m_F}/_{m_U}}{b + {}^{m_F}/_{m_U}}$$

wherein

a is the asymptote, that is to say the minimum degree of axle damping.
b is the pole point, i. e.the minimum mass ratio which is physically possible.

**39.** The method as set forth in claim 35, **characterized in that** in accordance with the calculation of the degree of axle damping and its incorporation in the diagram of the degree of axle damping to the quotient of the spring-suspended mass to the non-spring-suspended mass a recommendation is made as regards the necessity of replacement of the shock absorber.

**40.** The method as set forth in any one of the preceding claims, **characterized in that** during recording the frequency curve the following steps are performed in the order given:

- Measurement of the static weight;
- Running up to starting frequency of for example 10 Hz;
- Warming up phase of shock absorber;
- Run up of exciting vibration of the vibratory platform to the maximum frequency of for example 35 Hz;
- Recording of support points for the estimation of parameters;
- Recording of resonant frequency $f_3$;
- recording $\pi/2$ frequency $f_2$ and
- Transmission of data to evaluation system.

**41.** The method as set forth in any one of the preceding claims, **characterized in that** for recording the frequency points the following steps are performed in the order given;

- Run up to target frequency;
- Check to see if frequency becomes stable;
- Recording readings;
- Separation of tension from compression stage signal;
- Fourier transformation of the separated signals;
- Quality assessment of the signals;
- Check of road adherence;
- Check to see whether measurements have been recorded for a given number of revolutions;
- Check to see whether measurements conform to the quality standard for at least a fraction of the revolutions;
- Extraction of mean value for the measurements classified as being good;
- Compensation of the effect of the vibratory platform.

**42.** The method as set forth in any one of the preceding claims, **characterized in that**:

- Check to see whether the road adherence is within predetermined tolerance limits;
- Extraction of the characteristic frequencies;
- Parameter estimation as regards the calculation of $k_R$, the spring constant of the tire;
- Check of air pressure in tire;
- Check of signal form of the amplitude spectrum;
- Check on whether the $\pi/2$ phase state is reached; Check on whether the equation $f_2 = f_3$ is fulfilled;
- Parameter calculation
- Check to see whether parameters can be calculated;
- Calculation of critical or border degree of axle damping;
- Assessment of degree of axle damping and issue of recommendation concerning the need for replacement of shock absorber.

**43.** An apparatus for the performance of the method for the examination of shock absorbers installed as set forth in any one of the preceding claims on a vehicle using a vibratory platform, on which one wheel of the vehicle is stood and which is able to be reciprocated in a vertical direction at a suitable amplitude and with a variable frequency, an oscillating action is exerted of the wheel, the damping of the shock absorber being derived from the force response of the running gear to the oscillations of the vibratory platform and the relative phase function between the force exerted by the vibratory platform and the movement of the vibratory platform, **characterized by** shear force sensors on the vibratory platform and a pulse source for angularly equidistant scanning and a means by which the data is split into a compression stage signal and a tension stage signal, and a means in order to supply the compression stage signal and the tension stage signal separately to the means for further processing of the signals.

**44.** The apparatus as set forth in claim 43, **characterized in that** the evaluating means assesses the quality of the installed shock absorber by reference to the quotient of the spring-suspended mass to the non-spring-suspended mass, all measured values of the degree of axle damping being related to a characteristic curve of a critical or border degree value of axle damping, which relationship delimits the range of non-acceptable degrees of axle damping.

## Revendications

**1.** Procédé pour vérifier les amortisseurs montés sur un véhicule automobile , dans lequel une vibration est transmise sur la roue par une plaque vibrante sur laquelle le véhicule est posé avec une roue et dans lequel la plaque est susceptible d'être déplacée dans un mouvement de va-et-vient en direction verticale avec une amplitude appropriée et une fréquence variable, l'amortissement de l'amortisseur étant obtenu à partir de la réponse de force du châssis aux vibrations de la plaque vibrante et de la fonction de phase relative entre la force exercée par la plaque vibrante et le mouvement de la plaque vibrante, **caractérisé en ce que** le signal de mesure représentant le tracé temporel de la réponse de force pour une fréquence cible et est divisé au moyen d'une séparation des étapes de traction et de pression en un signal de l'étape de pression qui est caractéristique pour l'étape de pression de l'amortisseur et en un signal de l'étape de traction qui est caractéristique pour un signal de l'étape de traction et **en ce que** le signal de l'étape de pression et le signal de l'étape de traction sont conduits de manière séparée vers le traitement ultérieure.

**2.** Procédé selon la revendication 1, **caractérisé en ce que** la séparation des étapes de traction et de pression est effectuée au moyen d'une séparation de fréquences , la fréquence de base étant gardée et les valeurs de mesure étant associées pendant la durée $\pi/2$ de la demi-onde positive à l'étape de pression et les valeurs de mesure de la demi-onde négative étant associées pendant la durée $\pi/2$ à l'étape de traction .

**3.** Procédé selon la revendication 1, **caractérisé en ce que** la séparation des étapes de traction et de pression est effectuée au moyen d'une séparation d'amplitudes , la fréquence de base supérieure de l'étape de pression et la fréquence inférieure de l'étape de traction sont prises en compte pour le calcul de l'amplitude de telle manière que la demi-onde de l'étape de pression positive et plus étroite est déplacée de $\delta\varphi$ vers la droite pendant que la demi-onde de l'étape de traction négative et plus large est déplacée de $\delta\varphi$ vers la gauche.

**4.** Procédé selon la revendication 2, **caractérisé en ce que** les signaux obtenus par la séparation de fréquences sont soumis à un filtrage numérique, de préférence une transformation de Fourier et particulièrement préférée à une transformation de Fourier rapide.

**5.** Procédé selon la revendication 3, **caractérisé en ce que** les signaux obtenus par la séparation d'amplitudes sont soumis à un filtrage numérique , de préférence une transformation de Fourier et particulièrement préférée à une transformation de Fourier rapide et un décalage de phases $\delta\varphi$ est additionné.

**6.** Procédé selon la revendication 4 ou 5, **caractérisé en ce qu'**on filtre par la transformation de Fourier rapide uniquement 1a vibration de base.

**7.** Procédé selon une des revendications précédentes, **caractérisé en ce qu'**on effectue après le filtrage numérique une analyse de la qualité du signal traité sur sa conformité à la courbe sinusoïdal en calculant pour chaque valeur mesurée l'écart relative par rapport au signal sinusoïdal représentant la valeur filtrée idéale et en formant la somme transversale de tous les écarts et en éliminant tous les points de mesure dont l'écart moyen par rapport à la valeur filtrée idéale dépasse une valeur prédéterminée, de préférence de 5%.

8. Procédé selon une des revendications précédentes, **caractérisé en ce que** l'adhésion au sol, c'est à dire le contact de la roue avec la plaque vibrante, est vérifiée et en que la mesure est interrompue pour une adhésion au sol qui est inférieure à une valeur prédéterminée, de préférence 10%.

9. Procédé selon une des revendications précédentes, **caractérisé en ce que** trois rotations complètes sont mesurées en enregistrant n valeurs de mesure , de préférence 256, par rotation et chez que plusieurs rotations sont enregistrées, de préférence trois et sont soumises à une formations de valeurs moyennes .

10. Procédé selon une des revendications précédentes, **caractérisé en ce que** l'influence de la plaque vibrante sur le résultat de mesure est compensée en enregistrant la réponse en fréquence de la plaque vibrante au cours d'un calibrage dynamique et en interpolant le spectre d'amplitude au moyen d'une branche de parabole.

11. Procédé selon une des revendications précédentes, **caractérisé en ce qu'**on commence seulement avec l'enregistrement des valeurs de mesure quand les variations de fréquence ne dépassent pas une tolérance prédéterminée après avoir atteint un point de fréquence.

12. Procédé selon une des revendications précédentes, **caractérisé en ce que** des points de fréquence pour lesquels on n'arrive pas à stabiliser les variations de fréquence sont éliminés.

13. Procédé selon une des revendications précédentes, **caractérisé en ce qu'**on prévoit avant les mesures proprement dits une phase d'échauffement pour l'amortisseur afin que l'amortisseur atteint pour les mesures une température prédéterminée.

14. Procédé selon la revendication 13, **caractérisé en ce qu'**on déplace l'amortisseur pendant la phase d'échauffement dans les environs de la fréquence de résonance supérieure afin de réchauffer le liquide amortisseur.

15. Procédé selon une des revendications précédentes, **caractérisé en ce qu'**on effectue au cours de l'enregistrement des points d'appui un test de qualité pour l'évaluation de paramètre, où l'écart du signal actuel par rapport au signal sinusoïdal exigé est déterminé et, quand l'écart est trop important , la valeur de mesure est éliminée et la prochaine fréquence cible est située donc d'une valeur prédéterminée , par exemple 1 Hz en dessous de la fréquence actuelle, pendant que , si la qualité du signal est suffisante, on continue de balayer avec des plus petits pas par exemple 0,5Hz.

16. Procédé selon une des revendications précédentes, **caractérisé en ce que** , si la réponse en amplitude dépasse son maximum en direction de l'étape de pression et de l'étape de traction , la zone de résonance atteinte est balayée de nouveau avec des petits pas de fréquence, par exemple des pas de 0,25Hz, pour pouvoir reconnaître la véritable fréquence de résonance avec une résolution suffisante.

17. Procédé selon une des revendications précédentes, **caractérisé en ce que** , si la réponse en amplitude dépasse son point d'inflexion , la zone de résonance atteinte est balayée de nouveau avec des petits pas de fréquence , par exemple des pas de 0,25Hz, pour pouvoir reconnaître la véritable fréquence de résonance avec une résolution suffisante.

18. Procédé selon une des revendications précédentes, **caractérisé en ce que**, pour enregistrer la fréquence $\pi/2\ f_2$, le pas de balayage est réduit à une petite valeur, par exemple 0,25Hz, quand une valeur de phase prédéterminée , par exemple 1,2 rad, est atteinte et **en ce que** le pas est réduite à une plus petite valeur , par exemple 0,1Hz, quand la valeur de phase atteint une plus grande valeur, par exemple 1,4 rad.

19. Procédé selon une des revendications précédentes, **caractérisé en ce que** les signaux ainsi traités sont soumis à une analyse afin de pouvoir juger la qualité de l'amortisseur monté et de donner de préférence un conseil d'échange.

20. Procédé selon la revendication 19, **caractérisé en ce qu'**on calcule le degré d'amortissement de l'axe par rapport en fonction du quotient de la masse suspendue par rapport à la masse non suspendue, les valeurs de mesure du degré d'amortissement de l'axe étant mises en relation avec une ligne caractéristique d'une valeur de limite du degré d'amortissement limitant la zone du degré d'amortissement de l'axe non acceptable.

**21.** Procédé selon une des revendications précédentes, **caractérisé en ce que** l'adhésion au sol du véhicule automobile est vérifiée pendant la mesure avant l'analyse proprement dite et **en ce que** l'analyse est terminée et les amortisseurs sont classifiées comme insuffisants quand l'adhésion au sol devient inférieure à une valeur prédéterminée.

**22.** Procédé selon la revendication 1 et 20, **caractérisé en ce que** l'étape de pression et de traction est analysée de manière séparée par rapport au degré d'amortissement de l'axe.

**23.** Procédé selon une des revendications précédentes, **caractérisé en ce que** les spectres d'amplitude et de phase mesurés sont équilibrés pour extraire la fréquence caractéristique en interpolant la section de courbe de la phase par un polynôme.

**24.** Procédé selon la revendication 23, **caractérisé en ce que** les points d'appui pour l'interpolation commencent à partir de la fréquence de résonance et finissent au maximum local de la réponse en phase.

**25.** Procédé selon la revendication 23, **caractérisé en ce que** les fréquences $f_2$ et $f_3$ sont soumises à un test de plausibilité , l'amortisseur étant classifié comme bien, quand la fréquence $\pi/2\ f_2$ n'existe pas, et étant classifié comme mauvais quand la fréquence $\pi/2\ f_2$ est plus grand ou égal à la fréquence de résonance $f_3$.

**26.** Procédé selon la revendication 20 à 25, **caractérisé en ce qu'**un calcul de paramètre est effectué basé sur la réponse complexe en fréquence du modèle simple d'un quart de véhicule automobile :

$$F_P = \frac{-m_S\omega^2 - im_S\frac{d}{k}\omega^3 + \frac{m_U \cdot m_F}{k}\omega^4}{1 + i\frac{d}{k}\omega - \left(\frac{m_F}{k} + \frac{m_F}{k_R} + \frac{m_U}{k_R}\right)\omega^2 - im_S\frac{d}{k \cdot k_R}\omega^3 + \frac{m_U \cdot m_F}{k \cdot k_R}\omega^4}$$

avec

| | |
|---|---|
| $m_F$ | masse suspendue [kg] |
| $m_U$ | masse non suspendue [kg] |
| $m_s$ | masse statique totale [kg] |
| k | constante d'élasticité du ressort de suspension [N/m] |
| $k_R$ | constante d'élasticité du pneu [N/m] |
| d | constante d'amortissement de l'amortisseur [kg/s] |

fréquence circulaire de la vibration de générateur [1/s]
et **en ce qu'**on peut déterminer à partir des paramètres le degré d'amortissement de l'axe:

$$Achs_{DG} = \frac{d}{2^* \sqrt{k^*\, k_R{}^* m_U}}$$

Les paramètres utilisés à cette occasion sont un résultat de l'itération du modèle.

**27.** Procédé selon la revendication 26, **caractérisé en ce qu'**on utilise pour l'évaluation de paramètre de la valeur $k_R$ une fonction de perte :

$$V = \sum_{\nu=0}^{N} \psi_\nu [R_\nu(1 - a_2\omega^2 + a_4\omega^4) - I_\nu(a_1\omega - a_3\omega^3) - (b_0 - b_2\omega^2 + b_4\omega^4)]^2$$
$$+ \psi_\nu[R_\nu(a_1\omega - a_3\omega^3) + I_\nu(1 - a_2\omega^2 + a_4\omega^4) - (b_1\omega - b_3\omega^3)]^2$$

qui calcule l'écart de tous les points d'appui pour la réponse complexe en fréquence à évaluer , avec :

$R_\nu$ partie réelle mesurée du point d'appui ν
$I_\nu$ partie imaginaire mesurée du point d'appui ν
$\Psi_\nu$ fonction de poids du point d'appui ν
N nombre de points d'appui

et la fonction de perte est différentiée après chaque coefficient à évaluer et est remis à zéro, l'asymptote du tracé convergent du spectre d'amplitude contre la constante d'élasticité du pneu $k_R$ étant susceptible d'être calculée pour des fréquences élevées au moyen d'une forme modifiée du procédé d'évaluation de paramètre, dans laquelle forme les paramètres $b_0$ et $b_1$ des neuf paramètres d'origines à évaluer sont en principes zéro et le paramètre $b_2$ est 1a masse statique ms également connue, de manière à ce que le systèmes d'équations linéaires se réduit donc à six équations linéaires.

**28.** Procédé selon la revendication 27, **caractérisé en ce qu'**une multitude , par exemple 20, de différents fonctions de poids sont parcourues pendant l'évaluation de manière à ce qu'on calcule ensuite pour chaque fonction de poids les points d'appui théoriques et qu'ensuite la fonction de poids est utilisée avec le plus petit écart moyen dans les points d'appui utilisés.

**29.** Procédé selon la revendication 27, **caractérisé en ce qu'**après l'estimation de paramètre du paramètre $k_R$ cette valeur est comparée dans la zone $k_R$-$m_S$ avec une courbe $k_R$ de consigne et la mesure n'est pas évaluée quand la valeur $k_R$ estimée est située en dehors d'une bande de tolérance prédéterminée.

**30.** Procédé selon la revendication 27, **caractérisé en ce que** la forme de signal de la réponse en fréquence est vérifiée et que des mesures qui sont caractéristiques pour un enlèvement à cause de la friction d'adhésion et des mesures qui présentent une réponse en fréquence avec aucun maximum de résonance net du spectre d'amplitude , sont éliminées.

**31.** Procédé selon la revendication 27, **caractérisé en ce qu'**une réponse en fréquence qui présente aucun minimum de fréquence local entre les fréquences caractéristiques $f_2$ et $f_3$ est libéré pour un calcul de paramètre ultérieure.

**32.** Procédé selon la revendication 26, **caractérisé en ce qu'**on exécute pour le calcul de paramètre les étapes de calcul suivants :

- calcule la réponse en amplitude A à partir de la réponse en fréquence $f_p$ complexe ;
- différentie , pour calculer l'équation caractéristique pour le point de résonance supérieure $f_3$, la résonance en amplitude A et met A' égal zéro ;
- résous cette équation vers la constante d'amortissement d et on a :

$$d_3 = g(\omega_3, m_S, m_U, k_R, k)$$

- afin de pouvoir calculer l'équation caractéristique pour la fréquence $\pi/2\ f_2$ calcules la partie réelle de A et met $A_{re}$ égal zéro ;
- résous cette équation vers la constante d'amortissement d et on a :

$$d_2 = h(\omega_2, m_S, m_U, k_R, k);$$

les fréquences ω du générateur et le poids statique $m_S$ étant mesurés dans les deux équations g et h, la constante élastique $k_R$ du pneu étant connue depuis le procédé d'estimation de paramètre, de manière à ce qu'il reste deux équations pour d2 et d3 avec deux inconnus mU et $k_R$; génère les réponses en amplitude $A_2$, d étant remplacé par $d_2$, et $A_3$, d étant remplacé par $d_3$, en obtenant en plus deux équations avec deux inconnus $m_U$ et k, que l'on lie pour calculer les paramètres.

**33.** Procédé selon la revendication 26, **caractérisé en ce qu'**on néglige la constante d'élasticité k en raison de la faible influence de la constante d'élasticité sur le degré d'amortissement de l'axe, de manière à ce qu'on obtient comme degré d'amortissement de l'axe :

$$Achs_{DG} = \frac{d}{2 * \sqrt{k_R * m_U}}$$

l'itération du modèle pouvant être fortement simplifiée et donc être temporellement accélérée, car la courbe de solution pour la fréquence de résonance caractéristique f1 est remplacée à k=10000N/m par une droite constante , la masse non suspendue associée étant calculée au moyen de l'algorithme d'itération habituel qui fournit le point de solution ($m_U$, 10000) avec l'écart de valeur de mesure le plus petit et le meilleur chevauchement des constantes d'amortissement des courbes de solution f3 restantes.

**34.** Procédé selon la revendication 26, **caractérisé en ce que** l'adhésion au sol est vérifiée quand les paramètres ne peuvent pas être calculées, et **en ce que** , quand on détecte une grande adhésion au sol, l'amortisseur est classifié comme bon, pendant que dans l'autre cas l'évaluation est terminée et l'amortisseur est classifiée comme insuffisant.

**35.** Procédé selon la revendication 26, **caractérisé en ce qu'**on mesure pour le détermination d'une ligne de valeur de limite des véhicules automobiles avec des amortisseurs manipulés, les degrés d'amortissement de l'axe des amortisseurs défectueux étant choisis en tant que données cadre .

**36.** Procédé selon la revendication 32, **caractérisé en ce que** la ligne de valeur de limite présente un tracé hyperbolique avec d'une part le rapport de masse minimale acceptable comme pôle et d'autre part le degré d'amortissement de l'axe minimal comme asymptote.

**37.** Procédé selon la revendication 32 ou 33, **caractérisé en ce que** la ligne de valeur de limite est représentée par une régression non linéaire au moyen des données cadre utilisées, en utilisant comme modèle de régression un modèle de croissance présentant un tracé strictement monotone et asymptotique et couvre les mesures effectuées auparavant.

**38.** Procédé selon la revendication 37, **caractérisé en ce qu'**on utilise comme modèle le si nommé modèle de saturation, la ligne de valeur de limite étant décrit par les deux paramètres a et b:

$$Achs_{DGgrenz} = \frac{a * {}^{m_F}/_{m_U}}{b + {}^{m_F}/_{m_U}}$$

a étant l'asymptote, c'est à dire le degré d'amortissement de l'axe minimal, b étant le pôle, c'est à dire le rapport de masses minimal physiquement acceptable.

**39.** Procédé selon la revendication 35, **caractérisé en ce qu'**on conseille la nécessité d'échanger l'amortisseur après avoir calculé le degré d'amortissement de l'axe et après son introduction dans le diagramme entre le degré d'amortissement de l'axe vers le quotient de la masse suspendue par rapport à la masse non suspendue.

**40.** Procédé selon une des revendications précédentes , **caractérisé en ce qu'**on effectue pendant l'enregistrement de la réponse en fréquence dans l'ordre donné les étapes suivantes :

- mesure du poids statique
- accès à la fréquence de démarrage de par exemple 10Hz ;
- déroulement d'une phase d'échauffement de l'amortisseur ;
- augmentation de la vibration du générateur de la plaque vibrante vers la fréquence maximale de par exemple 35 Hz ;
- enregistrement des points d'appui pour l'estimation de paramètre ;
- enregistrement de la fréquence de résonance $f_3$ ;
- enregistrement de la fréquence $\pi/2$ $f_2$ et
- envoi des données vers l'évaluation.

**41.** Procédé selon une des revendications précédentes, **caractérisé en ce que** qu'on effectue pour l'enregistrement des points de fréquence dans l'ordre donné les étapes suivantes :

- accès à la fréquence cible ;
- vérification si la fréquence se stabilise
- enregistrement des valeurs de mesure ;
- séparation des signaux des étapes de traction et de pression ;
- transformation de Fourier des signaux séparés ;
- évaluation de la qualité des signaux ;
- vérification de l'adhésion au sol ;
- vérification, si les mesures ont été effectuées sur un nombre donné de rotations ;
- vérification si les mesures remplissent au moins pour une partie des rotations la norme de qualité ;
- formation de la valeur moyenne des mesures classifiées comme bonnes ;
- compensation de l'influence de la plaque vibrante.

**42.** Procédé selon une des revendications précédentes, **caractérisé en ce que** qu'on effectue pour l'évaluation des résultats de mesure dans l'ordre donné les étapes suivantes :

- vérification, si l'adhésion au sol est située dans des limites de tolérance prédéterminées ;
- extraction des fréquences caractéristiques ;
- évaluation de paramètre par rapport au calcul de $k_R$, la constante d'élasticité du pneu ;
- vérification de la pression d'air du pneu ;
- vérification de la forme du signal du spectre d'amplitude ;
- vérification si l'on a atteint la réponse en phase $\pi/2$ ;
- vérification si l'équation $f_2=f_3$ est valable ;
- calcul de paramètre ;
- vérification si les paramètres peuvent être calculés ;
- calcul du degré d'amortissement de l'axe ;
- calcul de la ligne caractéristique de l'amortissement du valeur limite ; et
- évaluation du degré de l'amortissement de l'axe et sortie d'un conseil qu'un échange d'amortisseur soit nécessaire.

**43.** Dispositif pour réaliser le procédé pour vérifier les amortisseurs montés sur un véhicule automobile , dans lequel une vibration est transmise sur la roue par une plaque vibrante sur laquelle le véhicule est posé avec une roue et dans lequel la plaque est susceptible d'être déplacée dans un mouvement de va-et-vient en direction verticale avec une amplitude appropriée et une fréquence variable, l'amortissement de l'amortisseur étant obtenu à partir de la réponse de force du châssis aux vibrations de la plaque vibrante et de la fonction de phase relative entre la force exercée par la plaque vibrante et le mouvement de la plaque vibrante, **caractérisé par** des capteurs pour la force de cisaillement sur la plaque vibrante et un générateur d'impulsions pour un balayage angulairement équidistant et par un dispositif au moyen duquel le signal de mesure est divisé en un signal de l'étape de pression et un signal de l'étape de traction et par un dispositif destiné à conduire le signal de l'étape de pression et le signal de l'étape de traction de façon séparée vers le dispositif de traitement ultérieure des signaux.

**44.** Dispositif selon la revendication 43, **caractérisé en ce que** le dispositif d'évaluation analyse la qualité de l'amortisseur monté au moyen du degré d'amortissement de l'axe en fonction du quotient de la masse suspendue par rapport à la masse non suspendue , les valeurs de mesure du degré d'amortissement de l'axe sont mis en relation avec une ligne caractéristique d'un degré d'amortissement de valeur limite qui limite la zone des degrés d'amortissement de l'axe non acceptables.

FIG 1

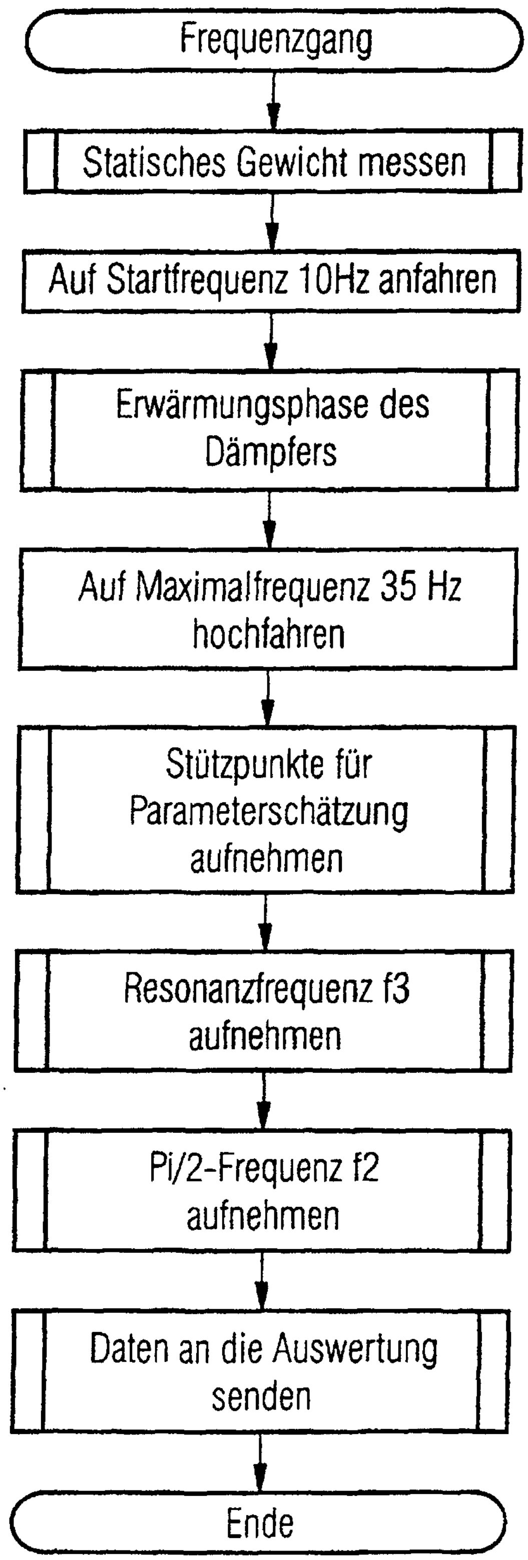
Frequenzgang
Statisches Gewicht messen
Auf Startfrequenz 10Hz anfahren
Erwärmungsphase des Dämpfers
Auf Maximalfrequenz 35 Hz hochfahren
Stützpunkte für Parameterschätzung aufnehmen
Resonanzfrequenz f3 aufnehmen
Pi/2-Frequenz f2 aufnehmen
Daten an die Auswertung senden
Ende

FIG 2

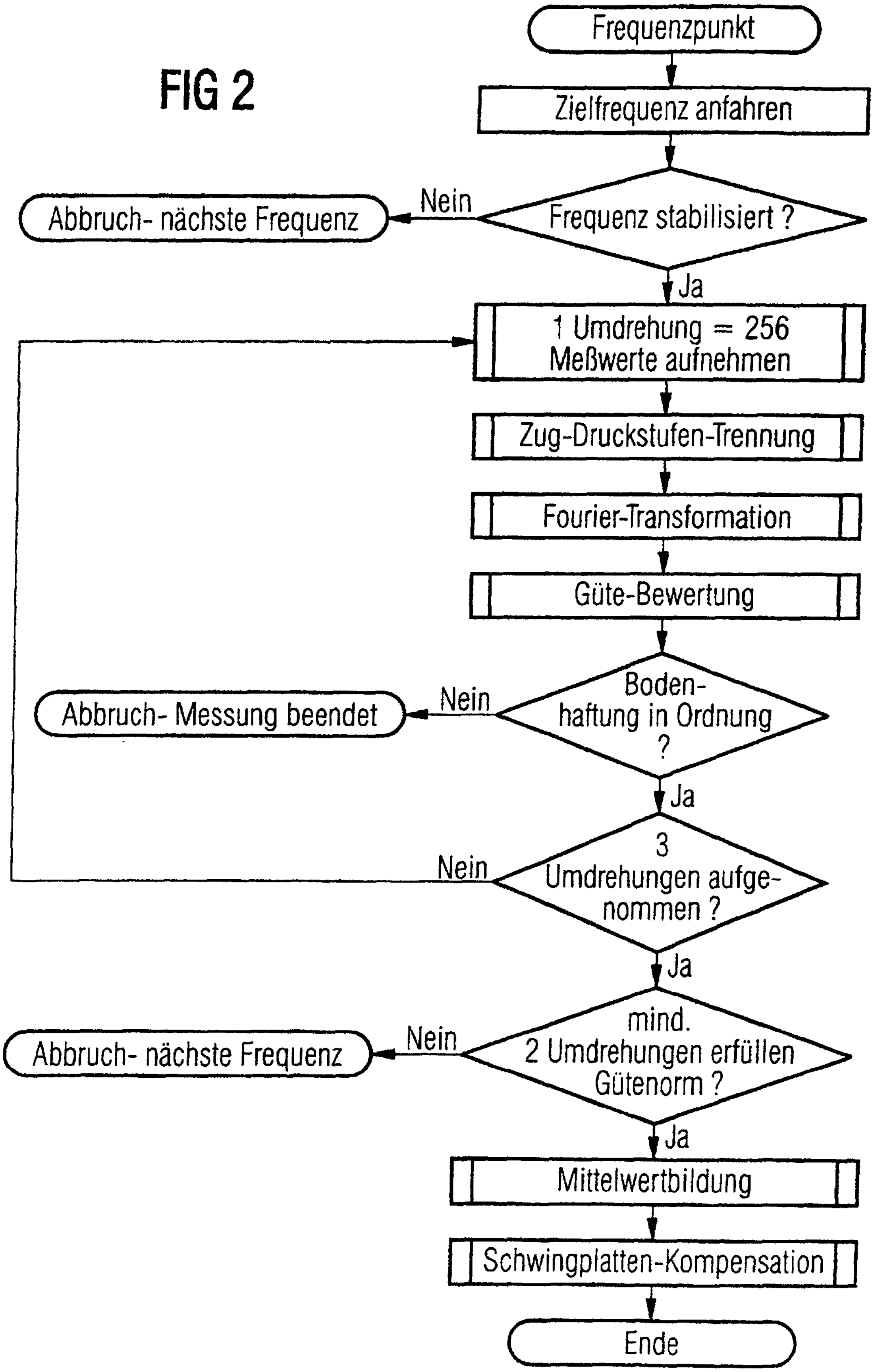
Frequenzpunkt
Zielfrequenz anfahren
Frequenz stabilisiert ?
Nein
Abbruch- nächste Frequenz
Ja
1 Umdrehung = 256
Meßwerte aufnehmen
Zug-Druckstufen-Trennung
Fourier-Transformation
Güte-Bewertung
Boden-
haftung in Ordnung
?
Nein
Abbruch- Messung beendet
Ja
3
Umdrehungen aufge-
nommen ?
Nein
Ja
mind.
2 Umdrehungen erfüllen
Gütenorm ?
Nein
Abbruch- nächste Frequenz
Ja
Mittelwertbildung
Schwingplatten-Kompensation
Ende

FIG 3B

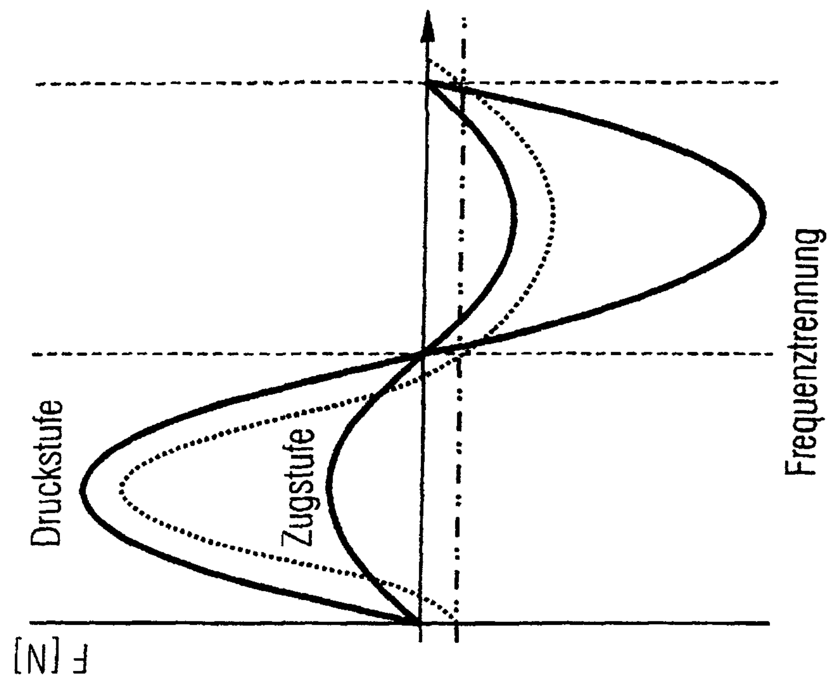
F [N]
Druckstufe
Zugstufe
Frequenztrennung

FIG 3A

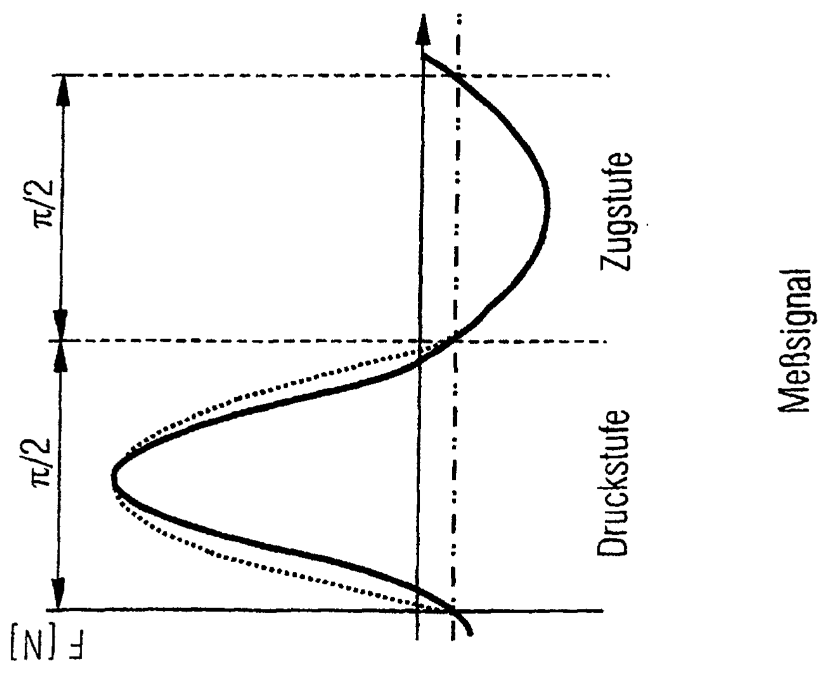
F [N]
π/2
π/2
Druckstufe
Zugstufe
Meßsignal

FIG 4B

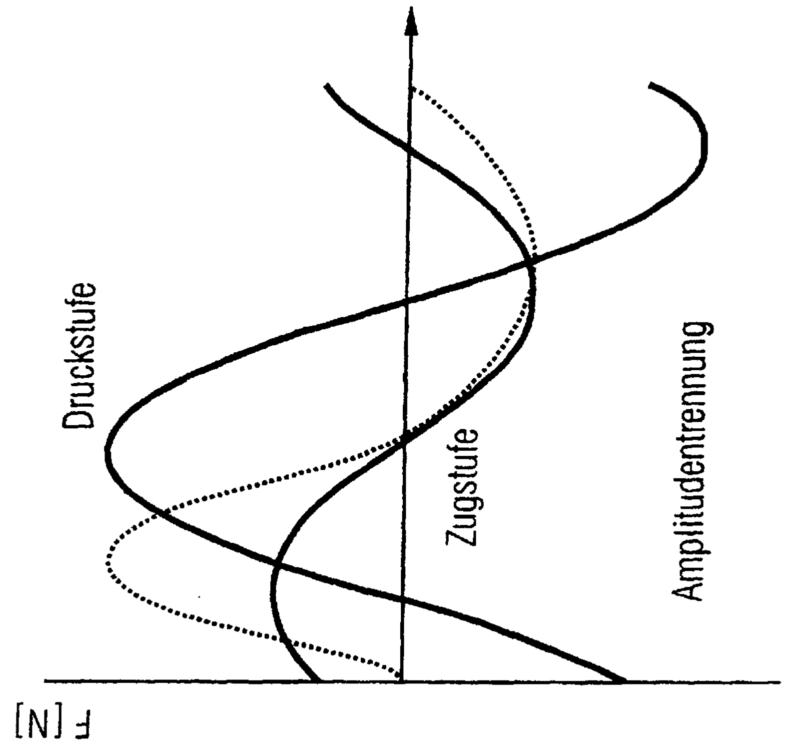
F [N]
Druckstufe
Zugstufe
Amplitudentrennung

FIG 4A

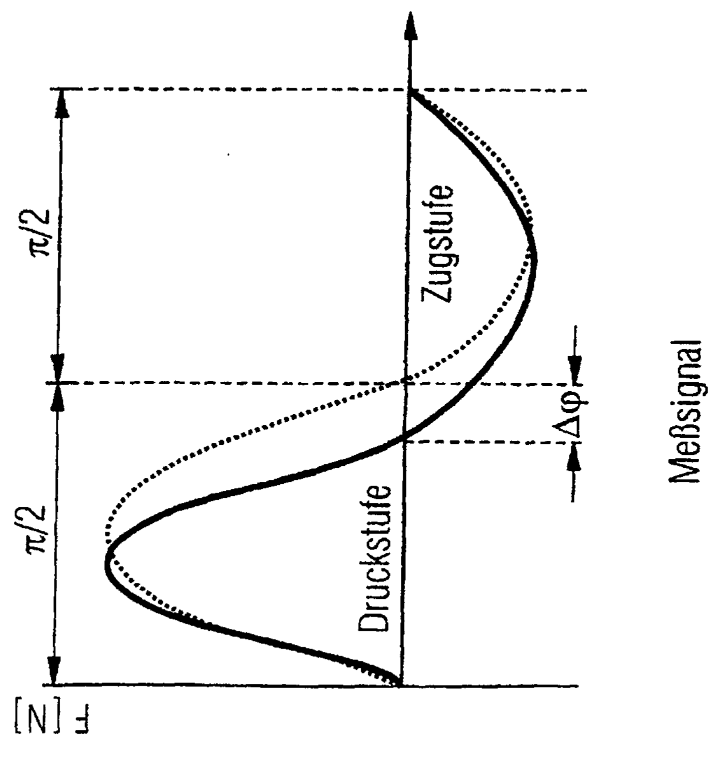
F [N]
π/2
π/2
Druckstufe
Zugstufe
Δφ
Meßsignal

FIG 5A

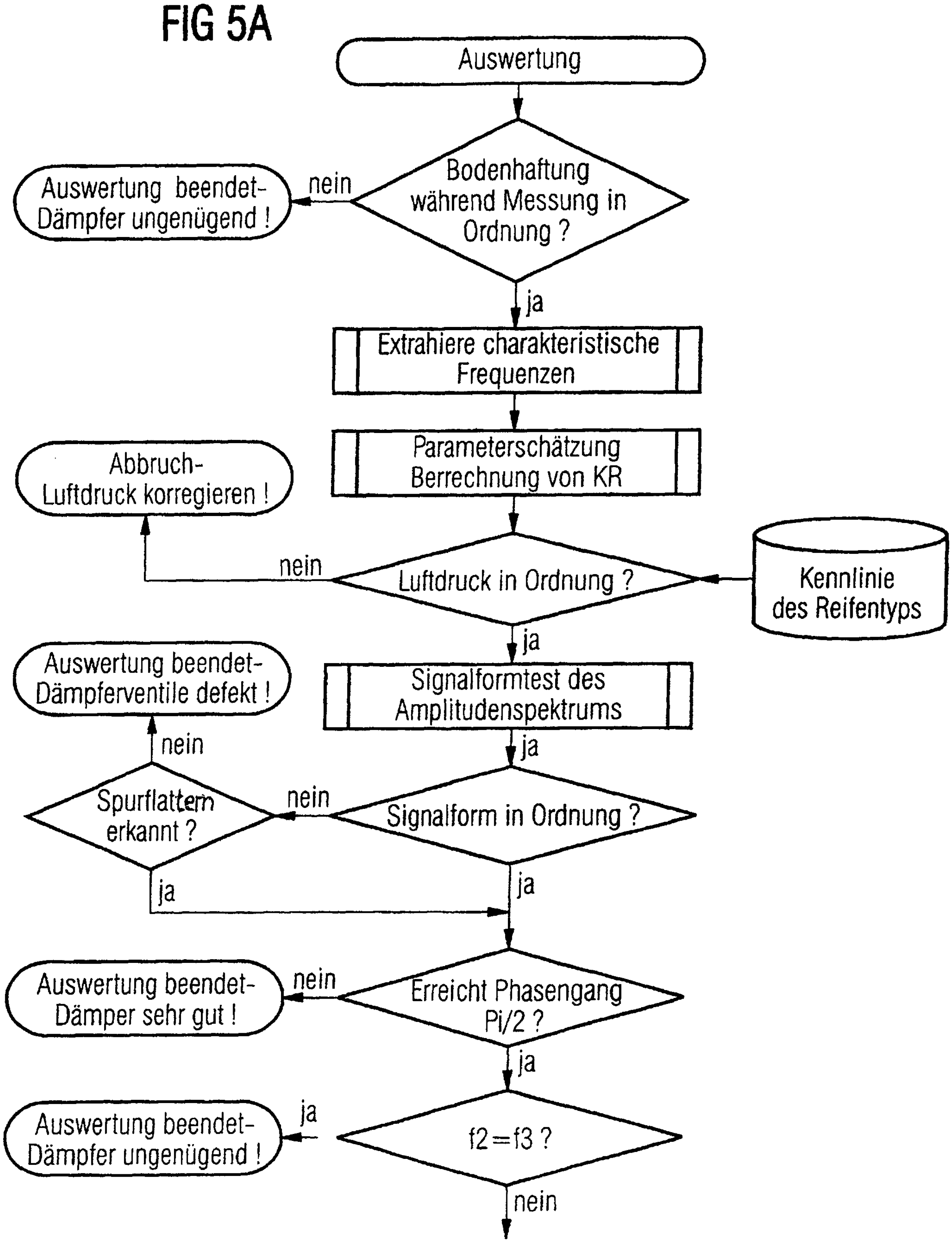
Auswertung
Bodenhaftung während Messung in Ordnung ?
nein
Auswertung beendet-Dämpfer ungenügend !
ja
Extrahiere charakteristische Frequenzen
Parameterschätzung Berrechnung von KR
Abbruch-Luftdruck korregieren !
nein
Luftdruck in Ordnung ?
Kennlinie des Reifentyps
ja
Auswertung beendet-Dämpferventile defekt !
Signalformtest des Amplitudenspektrums
nein
ja
Spurflattern erkannt ?
nein
Signalform in Ordnung ?
ja
ja
Auswertung beendet-Dämper sehr gut !
nein
Erreicht Phasengang Pi/2 ?
ja
Auswertung beendet-Dämpfer ungenügend !
ja
f2=f3 ?
nein

FIG 5B

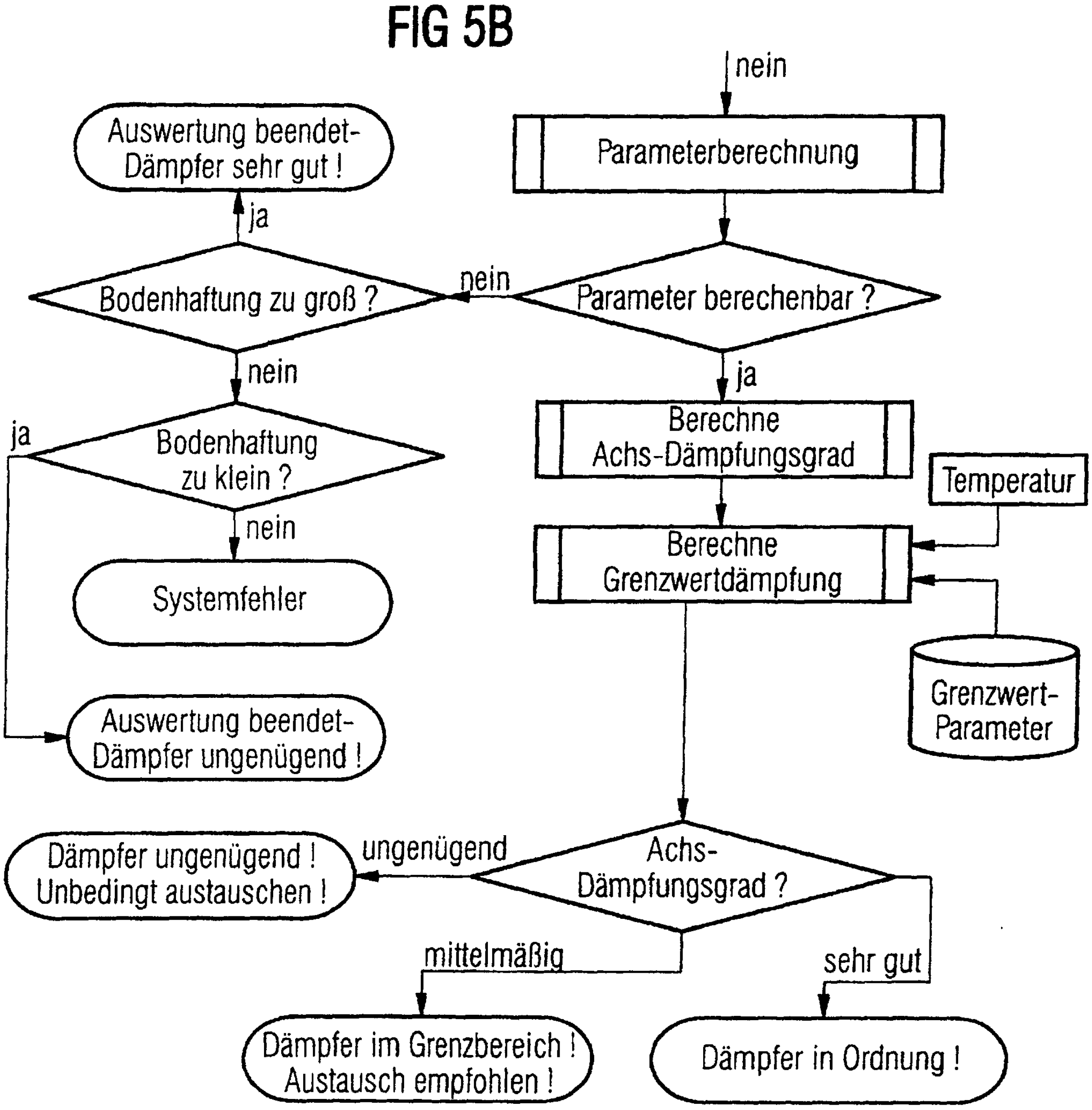
nein
Parameterberechnung
Parameter berechenbar ?
nein
ja
Auswertung beendet-
Dämpfer sehr gut !
ja
Bodenhaftung zu groß ?
nein
ja
Bodenhaftung
zu klein ?
nein
Systemfehler
Auswertung beendet-
Dämpfer ungenügend !
Berechne
Achs-Dämpfungsgrad
Temperatur
Berechne
Grenzwertdämpfung
Grenzwert-
Parameter
Dämpfer ungenügend !
Unbedingt austauschen !
ungenügend
Achs-
Dämpfungsgrad ?
mittelmäßig
sehr gut
Dämpfer im Grenzbereich !
Austausch empfohlen !
Dämpfer in Ordnung !

FIG 6

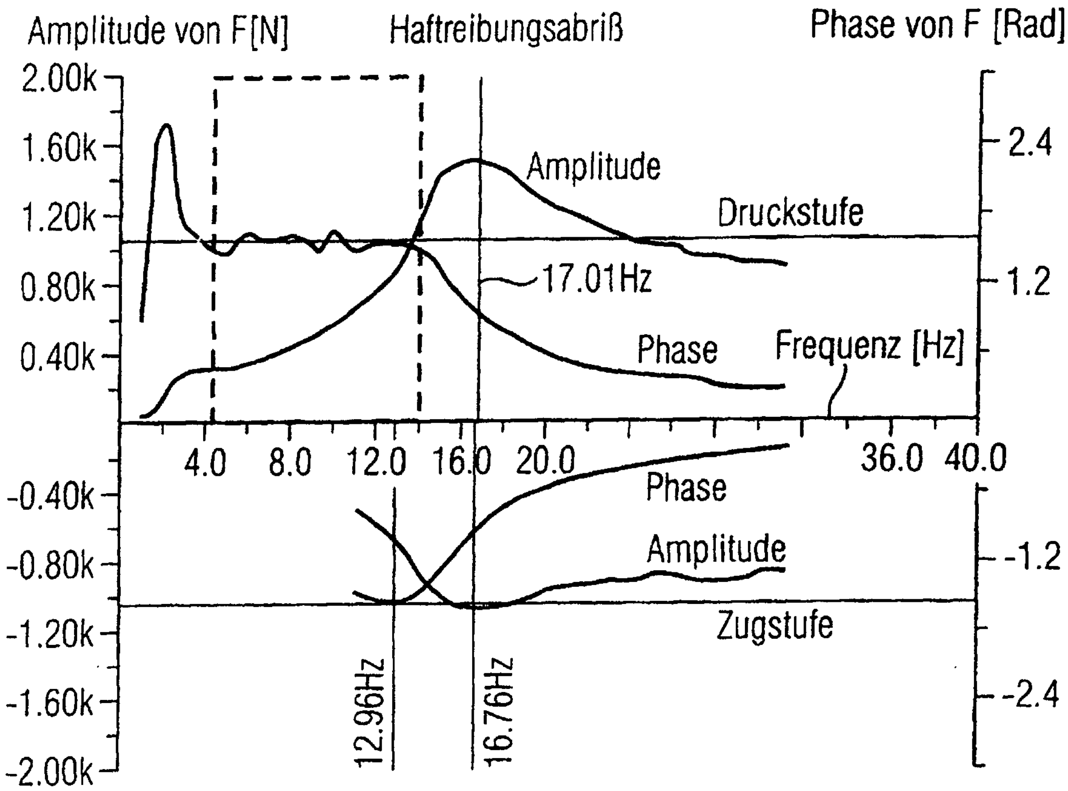

Amplitude von F[N]
Haftreibungsabriß
Phase von F [Rad]
2.00k
1.60k
1.20k
0.80k
0.40k
-0.40k
-0.80k
-1.20k
-1.60k
-2.00k
2.4
1.2
-1.2
-2.4
Amplitude
Druckstufe
17.01Hz
Phase
Frequenz [Hz]
4.0
8.0
12.0
16.0
20.0
36.0
40.0
Phase
Amplitude
Zugstufe
12.96Hz
16.76Hz


FIG7

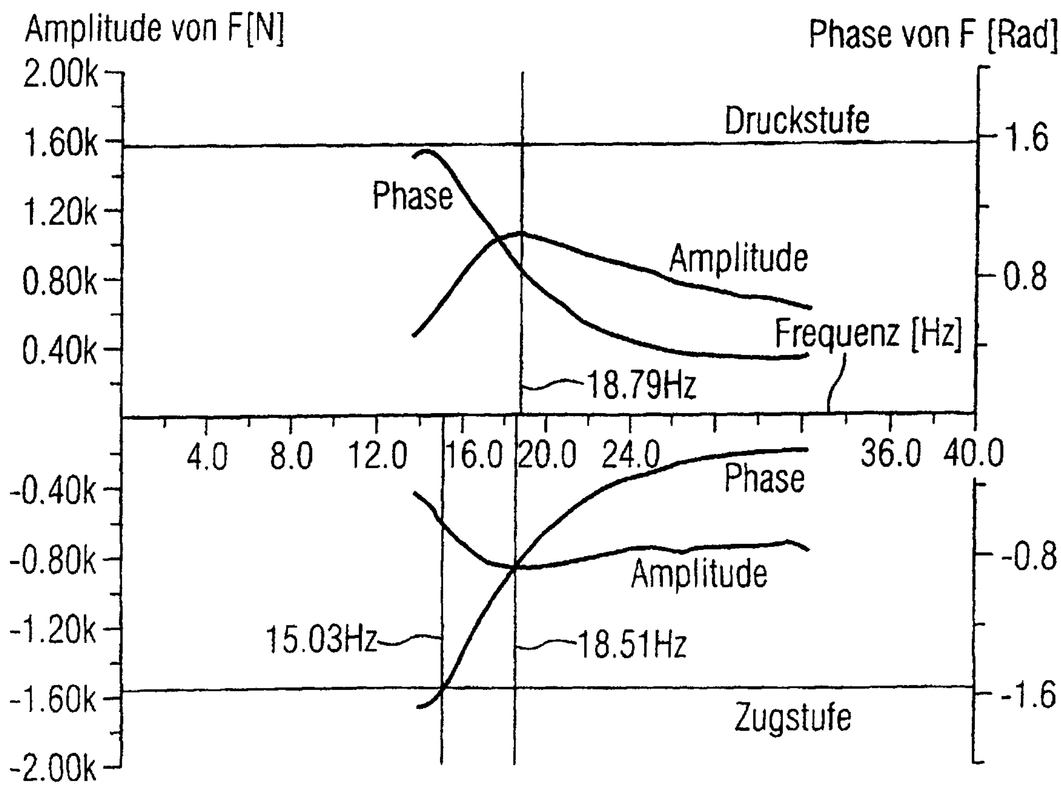

Amplitude von F[N]
Phase von F [Rad]
2.00k
1.60k
1.20k
0.80k
0.40k
-0.40k
-0.80k
-1.20k
-1.60k
-2.00k
1.6
0.8
-0.8
-1.6
Druckstufe
Phase
Amplitude
Frequenz [Hz]
18.79Hz
4.0
8.0
12.0
16.0
20.0
24.0
36.0
40.0
Phase
Amplitude
15.03Hz
18.51Hz
Zugstufe

FIG 8

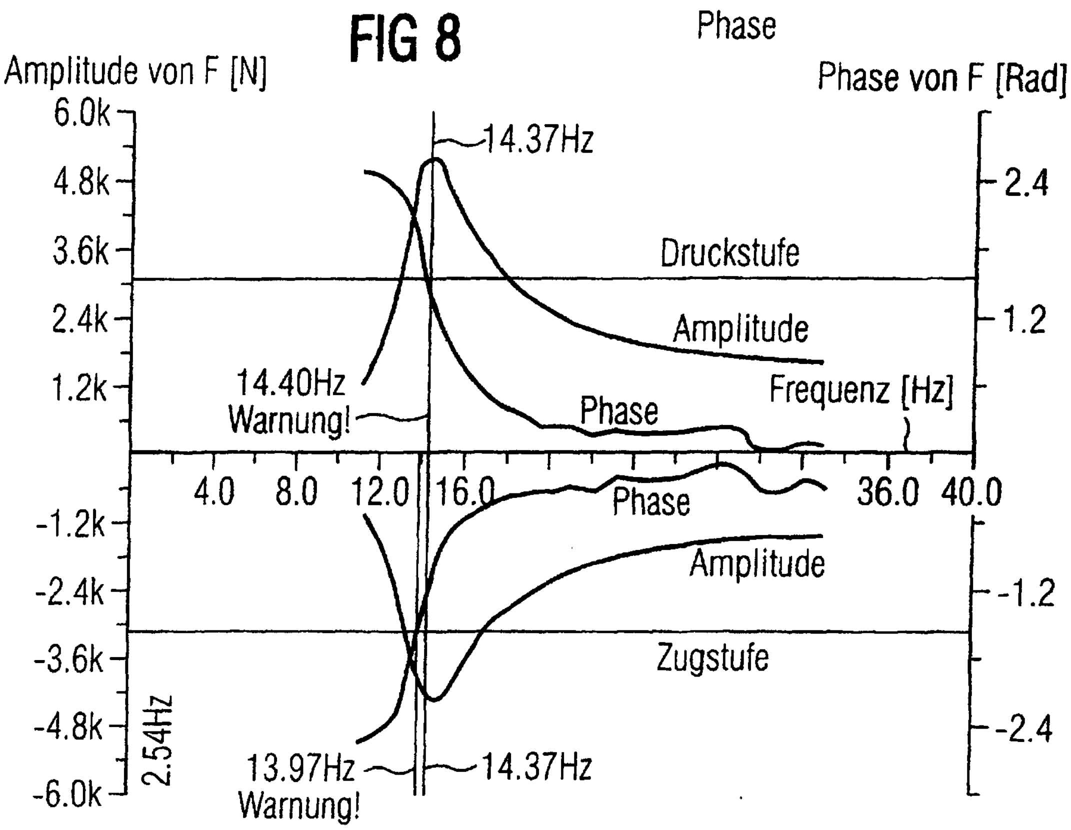
Phase
Amplitude von F [N]
Phase von F [Rad]
6.0k
4.8k
3.6k
2.4k
1.2k
-1.2k
-2.4k
-3.6k
-4.8k
-6.0k
14.37Hz
2.4
Druckstufe
1.2
Amplitude
14.40Hz
Warnung!
Phase
Frequenz [Hz]
4.0
8.0
12.0
16.0
Phase
36.0
40.0
Amplitude
-1.2
Zugstufe
-2.4
2.54Hz
13.97Hz
Warnung!
14.37Hz

FIG9

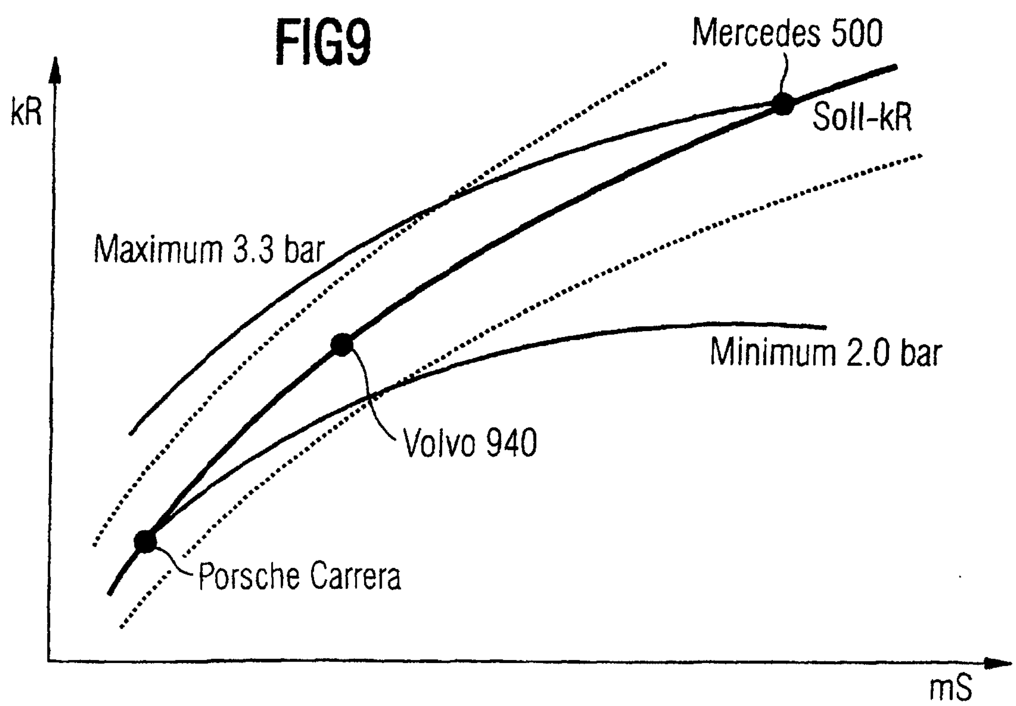
Mercedes 500
kR
Soll-kR
Maximum 3.3 bar
Minimum 2.0 bar
Volvo 940
Porsche Carrera
mS

FIG10

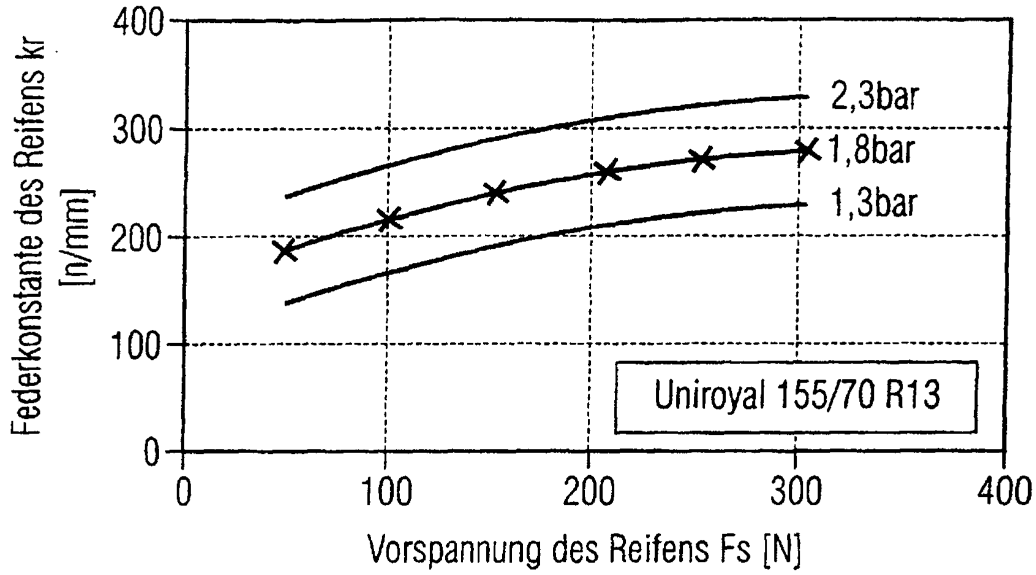
Federkonstante des Reifens kr [n/mm]
400
300
200
100
0
0
100
200
300
400
2,3bar
1,8bar
1,3bar
Uniroyal 155/70 R13
Vorspannung des Reifens Fs [N]

FIG11

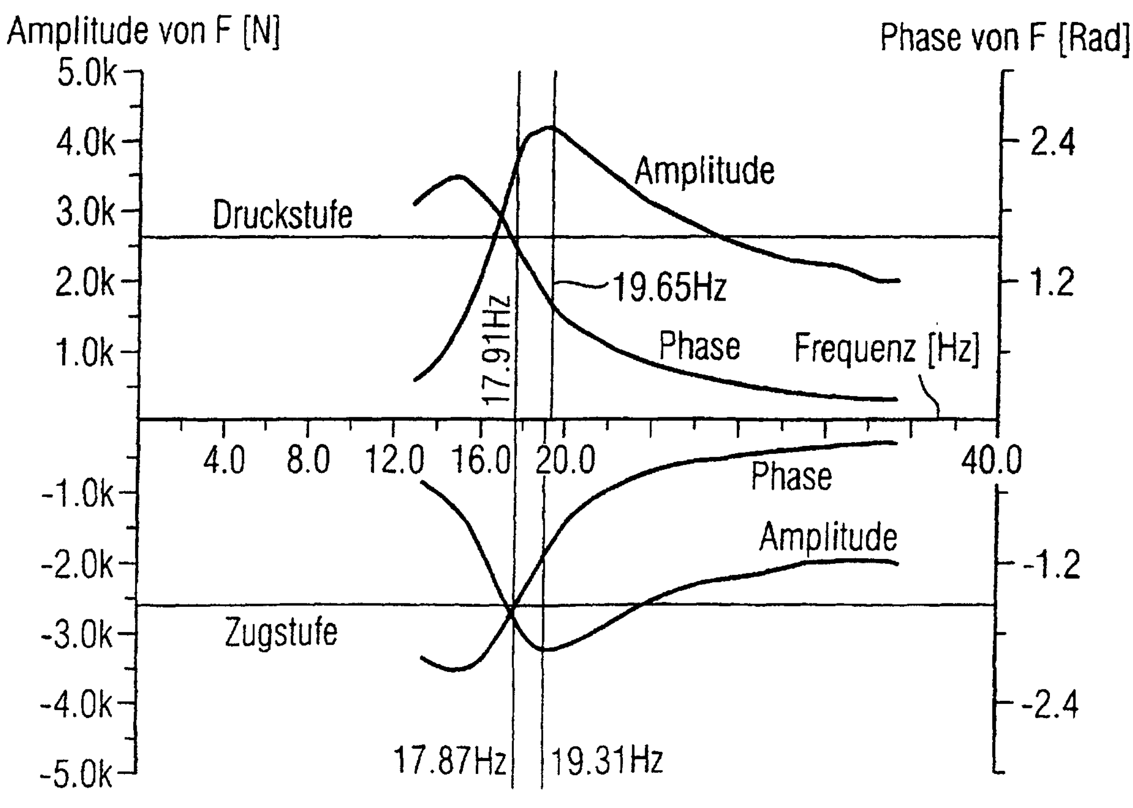
Amplitude von F [N]
Phase von F [Rad]
5.0k
4.0k
3.0k
2.0k
1.0k
-1.0k
-2.0k
-3.0k
-4.0k
-5.0k
2.4
1.2
-1.2
-2.4
Druckstufe
Amplitude
19.65Hz
17.91Hz
Phase
Frequenz [Hz]
4.0
8.0
12.0
16.0
20.0
40.0
Phase
Amplitude
Zugstufe
17.87Hz
19.31Hz

FIG12

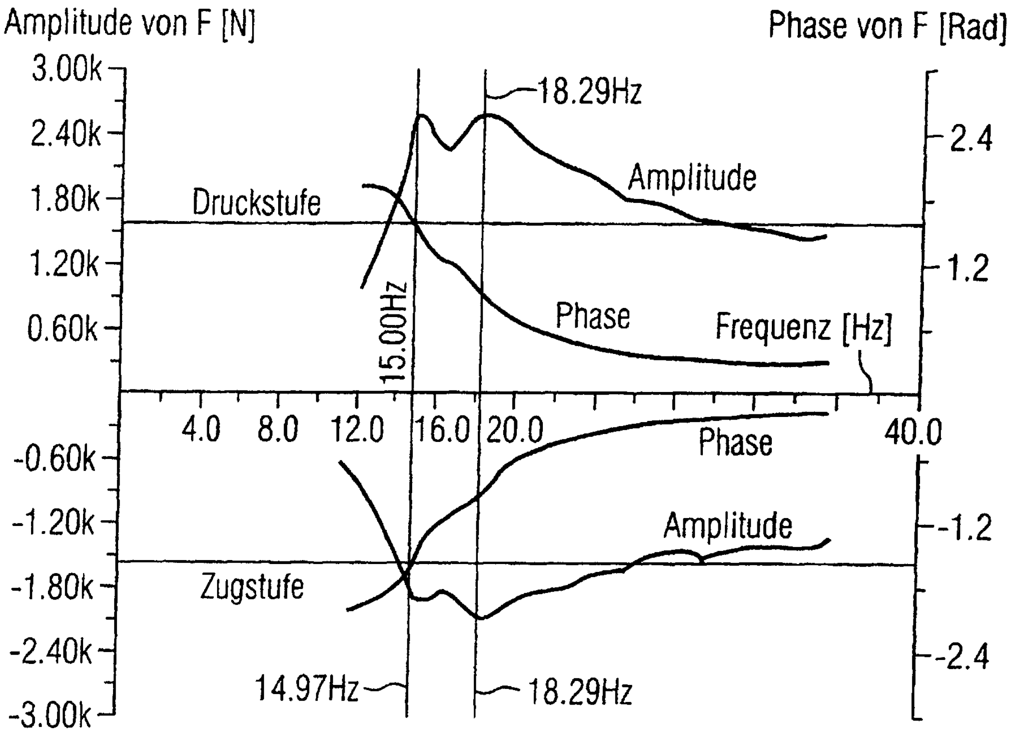
Amplitude von F [N]
Phase von F [Rad]
3.00k
2.40k
1.80k
1.20k
0.60k
-0.60k
-1.20k
-1.80k
-2.40k
-3.00k
2.4
1.2
-1.2
-2.4
18.29Hz
Amplitude
Druckstufe
Phase
Frequenz [Hz]
15.00Hz
4.0
8.0
12.0
16.0
20.0
40.0
Phase
Amplitude
Zugstufe
14.97Hz
18.29Hz

FIG13

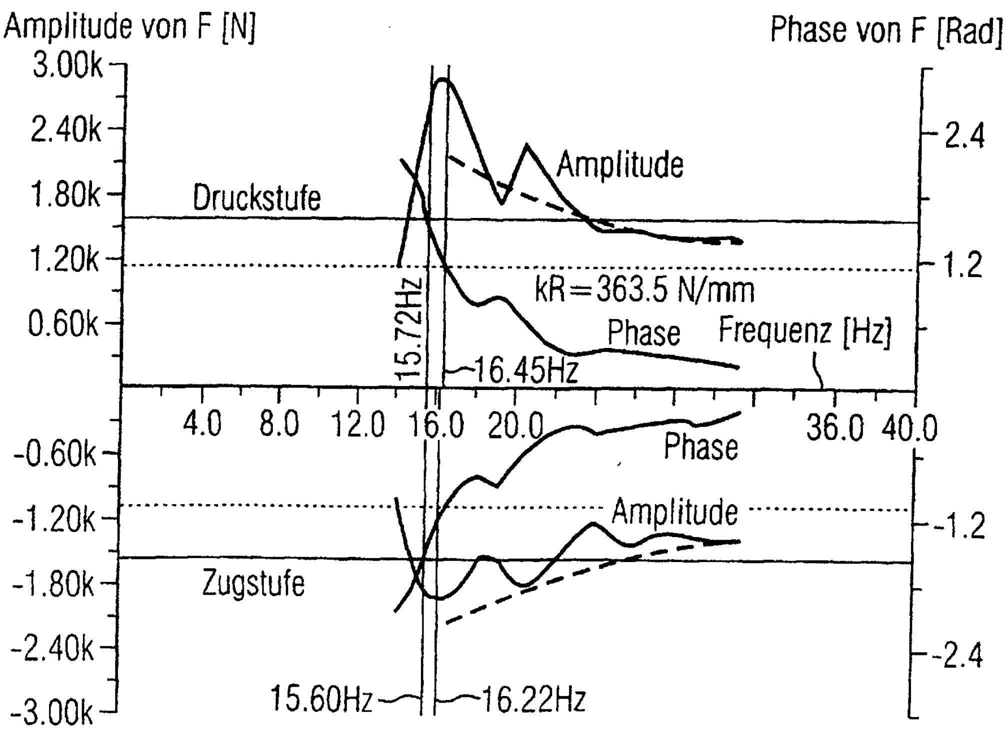
Amplitude von F [N]
Phase von F [Rad]
3.00k
2.40k
1.80k
1.20k
0.60k
-0.60k
-1.20k
-1.80k
-2.40k
-3.00k
2.4
1.2
-1.2
-2.4
Amplitude
Druckstufe
kR=363.5 N/mm
Phase
Frequenz [Hz]
15.72Hz
16.45Hz
4.0
8.0
12.0
16.0
20.0
36.0
40.0
Phase
Amplitude
Zugstufe
15.60Hz
16.22Hz

FIG 14

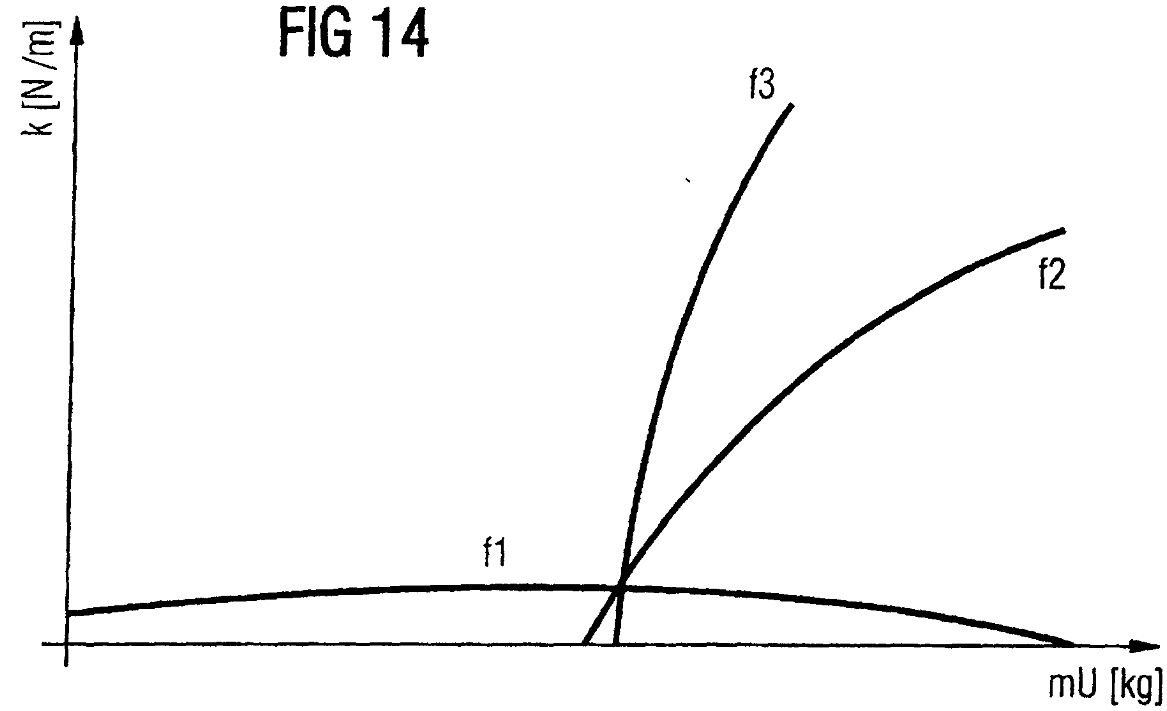


FIG 15

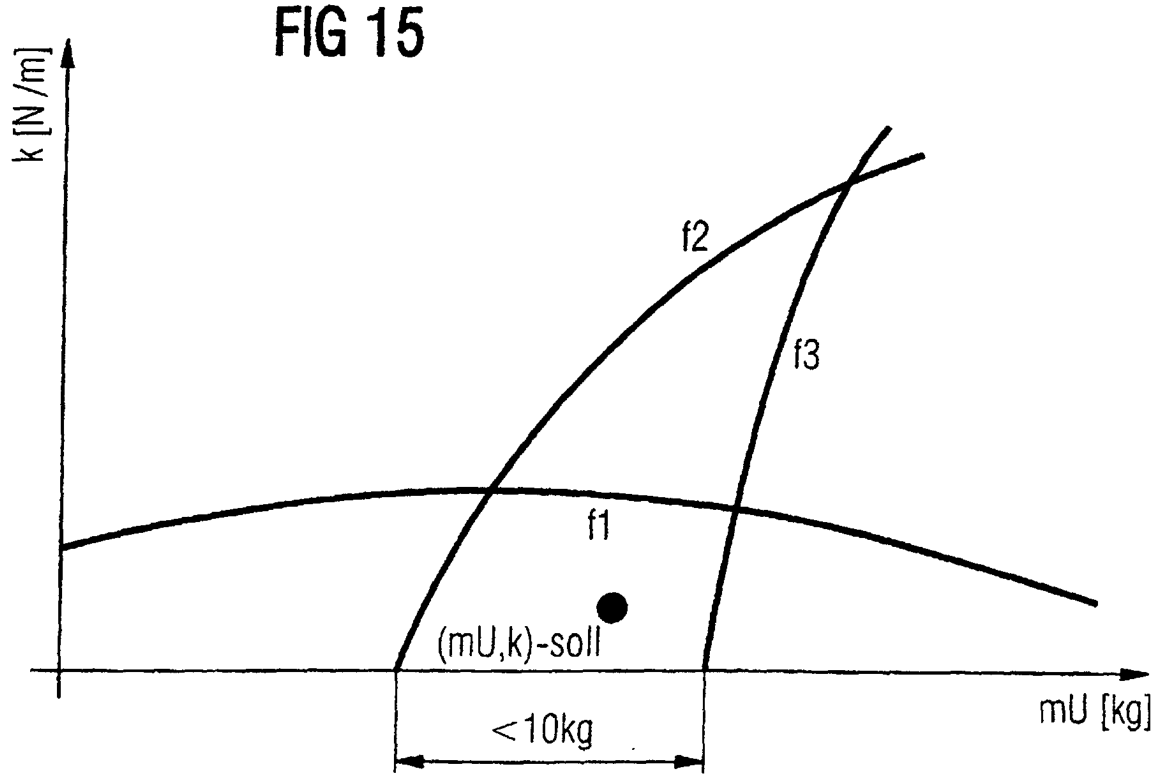

FIG16

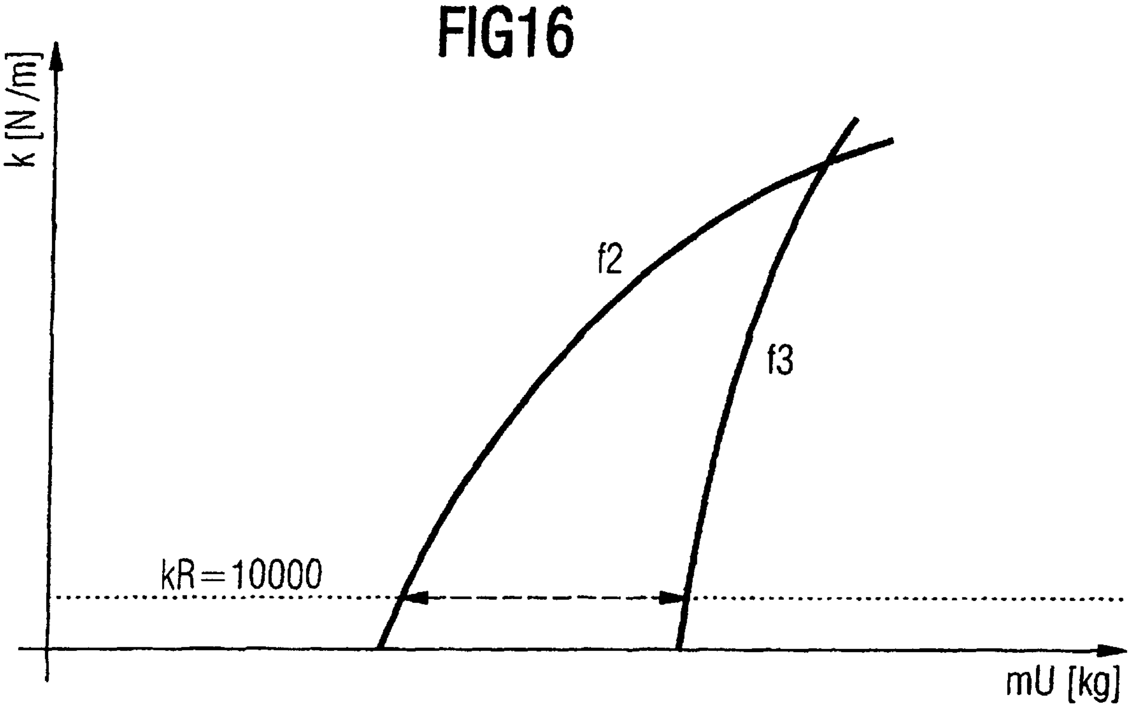
k [N/m]
f2
f3
kR=10000
mU [kg]

FIG17

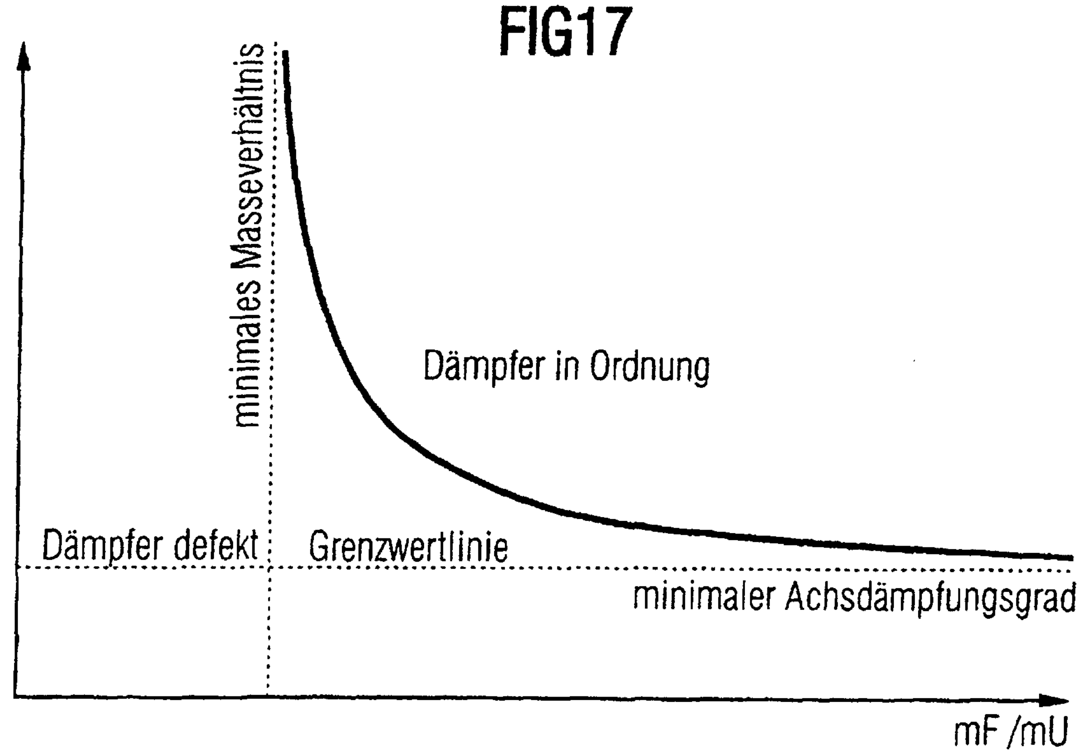
minimales Masseverhältnis
Dämpfer in Ordnung
Dämpfer defekt
Grenzwertlinie
minimaler Achsdämpfungsgrad
mF /mU

FIG 18

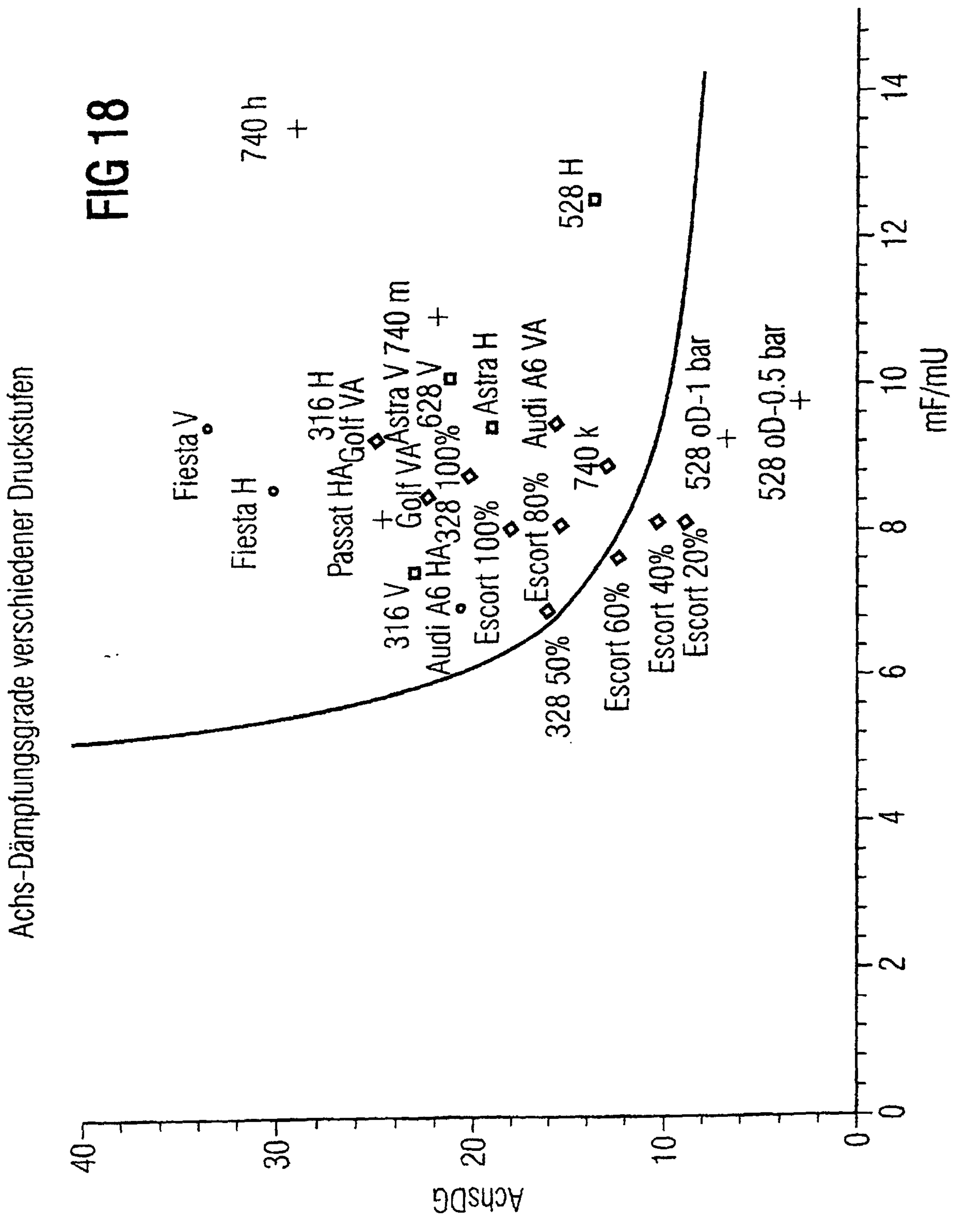
Achs-Dämpfungsgrade verschiedener Druckstufen
AchsDG
mF/mU
0
10
20
30
40
0
2
4
6
8
10
12
14
Fiesta V
Fiesta H
740 h
528 H
316 H
Golf VA
Passat HA
Astra V 740 m
Golf VA
628 V
328 100%
Astra H
Audi A6 VA
316 V
Audi A6 HA
Escort 100%
Escort 80%
740 k
328 50%
Escort 60%
Escort 40%
Escort 20%
528 oD-1 bar
528 oD-0.5 bar

FIG 19

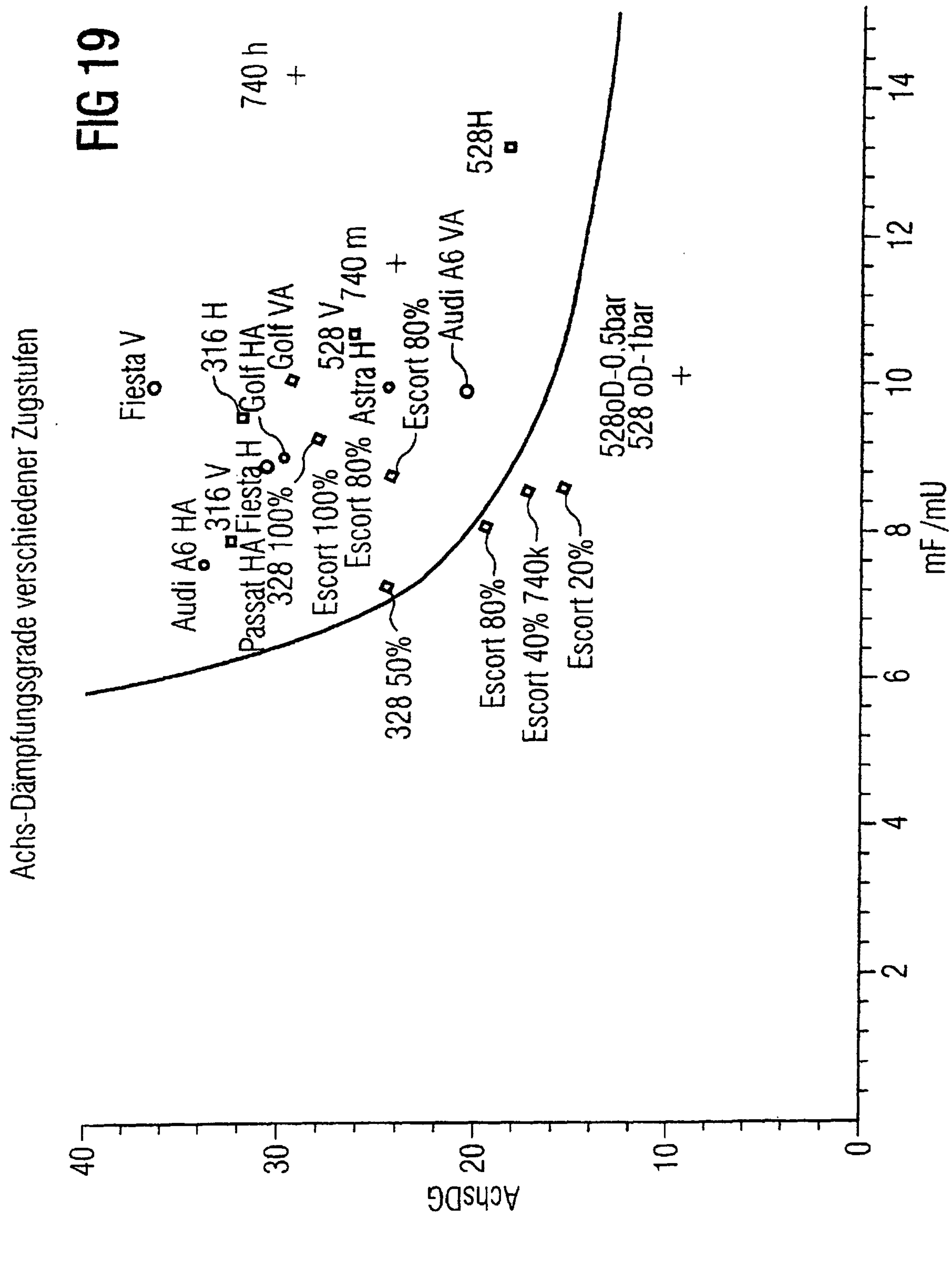
Achs-Dämpfungsgrade verschiedener Zugstufen
AchsDG
mF/mU
0
10
20
30
40
2
4
6
8
10
12
14
Fiesta V
Audi A6 HA
316 V
Passat HA
Fiesta H
328 100%
316 H
Golf HA
Golf VA
Escort 100%
Escort 80%
528 V
Astra H
740 m
Escort 80%
Audi A6 VA
740 h
528H
328 50%
Escort 80%
Escort 40%
740k
Escort 20%
528oD-0,5bar
528 oD-1bar

FIG 20

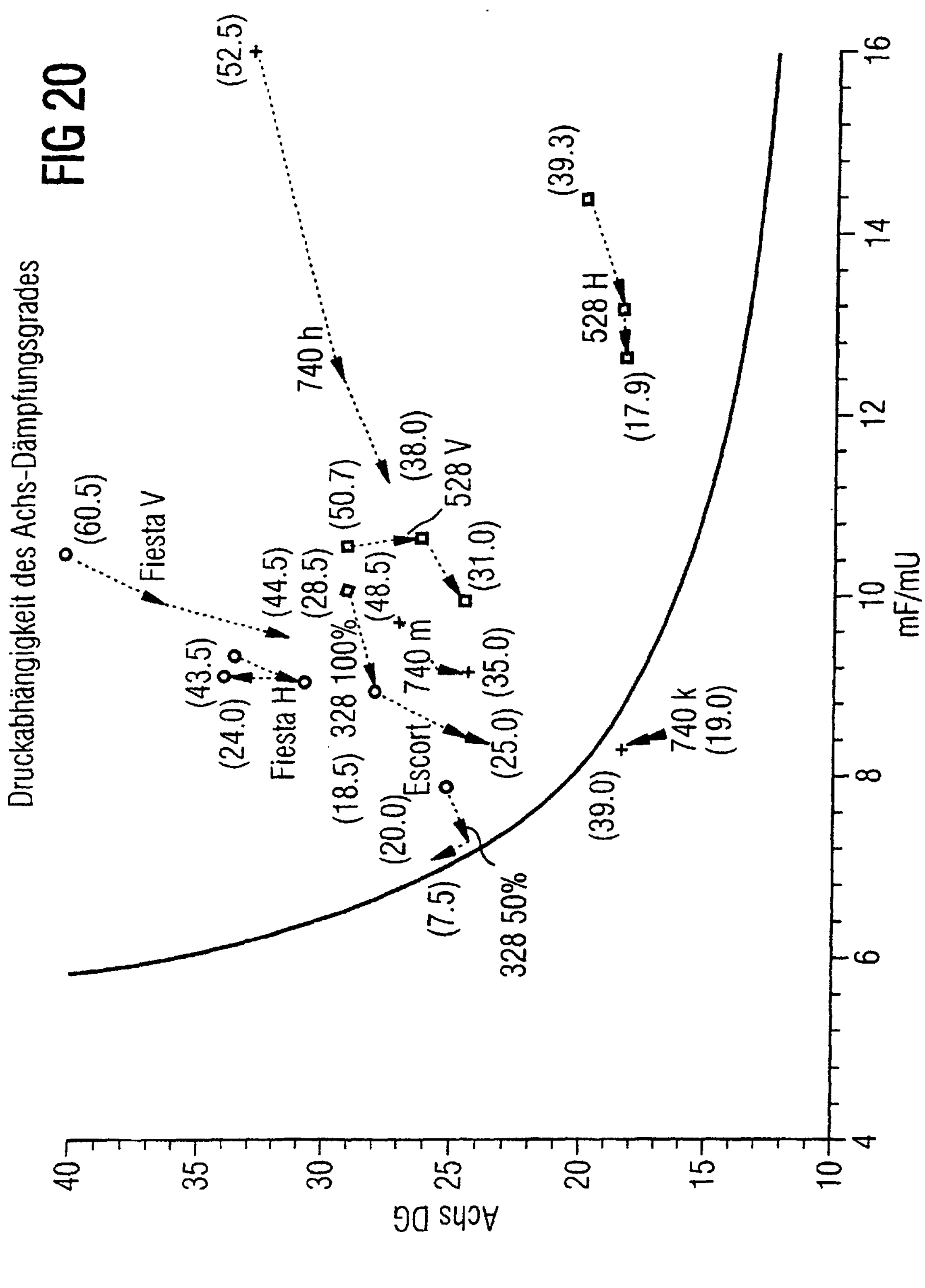
Druckabhängigkeit des Achs-Dämpfungsgrades
Achs DG
mF/mU
40
35
30
25
20
15
10
4
6
8
10
12
14
16
Fiesta V
(60.5)
(44.5)
Fiesta H
(43.5)
(24.0)
328 100%
(28.5)
(18.5)
Escort
(20.0)
(7.5)
328 50%
(25.0)
740 h
(52.5)
(38.0)
740 m
(48.5)
(35.0)
528 V
(50.7)
(31.0)
528 H
(39.3)
(17.9)
740 k
(39.0)
(19.0)

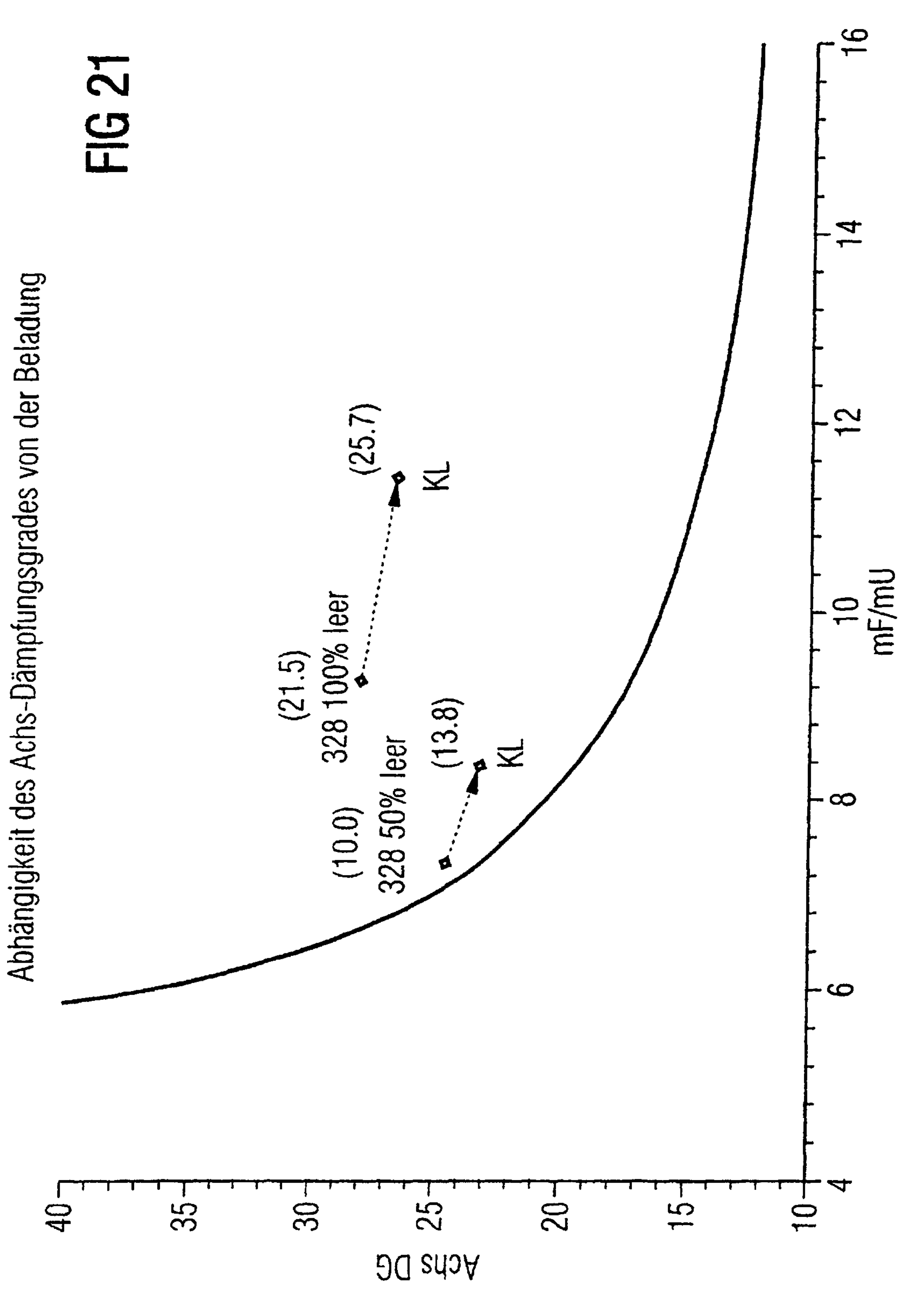
Abhängigkeit des Achs-Dämpfungsgrades von der Beladung
Achs DG
40
35
30
25
20
15
10
4
6
8
10
12
14
16
mF/mU
(21.5)
328 100% leer
(25.7)
KL
(10.0)
328 50% leer
(13.8)
KL

FIG 21

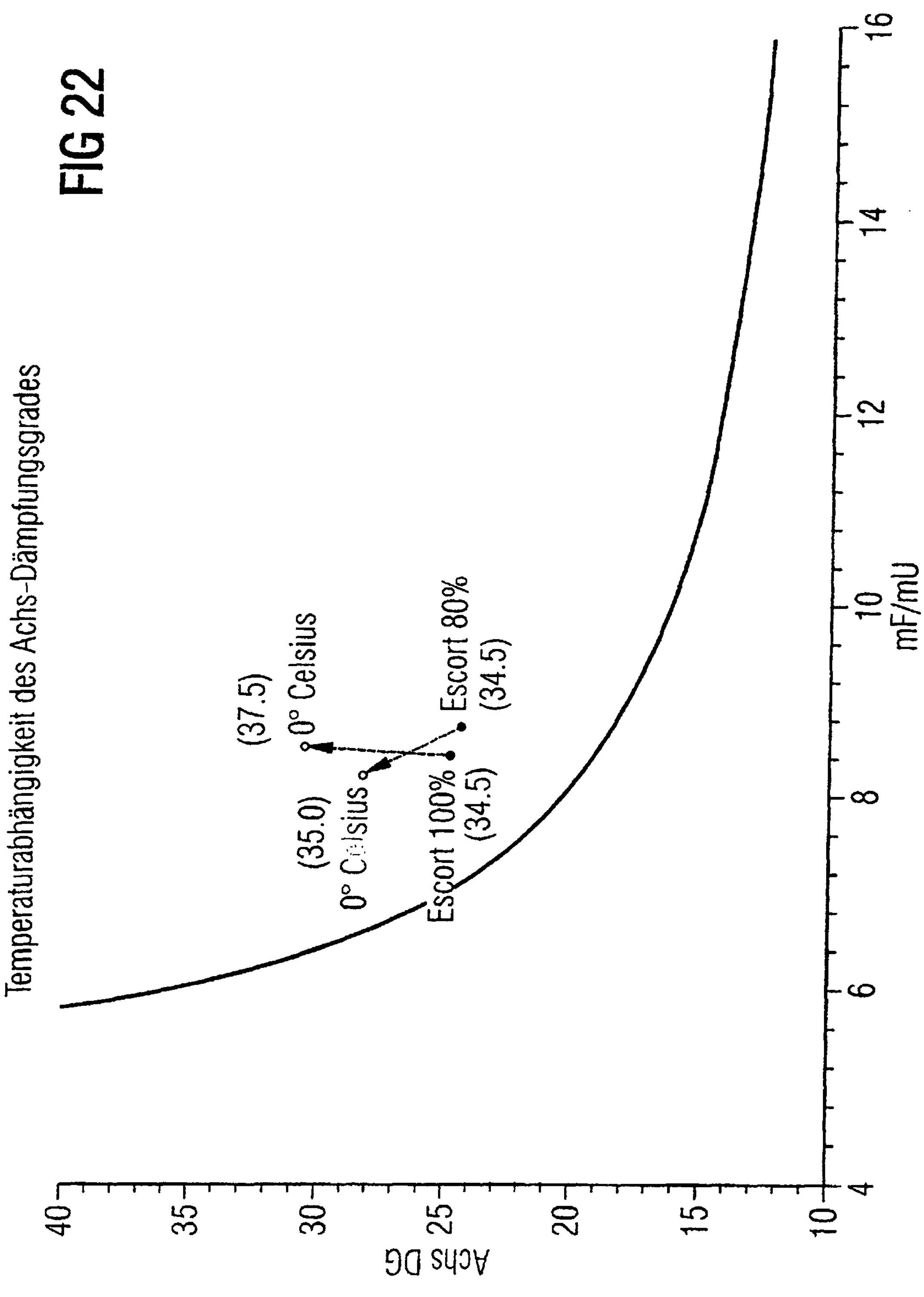
Temperaturabhängigkeit des Achs-Dämpfungsgrades
Achs DG
mF/mU
(37.5)
0° Celsius
(35.0)
0° Celsius
Escort 80%
(34.5)
Escort 100%
(34.5)
40
35
30
25
20
15
10
4
6
8
10
12
14
16

FIG 22

FIG 23

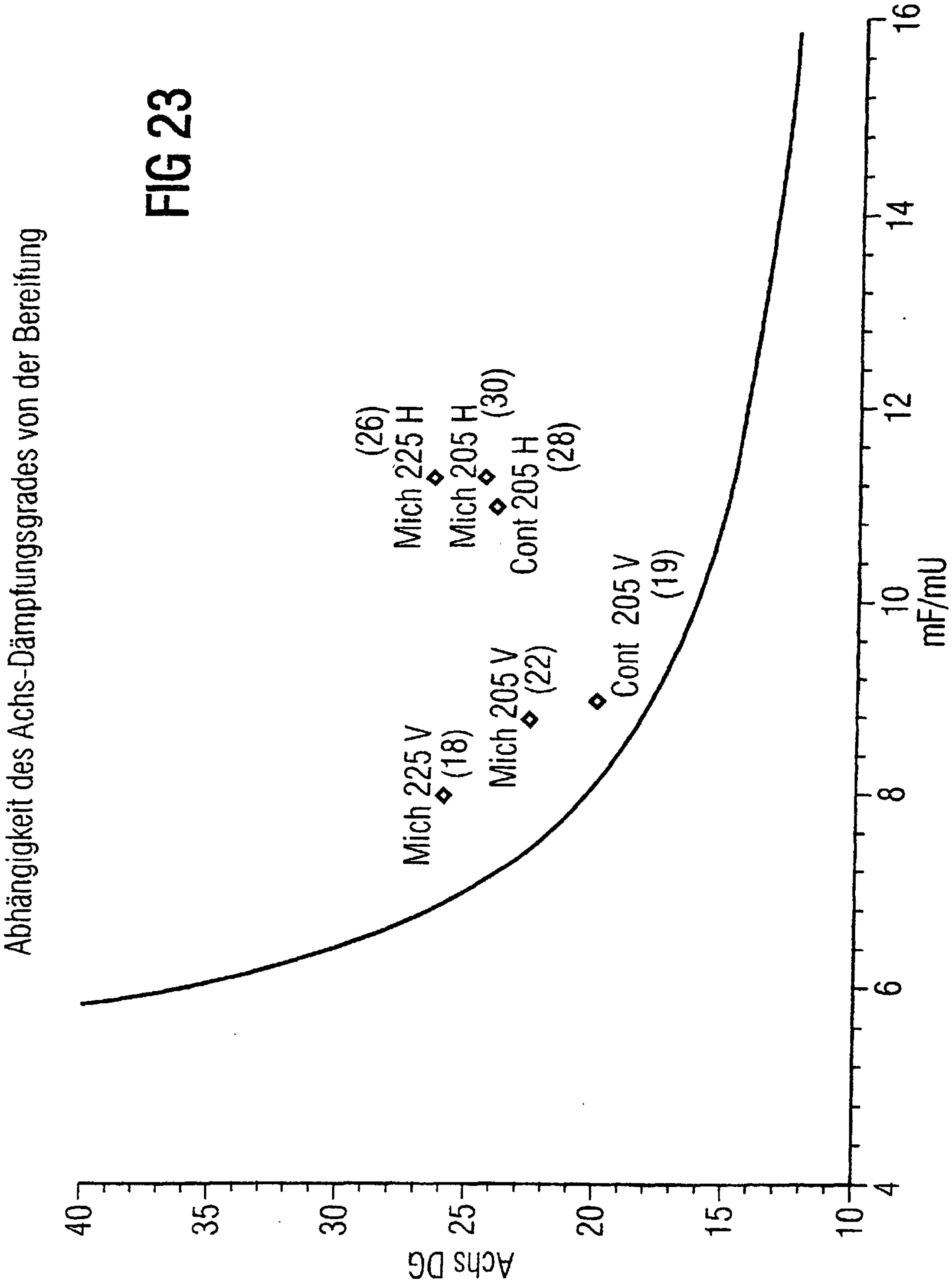

Abhängigkeit des Achs-Dämpfungsgrades von der Bereifung
Achs DG
40
35
30
25
20
15
10
4
6
8
10
12
14
16
mF/mU
Mich 225 V
(18)
Mich 205 V
(22)
Cont 205 V
(19)
(26)
Mich 225 H
Mich 205 H
(30)
Cont 205 H
(28)

FIG 24

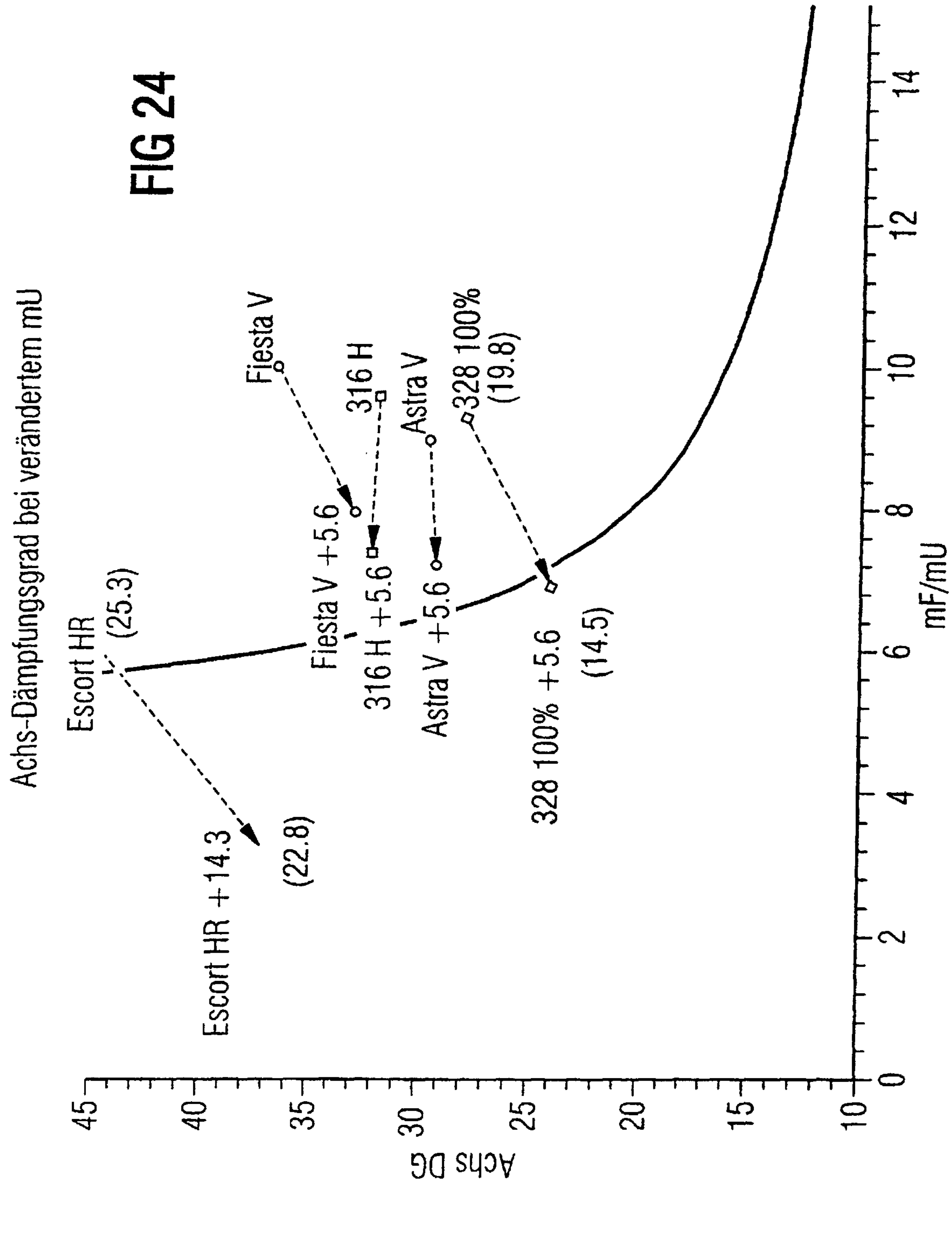
Achs-Dämpfungsgrad bei verändertem mU
Achs DG
mF/mU
45
40
35
30
25
20
15
10
0
2
4
6
8
10
12
14
Escort HR
(25.3)
Escort HR +14.3
(22.8)
Fiesta V
Fiesta V +5.6
316 H
316 H +5.6
Astra V
Astra V +5.6
328 100%
(19.8)
328 100% +5.6
(14.5)

FIG25

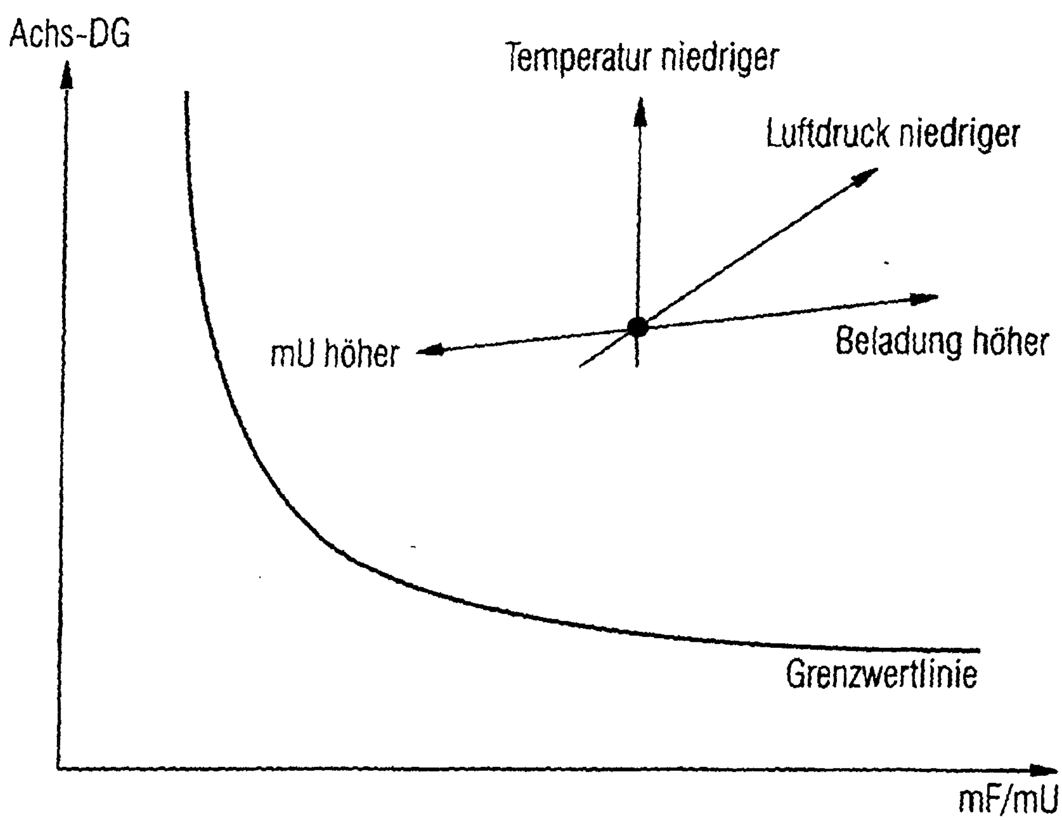
Achs-DG
Temperatur niedriger
Luftdruck niedriger
mU höher
Beladung höher
Grenzwertlinie
mF/mU